(19) Europäisches Patentamt
European Patent Office
Office européen des brevets

(11) **EP 4 694 134 A1**

(12) **EUROPEAN PATENT APPLICATION**
published in accordance with Art. 153(4) EPC

(43) Date of publication:
**11.02.2026 Bulletin 2026/07**

(21) Application number: **23929343.4**

(22) Date of filing: **30.03.2023**

(51) International Patent Classification (IPC):
*H04N 19/593* (2014.01)

(52) Cooperative Patent Classification (CPC):
**H04N 19/593**

(86) International application number:
**PCT/CN2023/085253**

(87) International publication number:
**WO 2024/197748 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventors:
• **ZHANG, Lai
Dongguan, Guangdong 523860 (CN)**
• **WANG, Fan
Dongguan, Guangdong 523860 (CN)**

(74) Representative: **Penza, Giancarlo et al
Bugnion S.p.A.
Viale Lancetti, 17
20158 Milano (IT)**

(54) **ENCODING/DECODING METHOD, CODE STREAM, ENCODER, DECODER, AND STORAGE MEDIUM**

(57) Disclosed in embodiments of the present application are an encoding/decoding method, a code stream, an encoder, a decoder, and a storage medium. The method comprises: constructing a first candidate matching block list of a current block on the basis of template matching; grouping the first candidate matching block list, determining at least two candidate matching block groups, and determining an index value of each candidate matching block group; an encoding end determining an index value of a first candidate matching block group corresponding to the current block, and writing the index value of the first candidate matching block group into a code stream; and a decoding end determining the first candidate matching block group according to the index value, performing fusion according to the first candidate matching block group, and determining a prediction block of the current block. Thus, a candidate matching block list is constructed and grouped, a first candidate matching block group is indicated according to an index value, and fusion prediction is performed by using the first candidate matching block group, so that the prediction accuracy can be improved, the code rate is reduced, the encoding and decoding efficiency can be improved, and the coding and decoding performance is improved.

FIG. 10

**Description**

TECHNICAL FIELD

The present application relates to the field of video encoding and decoding technologies, and particularly relates to an encoding method, a decoding method, a bitstream, an encoder, a decoder, and a storage medium.

BACKGROUND

In Intra Template Matching Prediction (Intra TMP) technologies, a template of a coding block is used to search for a matching template with the lowest cost in a search range predefined in the current image according to a preset cost function, and a reconstructed block corresponding to the matching template is used as a prediction block for the current coding block.

However, in an actual coding process, related technologies usually directly use reconstructed pixels of the matching block as prediction pixels of the current coding block, but due to incomplete consideration, there will be large deviations in some scenarios, resulting in low prediction accuracy.

SUMMARY

The present application provides an encoding method, a decoding method, a bitstream, an encoder, a decoder, and a storage medium, which may improve prediction accuracy and further improve encoding/decoding performance.

The technical solution of the present application may be realized as follows:

According to a first aspect, an embodiment of the present application provides a decoding method applied to a decoder, the method includes the following operations:

A first list of candidate matching blocks for the current block is constructed based on template matching.

The first list of candidate matching blocks is grouped, to determine at least two candidate matching block subgroups, and an index value of each candidate matching block subgroup is determined

An index value of the first candidate matching block subgroup corresponding to the current block is determined.

The first candidate matching block subgroup is determined from the at least two candidate matching block subgroups according to the index value of the first candidate matching block subgroup.

At least one matching block in the first candidate matching block subgroup is fused to determine a prediction block for the current block.

In a second aspect, an embodiment of the present application provides an encoding method, which is applied to an encoder, and the method includes the following operation:

A first list of candidate matching blocks for the current block is constructed based on template matching.

The first list of candidate matching blocks is grouped, to determine at least two candidate matching block subgroups, and an index value of each candidate matching block subgroup is determined.

An index value of the first candidate matching block subgroup corresponding to the current block is determined from the at least two candidate matching block subgroups.

The index value of the first candidate matching block subgroup is encoded and the obtained encoded bits are signaled into a bitstream.

According to a third aspect, an embodiment of the present application provides a bitstream generated by performing bit encoding according to information to be encoded. The information to be encoded includes at least one of the following:

A syntax element for indicating a prediction mode for a current block, a syntax element for indicating an index value of an optimal matching block corresponding to a current block, a syntax element for indicating an index value of an optimal matching block corresponding to a current block, a syntax element for indicating a fusion prediction mode type for the current block, a syntax element for indicating whether to determine an index value of a first candidate matching block subgroup of a current block, a syntax element for indicating a number of fusion matching blocks in candidate matching block subgroup, a value N of a number of fusion matching blocks, a length of a first list of candidate matching blocks, and a length of a second list of candidate matching blocks.

According to a fourth aspect, an embodiment of the present application provides an encoder which includes a first determination unit, a first grouping unit, and a first prediction unit.

The first determination unit is configured to construct a first list of candidate matching blocks for a current block based on template matching.

The first grouping unit is configured to group the first list of candidate matching blocks, to determine at least two candidate matching block subgroups, and determine an index value of each candidate matching block subgroup.

The first determination unit is further configured to determine an index value of a first candidate matching block subgroup corresponding to the current block.

The first determination unit is further configured to determine the first candidate matching block subgroup from the at least two candidate matching block subgroups according to the index value of the first candidate matching block subgroup.

The first prediction unit is configured to fuse at least one matching block in the first candidate matching block subgroup to determine a prediction block for the current block.

According to a fifth aspect, an embodiment of the present application provides an encoder which includes a first memory and a first processor.

The first memory is used for storing a computer program executable on the first processor.

The first processor is configured to execute the computer program to perform the method of the second aspect.

According to a sixth aspect, an embodiment of the present application provides a decoder, which includes a second determination unit, a second grouping unit, and a second prediction unit.

The second determination unit is configured to construct a first list of candidate matching blocks for a current block based on template matching.

The second grouping unit is configured to group the first list of candidate matching blocks, to determine at least two candidate matching block subgroups, and determine an index value of each candidate matching block subgroup.

The second determination unit is further configured to determine an index value of a first candidate matching block subgroup corresponding to the current block;

The second determination unit is further configured to determine the first candidate matching block subgroup from the at least two candidate matching block subgroups according to the index value of the first candidate matching block subgroup; and

The second prediction unit is configured to fuse at least one matching block in the first candidate matching block subgroup to determine a prediction block for the current block.

In a seventh aspect, an embodiment of the present application provides a decoder which includes a second memory and a second processor.

The second memory is used for storing a computer program executable on the second processor.

The second processor is configured to execute the computer program to perform the method of the first aspect.

According to an eighth aspect, an embodiment of the present application provides a computer-readable storage medium storing thereon a computer program that, when executed, implements a method according to the first aspect or implements a method according to the second aspect.

Embodiments of the present application provide an encoding method, a decoding method, a bitstream, an encoder, a decoder, and a storage medium. A first list of candidate matching blocks for a current block is constructed based on template matching. The first list of candidate matching blocks is grouped, to determine at least two candidate matching block subgroups, and an index value of each candidate matching block subgroup is determined. At an encoding side, an index value of the first candidate matching block subgroup corresponding to the current block is determined; and the index value of the first candidate matching block subgroup is signaled into a bitstream. At a decoding side, the first candidate matching block subgroup is determined according to the index value and fusion is performed according to the first candidate matching block subgroup to determine a prediction block for the current block. By constructing a list of candidate matching blocks and grouping the list of candidate matching blocks, indicating the first candidate matching block subgroup according to the index value, and performing fusion prediction by using the first candidate matching block subgroup, the prediction accuracy may be improved, the code rate may be saved, and the encoding/decoding efficiency may be improved, thereby improving the encoding/decoding performance. Further, by combining of the IntraTMP fusion prediction mode and the IntraTMP multi-candidate prediction mode, the coding efficiency is improved. Further, by limiting the index value range of the candidate matching block subgroup, the index value coding bin is saved, and the coding efficiency is improved. For example, by reordering the candidate matching block subgroups, the index value is controlled to a smaller index range.

BRIEF DESCRIPTION OF THE DRAWINGS

Fig. 1 is a schematic diagram of a prediction process for an Intra TMP technology.
FIG. 2 is a schematic diagram of a matching block for an Intra TMP technology.
FIG. 3 is a schematic diagram of template types for an Intra TMP technology.
FIG. 4A is a schematic diagram of a coarse search process for template matching in an Intra TMP technique.
FIG. 4B is a schematic diagram of a detailed search process for template matching in an Intra TMP technology.

FIG. 5 is a schematic diagram of a weighted fusion of an IntraTMP fusion prediction technology.

FIG. 6A is a schematic diagram of a filter shape.

FIG. 6B is a schematic diagram of a method of deriving a filter coefficient.

FIG. 7 is a schematic diagram of a vertical and horizontal partition method for an encoding block.

FIG. 8A is a schematic block diagram of an encoder according to an embodiment of the present application.

FIG. 8B is a schematic block diagram of a decoder according to an embodiment of the present application.

FIG. 9 is a schematic diagram of a network architecture of a codec system according to an embodiment of the present application.

FIG. 10 is a schematic flowchart of a decoding method according to an embodiment of the present application.

FIG. 11 is a schematic flowchart of a reordering method according to an embodiment of the present application.

FIG. 12 is a schematic diagram of a template prediction method according to an embodiment of the present application.

FIG. 13 is a schematic diagram of another template prediction method according to an embodiment of the present application.

FIG. 14 is a schematic flowchart of a fusion method according to an embodiment of the present application.

FIG. 15 is a schematic flowchart of a method of determining a fusion matching block according to an embodiment of the present application.

FIG. 16 is a schematic flowchart of an encoding method according to an embodiment of the present application.

FIG. 17 is a schematic structural diagram of an encoder according to an embodiment of the present application.

FIG. 18 is a schematic diagram of a specific hardware structure of an encoder according to an embodiment of the present application.

FIG. 19 is a schematic structural diagram of a decoder according to an embodiment of the present application.

FIG. 20 is a schematic diagram of a specific hardware structure of a decoder according to an embodiment of the present application.

FIG. 21 is a schematic diagram of a composition and structure of a codec system according to an embodiment of the present application.

## DETAILED DESCRIPTION

In order to provide a more detailed understanding of features and technical contents of embodiments of the present application, implementations of the embodiments of the present application will be described in detail below with reference to the accompanying drawings, which are for reference and illustration only, and are not intended to limit the embodiments of the present application.

Unless otherwise defined, all technical and scientific terms used herein have the same meaning as commonly understood by those skilled in the art belonging to the present application. The terms used herein is for the purpose of describing embodiments of the present application only and is not intended to limit the present application.

In the following description, it refers to "some embodiments", which describes a subset of all possible embodiments, but it is understood that "some embodiments" may be a same subset or different subsets of all possible embodiments, and may be combined with each other without conflict. It should also be pointed out that the terms "first\second\third" involved in the embodiments of the present application are only used to distinguish similar objects, and do not represent a specific ordering for the objects. It is understood that "first\second\third" may be interchanged with a specific order or a sequential order where allowed, so that the embodiments of the present application described herein may be implemented in an order other than that illustrated or described herein.

Before further describing the embodiments of the present application in detail, phrases and terms related to the embodiments of the present application will be described first, and the phrases and terms related to the embodiments of the present application are applicable to the following explanations:

Coding block (CB);
Block matching (BM);
Coding Unit (CU);
Block Vector (BV);
Sum of Absolute Difference (SAD);
Sum of Absolute Transformed Difference (SATD);
Mean Square Error (MSE);
Sum of Squared Differences (SSD);
Mean Absolute Deviation (MAD);
Mean Square Differences (MSD);
Normalized Correlation Coefficient (NCC);

H.266/Versatile Video Coding (VVC);
VVC Test Model (VTM);
Intra Template Matching Prediction (Intra TMP);
Enhanced Compression Model (ECM).

It can be understood that in a video picture, a first color component, a second color component, and a third color component are generally employed to characterize a coding block. The three color components are one luminance component, one blue chrominance component, and one red chrominance component, respectively. Specifically, the luminance component is usually represented by the symbol Y, the blue chrominance component is usually represented by the symbol Cb or U, and the red chrominance component is usually represented by the symbol Cr or V. In this way, the video picture may be represented in the YCbCr format or in the YUV format.

1) Intra TMP technology

The Intra TMP technology is a special intra prediction technology, referred to as IntraTMP technology. It is a special intra prediction coding tool, which is mainly used in screen content coding. The IntraTMP is mainly implemented by the following procedures: part of the reconstructed pixels adjacent to the current coding block is selected as a template, the most similar template is searched for in a given reconstructed region of the current frame, and a reconstructed block corresponding to the most similar template is used as a matching block which is used as a prediction block for the current coding block. The template of the coding block usually selected from a reconstructed region adjacent to the current coding block.

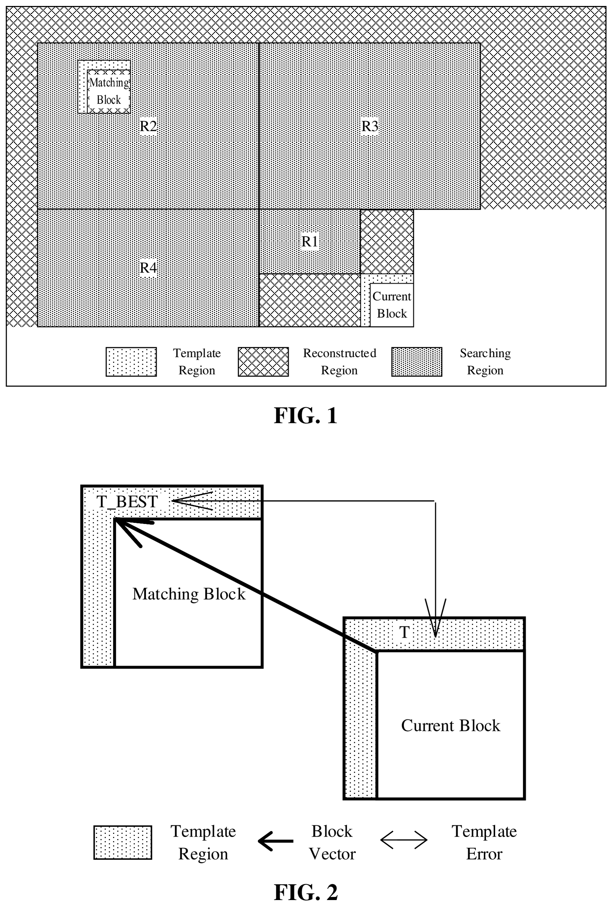

Exemplarily, taking an adjacent reconstructed region of a current block as an example, as shown in FIG. 1, a region filled with a grid represents a reconstructed region. In the reconstructed region, R1, R2, R3, and R4 are regions to be searched. R1 to R4 are sequentially searched to find a matching block. An adjacent region of the current block is a first template (T). An adjacent region of a matching block (which may also be referred to as a "reference block") is a second template (i.e., a "reference template" or referred to as a "matching template", T_BEST). As shown in FIG. 2, both the encoder and the decoder search in the predefined search range in the current image through the template (T) of the coding block, determine the matching template (T_BEST) with the smallest template error value, and then use the reconstructed block (Ref Block) corresponding to the matching template as the prediction block for the current coding block (Cur Block). The similarity between templates is represented by the size of the template error value. The smaller the template error value, the higher the similarity. In the embodiments of the present application, the template error value may be a Sum of Absolute Difference (SAD), a Sum of Absolute Transformed Difference (SATD), a Mean Square Error (MSE), a Sum of Squared Differences (SSD), a Mean Absolute Deviation (MAD), a Mean Square Differences (MSD), a Normalized Correlation Coefficient (NCC), and the like, which is not specifically limited herein.

Exemplarily, taking the SAD as an example, the template error values at this time are as follows:

$$\mathrm{SAD}(T_i) = \sum_{m=0}^{M-1} \left| T_{i,m} - T_m \right|, m = 0, 1, \ldots, M-1 \qquad (1)$$

Where $T_i$ is a template in the search process and M represents the number of pixels in the template.

It is noted that the Intra TMP technique uses adjacent reconstructed pixels of the current block as a template, to search for a matching template in a predefined search area. Here the adjacent reconstructed pixels may be top reference pixels, top-left reference pixels, top-right reference pixels, left reference pixels, lower-left reference pixels, and the like of the current block. Therefore, according to whether the adjacent reconstructed pixels are available, template types may be classified and corresponding template types may be determined.

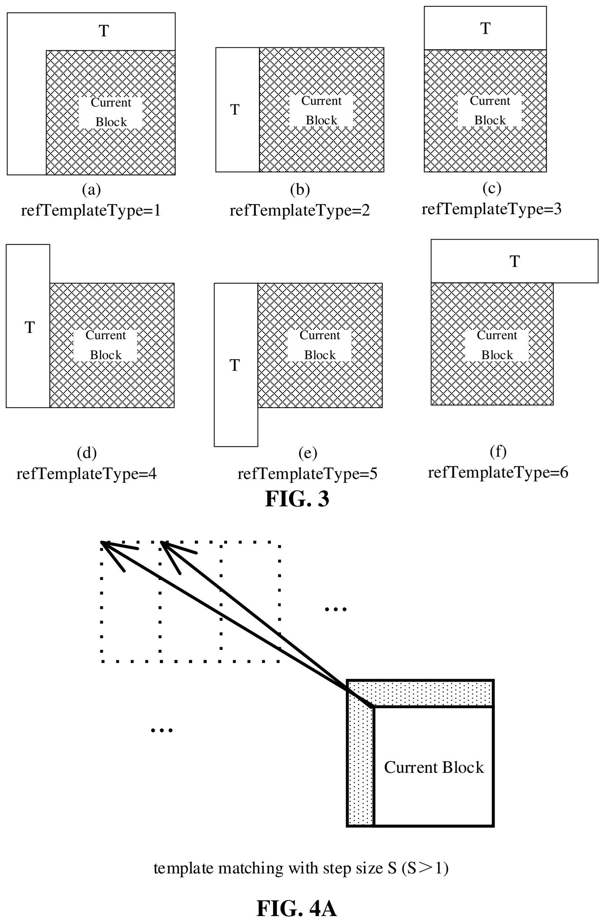

It should also be noted that the template type may be represented by refTemplateType. FIG. 3 shows a schematic diagram of template types for the Intra TMP technology. As shown in FIG. 3, a block filled with the grid is a current block, and an adjacent area of the current block is a template T. Six template types are shown here.

Exemplarily, the six template types are as follows:

When the top-left reference pixels, the top reference pixels, and the left reference pixels are all available, a value of refTemplateType is 1, and the template shape is shown in (a) of FIG. 3;
When only the left reference pixels are available, the value of refTemplateType is 2, and the template shape is shown in (b) in Fig. 3;
When only the top reference pixels are available, the value of refTemplateType is 3, and the template shape is shown in (c) of Fig. 3;
When only the left reference pixels and the top-left reference pixels are available, the value of refTemplateType is 4, and the template shape is shown in (d) of Fig. 3;

When only the left reference pixels and the lower-left reference pixels are available, the value of refTemplateType is 5, and the template shape is shown in (e) in Fig. 3;

When only the top reference pixels and the top-right reference pixels are available, the value of refTemplateType is 6, and the template shape is shown in (f) in Fig. 3.

In the Intra TMP technology, the codec indicates whether the current coding block is encoded in the Intra TMP mode by a flag bit intra_tmp_flag. If the current coding block is encoded in the Intra TMP mode, the same template matching process is performed at the decoding side to obtain the same prediction block at the decoding side, and there is no need to additionally encode information of a block vector from the current coding block to the matching block. An example of the Intra TMP technology is given below.

2) IntraTMP adaptation technology for camera-captured content

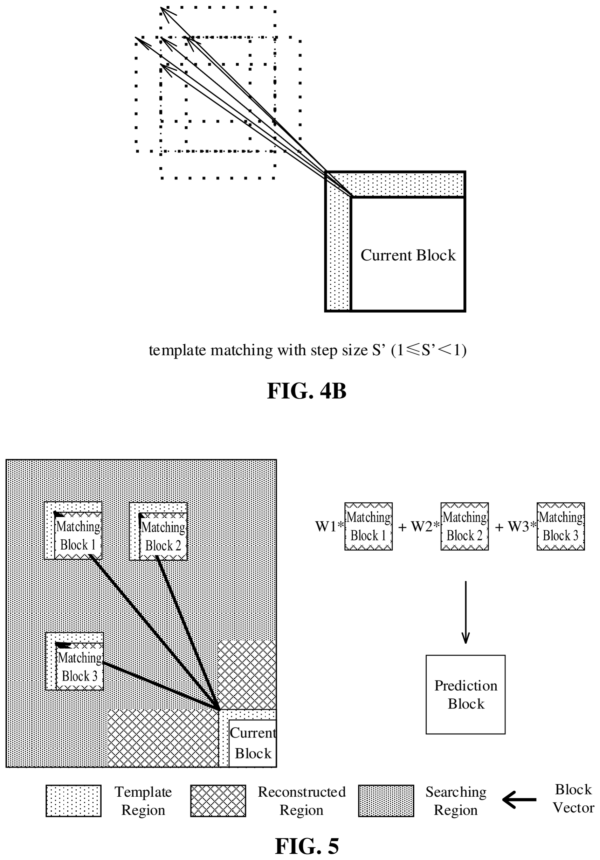

Based on the original IntraTMP technology, IntraTMP adaptation for camera-captured content technology proposes to perform template matching with a step size S (i.e. every S points in the horizontal or vertical directions, S > 1) (as shown in Figure 4A). For example, in the search area, instead of finding matching blocks pixel by pixel according to raster scan, searching is performed in the horizontal or vertical directions of the search area every several pixels. For example, if a block vector for which the template matching is currently performed is (X0, Y0), the next block vector for which the template matching is performed should be (X0 + S, Y0), and the ordinate of the block vector for which the template matching moving down is performed should be Y0+S. After the template matching is completed, an optimal matching block is refined within a certain range (as shown in Fig. 4B, template matching is performed with a smaller step size S') to optimize the matching result. This technology can effectively reduce the complexity of IntraTMP mode while maintaining good coding efficiency.

3) IntraTMP multi-candidate technology

In the IntraTMP multi-candidate technology, N candidate matching blocks are obtained from a reference region through a template matching process, or a list of candidate blocks with length N is constructed, and the candidate matching blocks in the list may be sorted according to the template error values between the candidate matching blocks and the current block. A candidate block is selected from the list through an index as a final prediction block. For a coding block using the IntraTMP multi-candidate technique, after the decoded IntraTMP flag bit intra_tmp_flag is true, intra_tmp_idx is decoded continuously. The syntax element intra_tmp_idx may represent an index of the selected candidate block.

```
intra_tmp_flag
if(intra_tmp_flag)
{
  intra_tmp_idx
}
```

Exemplarily, a template matching process for constructing a list of candidate blocks is as follows:

In a first step, the first search is performed with a certain step size (for example, the horizontal step size and the vertical step size are both 4), to obtain N optimal matching blocks with a certain spacing (with the first N smallest template error value);

In a second step, a second search is performed on the neighboring regions of the N matching blocks obtained in the first step. These neighboring regions may be set as a plurality of non-overlapping regions according to the step size in the first step. M optimal matching blocks (which may contain the matching blocks obtained in the first step) are obtained from these regions.

The same construction process is used at the encoding side and the decoding side to obtain the same list of candidate blocks.

fixed-length encoding or variable-length encoding may be used for intra_tmp_idx, for example, truncated binary encoding may be used.

A variable length encoding method is:

The smaller the index (the smaller the intra_tmp_idx value), the smaller the template error value for the corresponding candidate block, and the greater the probability of being selected statistically. A shorter bin may be set for a smaller intra_tmp_idx. For example,

| intra_tmp_idx | Binary symbol | |
|---|---|---|
| 0 | 1 | |
| 1 | 0 | 1 |
| 2 | 0 | 0 |
| Bin index | 0 | 1 |

If the maximum value N of intra_tmp_idx is larger, a bin of the same length may be allocated to the larger intra_tmp_idx. For example, N is 15.

| intra_tmp_idx | Binary symbol | | | | |
|---|---|---|---|---|---|
| 0 | 1 | 1 | | | |
| 1 | 1 | 0 | 0 | | |
| 2 | 1 | 0 | 1 | | |
| 3~6 | 0 | x | x | x | |
| 7~14 | 0 | x | x | x | x |

In the above table, x may be obtained with truncated binary.

4) IntraTMP fusion prediction technology, also known as IntraTMP multi-matching block fusion technology

Through intra template matching, template error values between reconstructed blocks at different positions and the current coding block may be obtained. These reconstructed blocks may be represented by block vectors pointing from the current coding block to the reconstructed block. A list of candidate block vectors is constructed for recording block vectors with smaller template error values in the template matching process. One or more block vectors are selected from the list of candidate block vectors according to conditions such as block vector spacing, template error value, etc. Reconstructed blocks pointed by the block vectors are used as matching blocks for the current coding block. A weight value is determining for each matching block. Weighted fusion is performed on these matching blocks according to their weight values to obtain a final prediction block, to realize IntraTMP combined fusion prediction. The process is shown in Figure 5.
The number of matching blocks to be fused may be a fixed value, or may be determined according to the magnitude relationship of template error values for all matching blocks. For example, a threshold Threshold = minSAD < < 1 is set for available N matching blocks, and minSAD is the smallest of the template error values for these matching blocks. Only matching blocks for which template error values are less than or equal to the threshold are used for the fusion process. By this method, the matching blocks used for fusion may be determined.
After the matching blocks used for fusion are determined, a weight for each matching block may be determined by using a preset fixed value, calculation according to the template error value, and derivation according to the template.

5) IntraTMP filtering

The matching block (which may also be referred to as the reference block) obtained by intra template matching is usually directly used as the prediction block for the current block. The prediction block may be filtered to improve the prediction effect. A block-level flag bit may be used to indicate to the current block whether to use filtering processing for the prediction block.
There are many forms of filters. One possible filter form is as follows:

$$PredC = c0C + c1N + c2S + c3E + c4W + c5B$$

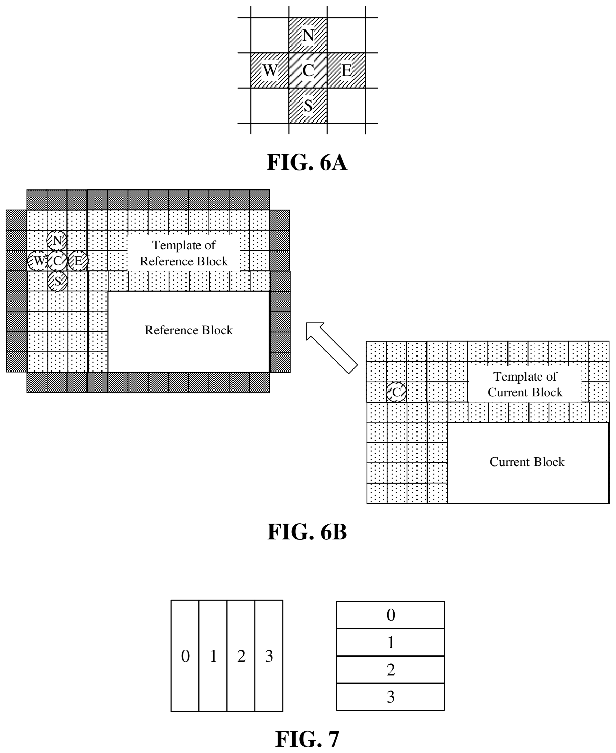

Where C is a pixel to be filtered, N is a pixel on the top of C, S is a pixel on the lower of C, W is a pixel on the left of C, and E is a pixel on the right of C, as shown in FIG. 6A. B (Bias) is a fixed value, e.g. B is the median value in the range for pixels. c0 to c5 are coefficients for the filter.
One method of determining the coefficients for the filter is to train the coefficients of the filter using a reference block template and a current block template. For example, a template area is a reconstruction area at 4 rows on the top and 4 columns on the left of the current block. For the reference block, additional regions at one line on the top, lower, left and right sides of the template area are also required as references. As shown in FIG. 6B, if a part of the additional regions is not completely encoded, it may be copied from the template region.

One method of training filter coefficients is to calculate a set of coefficients so that the template error value between the filtered template of the reference block and the template of the current block is minimized.

If IntraTMP filtering is used for the current block, the prediction block directly obtained from the reference block is filtered, one way is to filter each pixel in order from left to right and from top to bottom and use the filtered value as the predicted values.

6) Template-derived IntraTMP fusion

In the IntraTMP fusion prediction, multiple reference blocks may be obtained through intra template matching process, and weighted fusion is performed on these reference blocks. The weight values are predefined fixed values or typically calculated from template errors for all reference blocks. For example, the template error values for the reference blocks are SADs, which are SAD1 to SADn, respectively, and a method of calculating the weight is:

$$SADi = (SADi == 0)? \ 1: SADi$$

$$SUM = \sum_{i=1}^{n} SAD_i$$

$$W_i = (SUM\text{-}SADi)/((n\text{-}1) * SUM)$$

Where n is the total number of reference blocks, and Wi is the weight value corresponding to the reference block for which the template error value is SADi. The form of the weighted fused prediction block may be as follows:

$$Pr\,ed = \sum_{i=1}^{n} W_i \times Pr\,edi$$

In the template-derived IntraTMP fusion method, a method similar to filter coefficient training is used, and the weights used for fusion prediction are obtained by performing training according to the template of each reference block and the template of the current block. For example, 5 reference blocks are used for weighted fusion in the form:

$$pred = \sum_{n=0}^{4} w_n * refBlock_n + w_5 * Bias$$

One method of calculating the weight is to calculate a set of coefficients so that the template error value between the template of the reference block after fusion and the template of the current block is minimized.

7) Template-based intra mode derivation technology

In the Template-Based Intra Mode Derivation (TIMD) technology, the reconstructed pixels of the L-shaped part adjacent to the current coding block are used as templates, and the predicted pixels of the template region in different intra prediction modes are calculated by traversing the MPM list, to obtain the template error values between the predicted pixels in different intra prediction modes and the reconstructed pixels, which are represented by the Sum of Absolute Transformed Difference (SATD). An optimal intra prediction mode is selected according to the template error values. At the decoding side, the intra prediction mode is obtained by the same derivation method, thus reducing the encoded bits of mode information.

8) Combined intra-inter prediction technology

In the Combined Inter and Intra Prediction (CIIP) technology, by combining intra prediction and inter prediction, a weighted combination of an intra prediction block and an inter prediction block is used to obtain the prediction block for the current coding block. In ECM, CIIP is combined with template-based prediction technology, and different weight values are assigned to different regions, which further improves the prediction accuracy. Specifically, the intra prediction block pred_intra is obtained from the TIMD mode, and the inter prediction block pred_inter is obtained from the template-based Merge mode. According to the derived intra prediction mode and the position of the pixel to be predicted, the weight values wIntra, wInter are determined. The final prediction block Pred is calculated as follows:

$$Pred = (wIntra * Pred\_intra + wInter * Pred\_inter + 4) >> 3$$

Here, wIntra and wInter are determined according to the intra prediction mode intra_dir derived from TIMD. There are 65 intra angle prediction modes in the ECM ($2 \leq$ intra_dir<=66). When $2 \leq$ intra_dir<34, the current coding block is vertically quartered. When $34 <=$ intra_dir $<= 66$, the current encoding block is horizontally quartered. The weight values wIntra and wInter for each region are:

| Region Index | (wIntra, wInter) |
|---|---|
| 0 | (6, 2) |
| 1 | (5, 3) |
| 2 | (3, 5) |
| 3 | (2, 6) |

When being vertically or horizontally quartered, an index of each area is shown in Figure 7. In particular, when intra_dir is equal to 0 or 1, the sub-region is not divided, and wIntra and wInter are selected from (3, 1), (2, 2), (1, 3) according to the coding types (intra or inter) for two coding blocks located on the left side and the top side.

9) IntraTMP fusion intra prediction

In the IntraTMP fusion intra prediction mode, a matching block is obtained through intra template matching, it then fuses another intra prediction block to obtain a prediction block for the current coding block. Specifically, a matching block for the current coding block as a prediction block 1 is obtained by intra template matching; A prediction block 2 for the current coding block is obtained by an intra prediction mode other than IntraTMP; weight values for prediction blocks 1 and 2 are determined; weighted fusion is performed on these prediction blocks according to their weight values to obtain the final prediction block, so as to realize IntraTMP combined fusion prediction. Whether the fusion prediction mode is used may be indicated by a block-level flag bit.

Herein, the intra prediction mode may be derived by methods such as TIMD, and the weighted fusion process may be similar to the fusion process of the CIIP method, weight values related to the intra angle and pixel position are used to further improve the prediction accuracy.

10) Intra Block Copy technology

The Intra Block Copy (IBC) technology is an intra prediction technology in which predicted pixels is obtained based on block matching. Similar to inter prediction, prediction is achieved by using a block vector pointing from the current block to the reference block, except that the reference block for inter prediction comes from an encoded reconstructed picture, while the reference block for IBC comes from a reconstructed portion of the current picture. Information of the block vector needs to be transmitted by the bitstream, so similar to the intra prediction, there are IBC-AMVP mode and IBC-Merge mode.

In the IBC-AMVP mode, the prediction block vector is obtained through the constructed list of candidate block vectors, and the reference block for the current block and the corresponding final block vector are obtained through hash search, full search, etc. The final block vector is coded according to the prediction block vector to improve the encoding efficiency;

In the IBC-Merge mode, prediction is performed through the constructed list of candidate block vectors, an optimal block vector is selected from the list through SATD, RDO or other coding processes, as the final block vector, and the reconstructed block pointed by the final block vector is used as the reference block to complete the prediction. The index of the block vector in the list is encoded instead of the block vector itself, which improves the encoding efficiency.

The list of candidate block vectors may be composed of coding information such as block vectors of adjacent coding blocks, historical block vectors, and average block vectors.

However, in the actual coding process, the above-mentioned Intra TMP technologies have their advantages. When applied individually, due to incomplete consideration, there will be large deviations in some scenarios, resulting in low prediction accuracy. In the embodiments of the present application, by fusing a plurality of IntraTMP technologies, the IntraTMP technology may applicable to more application scenarios. Therefore, the accuracy of intra prediction is improved, which further improves the encoding and decoding performance.

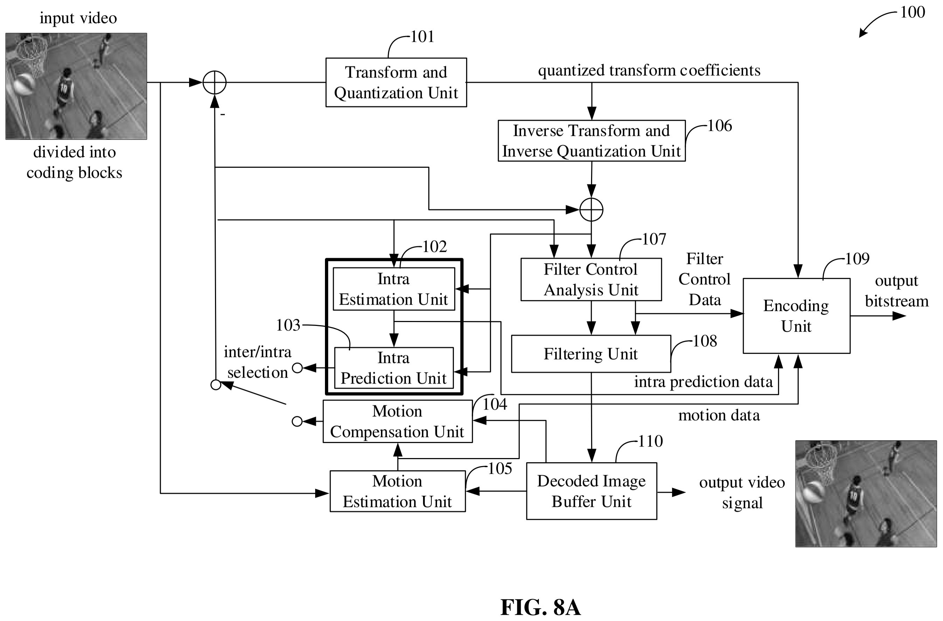

Referring to FIG. 8A, a schematic block diagram of an encoder provided by an embodiment of the present application is shown. As shown in FIG. 8A, an encoder (specifically, a "video encoder") 100 may include a transform and quantization unit 101, an intra estimation unit 102, an intra prediction unit 103, a motion compensation unit 104, a motion estimation unit 105, an inverse transform and inverse quantization unit 106, a filter control analysis unit 107, a filtering unit 108, an encoding unit 109, a decoded image buffer unit 110, and the like. The filtering unit 108 may implement de-block filtering and Sample Adaptive Offset (SAO) filtering. The encoding unit 109 may implement header information coding and Context-based Adaptive Binary Arithmetic Coding (CABAC). For the input original video signal, a video coding block may be obtained by dividing a Coding Tree Unit (CTU). Then residual pixel information obtained after intra or inter prediction is transformed by the transform and quantization unit 101 for the video coding block, which includes that the residual information is transformed from the pixel domain to the transform domain, and the obtained transform coefficient is quantized to further reduce the bit rate. The intra estimation unit 102 and the intra prediction unit 103 are configured to perform intra prediction on the video coding block. Specifically, the intra estimation unit 102 and the intra prediction unit 103 are configured to determine an intra prediction mode to be used to encode the video coding block. The motion compensation unit 104 and the motion estimation unit 105 are configured to perform inter prediction coding of the received video coding block with respect to one or more blocks in the one or more reference pictures to provide temporal prediction information. The motion estimation performed by the motion estimation unit 105 is a process of generating a motion vector that may be used to estimate the motion of the video coding block. Then motion compensation is performed by the motion compensation unit 104 based on the motion vector determined by the motion estimation unit 105. After determining the intra prediction mode, the intra prediction unit 103 is further configured to supply the selected intra prediction data to the encoding unit 109, and the motion estimation unit 105 is also configured to transmit the motion vector data determined by calculation to the encoding unit 109. Further, the inverse transform and inverse quantization unit 106 is used for reconstruction of the video coding block, reconstructs a residual block in the pixel domain. Block effect artifacts are removed from the reconstructed residual block by the filter control analysis unit 107 and the filtering unit 108. Then the reconstructed residual block is added to the predictive block in a picture in the decoded image buffer unit 110 to generate the reconstructed video coding block. The encoding unit 109 is configured to encode various coding parameters and quantized transform coefficients. In a CABAC-based encoding algorithm, the context content may be based on adjacent coding blocks, and the encoding unit 109 may be used to encode information indicating the determined intra prediction mode, to output a bitstream for the video signal. The decoded image buffer unit 110 is used to store the reconstructed video coding block for prediction reference. As the video picture encoding progresses, new reconstructed video coding blocks are continuously generated, and these reconstructed video coding blocks are stored in the decoded image buffer unit 110.

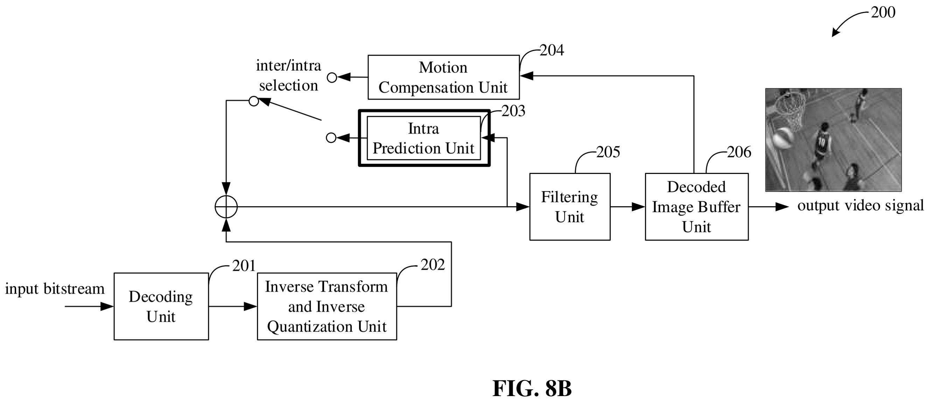

Referring to FIG. 8B, a schematic block diagram of a decoder provided by an embodiment of the present application is shown. As shown in FIG. 8B, a decoder (specifically, a "video decoder") 200 includes a decoding unit 201, an inverse transform and inverse quantization unit 202, an intra prediction unit 203, a motion compensation unit 204, a filtering unit 205, a decoded image buffer unit 206, and the like. The decoding unit 201 may implement header information decoding and CABAC decoding. The filtering unit 205 may implement block removal filtering and SAO filtering. After the input video signal is processed through the encoding process of FIG. 4A, a bitstream for the video signal is output. The bitstream is input into the decoder 200, first passes through the decoding unit 201 for obtaining the decoded transform coefficients. The transform coefficients are processed by the inverse transform and inverse quantization unit 202 to generate a residual block in the pixel domain. The intra prediction unit 203 may be configured to generate prediction data for a current video decoding block based on the determined intra prediction mode and data from previously decoding blocks in the current frame or picture. The motion compensation unit 204 determines prediction information for a video decoding block by parsing the motion vector and other associated syntax element, and uses the prediction information to generate a predictive block of the video decoding block being decoded. A decoded video block is formed by summing the residual block from the inverse transform and inverse quantization unit 202 with the corresponding predictive block generated by the intra prediction unit 203 or the motion compensation unit 204. The decoded video signal passes through the filtering unit 205 so as to remove block artifacts, which may improve the video quality. The decoded video block is then stored in a decoded image buffer unit 206, which stores the reference picture for subsequent intra prediction or motion compensation. The decoded image buffer unit 206 is also used to output the video signal. That is, the recovered original video signal is obtained.

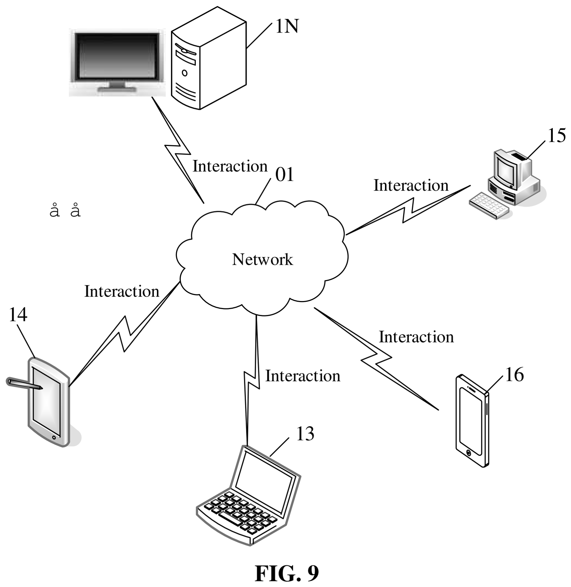

Further, an embodiment of the present application further provides a network architecture of a codec system including an encoder and a decoder. FIG. 9 shows a schematic diagram of a network architecture of a codec system provided by an embodiment of the present application. As shown in FIG. 9, the network architecture includes one or more electronic devices 13-1N and a communication network 01. The electronic devices 13-1N may perform video interaction through the communication network 01. In implementation, the electronic devices may be various types of devices having video encoding/decoding functions. For example, the electronic device may include a smartphone, a tablet, a personal computer, a personal digital assistant, a navigator, a digital phone, a video phone, a television, a sensing device, a server, and the like, and is not specifically limited herein. Further, the decoder or the encoder according to the embodiments of the present application may be the above-described electronic device.

It is noted that the methods in the embodiments of the present application are mainly applied to the intra prediction unit 103 as shown in FIG. 8A and the intra prediction unit 203 as shown in FIG. 8B. That is, the embodiments of the present application may be applied to an encoder or a decoder, or may be applied to both the encoder and the decoder, which is not specifically limited in the embodiments of the present application.

It should also be noted that, when the methods in the embodiments of the present application are applied to the intra prediction unit 103, "a current block" specifically refers to a coding block to be currently subjected to intra prediction. When the methods in the embodiments of the present application are applied to the intra prediction unit 203, "a current block" specifically refers to a decoding block to be currently subjected to intra prediction.

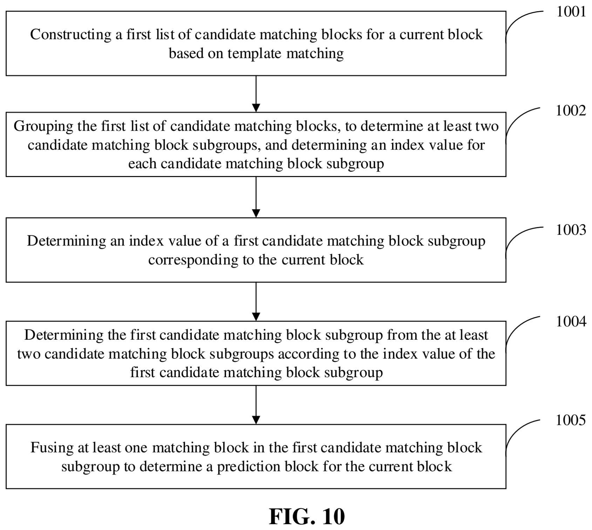

In an embodiment of the present application, reference is made to FIG. 10, which shows a schematic flowchart of a decoding method according to an embodiment of the present application. As shown in FIG. 10, the method may include operations 1001-1005.

At 1001, a first list of candidate matching blocks for the current block is constructed based on template matching.

Possible matching blocks in a preset search range are searched for according to a preset search method. Template error values corresponding to the matching blocks are calculated according to templates of the matching blocks and a template of the current block. Then a list of candidate matching blocks is constructed according to the template error values corresponding to all matching blocks. Exemplarily, in the list of candidate matching blocks, candidate matching blocks may be ordered from smallest to largest according to the template error values.

At 1002, the first list of candidate matching blocks is grouped, to determine at least two candidate matching block subgroups, and an index value of each candidate matching block subgroup is determined.

Exemplarily, the first list of candidate matching blocks is grouped according to at least one grouping rule. Each grouping rule specifies the number of subgroups, the number of matching blocks in each candidate matching block subgroup, distances between matching blocks in each candidate matching block subgroup, and the like. In the embodiment of the present application, the first list of candidate matching blocks may be grouped by using one or more grouping rules to determine at least two candidate matching block subgroups. The candidate matching block subgroups include at least one matching block.

At 1003, an index value of the first candidate matching block subgroup corresponding to the current block is determined.

Exemplarily, the first candidate matching block subgroup may be a particular candidate matching block subgroup in the at least two candidate matching block subgroups.

Exemplarily, the index value of the first candidate matching block subgroup may be a preset index value, an index value determined by decoding a bitstream, or an index value corresponding to a reference block. The first candidate matching block subgroup is determined according to the index value. IntraTMP fusion prediction is implemented by using a matching block in the first candidate matching block subgroup, to determine a prediction block for the current block.

At 1004, the first candidate matching block subgroup is determined from the at least two candidate matching block subgroups according to the index value of the first candidate matching block subgroup.

At 1005, at least one matching block in the first candidate matching block subgroup is fused to determine a prediction block for the current block.

In some embodiments, the method further includes decoding a related syntax element of the current block. Exemplarily, the related syntax element is used to indicate a prediction mode for the current block. In some embodiments, the related syntax element includes: a first syntax element and/or a second syntax element. The first syntax element is used to indicate whether the prediction mode for the current block is an intra template matching prediction (IntraTMP) fusion prediction mode. The second syntax element is used to indicate the index value of the first candidate matching block subgroup.

In some examples, the first syntax element includes a block-level syntax element. In some embodiments, the first syntax element further includes at least one of a stripe-level syntax element, a slice-level syntax element, an image-level syntax element, and a sequence-level syntax element.

In some examples, the second syntax element includes a block-level syntax element. In some embodiments, the second syntax element further includes at least one of a stripe-level syntax element, a slice-level syntax element, an image-level syntax element, and a sequence-level syntax element.

In some embodiments, the related syntax element further includes a syntax element for indicating whether an IntraTMP prediction mode is allowed to be used for the prediction of the current block, a syntax element for indicating whether the current block is predicted using an IntraTMP fusion prediction mode, and a syntax element for indicating whether the current block is predicted using an IntraTMP multi-candidate prediction mode. In practical applications, the related syntax element may be one or more of a block-level syntax element, a stripe-level syntax element, a slice-level syntax element, an image-level syntax element, and a sequence-level syntax element.

In some embodiments, the method further includes determining that the prediction mode for the current block is the IntraTMP fusion prediction mode. The decoding method of operations 1001 to 1005 of the embodiments of the present application is executed.

In some embodiments, the first syntax element is decoded. In some embodiments, the second syntax element is decoded. In some embodiments, the first syntax element and the second syntax element are decoded. Exemplarily, when it is determined that the current block is predicted using the IntraTMP prediction mode, the first syntax element and the second syntax element are decoded. Exemplarily, when it is determined that the IntraTMP fusion prediction mode is allowed to be used for the prediction of the current block, the first syntax element and the second syntax element are decoded. It should be noted that, if it is necessary to decode the first syntax element and the second syntax element, the decoding order for the two syntax elements is not strictly limited.

In some embodiments, when a value of the first syntax element is a first value, it is determined that the prediction mode for the current block is an IntraTMP fusion prediction mode, and the index value of the first candidate matching block subgroup corresponding to the current block is determined according to the second syntax element.

It should be noted that the IntraTMP fusion prediction mode may be a fusion mode based on at least one matching block, which may also be referred to as an IntraTMP multi-matching block fusion prediction mode. In practical application, the number of fusion matching blocks to be fused may be determined according to the selected fusion mode, grouping rules for matching blocks, etc.

In some embodiments, when the value of the first syntax element is a second value, it is determined that the prediction mode for the current block is another IntraTMP prediction mode other than the IntraTMP fusion prediction mode. Exemplarily, the another IntraTMP prediction mode may be an IntraTMP multi-candidate prediction mode based on a single matching block, in which one matching block is selected from a plurality of candidate matching blocks, and the selected matching block is used to obtain a prediction block.

In some embodiments, when the value of the first syntax element is a second value, it is determined that the prediction mode for the current block is an IntraTMP multi-candidate prediction mode based on a single matching block, and an index value of an optimal matching block corresponding to the current block is determined according to the second syntax element. That is, the second syntax element may be used to indicate the index value of the first candidate matching block subgroup, or may also be used to indicate the index value of the optimal matching block corresponding to the current block. The content indicated by the second syntax element depends on the prediction mode for the current block. According to different usage, different index value ranges or a same index value range may be set for the second syntax element.

Exemplarily, the first value may be 1 and the second value may be 0. Exemplarily, the first value may be 0 and the second value may be 1.

Exemplarily, a related syntax element includes:

**intra_tmp_flag**

If( intra_tmp_flag)

{

      **intra_tmp_fusion_flag**

      **intra_tmp_fusion_idx**

}

When an IntraTMP related syntax element is decoded, first, intra_tmp_flag is decoded. If intra_tmp_flag is true, it indicates that the current block is encoded in the IntraTMP mode. Further, intra_tmp_fusion_flag (having the function of the first syntax element) and intra_tmp_fusion_idx (having the function of the first syntax element) are decoded. If intra_tmp_fusion_flag is true, it indicates that the current block is predicted using the IntraTMP fusion prediction mode, and which group of matching blocks is used for fusion prediction is determined according to intra_tmp_fusion_idx. If intra_tmp_fusion_flag is false, it indicates that the current block is predicted using the IntraTMP multi-candidate prediction mode based on a single matching block, and intra_tmp_fusion_idx is used to determine the selected optimal matching block.

In some embodiments, the operation that the related syntax element of the current block is decoded includes the following operations. The first syntax element is decoded. When a value of the first syntax element is a first value, it is determined that the prediction mode for the current block is an IntraTMP fusion prediction mode. Then, the second syntax element is decoded. An index value of the first candidate matching block subgroup corresponding to the current block is determined according to the second syntax element.

Exemplarily, a related syntax element includes:

**intra_tmp_flag**

If (intra_tmp_flag)

{

    **intra_tmp_fusion_flag**

    If (intra_tmp_fusion_flag) {

        **intra_tmp_fusion_idx**

    }

}

An IntraTMP related syntax element is decoded. If intra_tmp_flag is true, it indicates that the current block is encoded in the IntraTMP mode. Further, intra_tmp_fusion_flag is decoded. If intra_tmp_fusion_flag is true, it indicates that the current block is predicted using the IntraTMP fusion prediction mode. Further, intra_tmp_fusion_idx is decoded to determine which group of matching blocks is used for fusion prediction. The value of intra_tmp_fusion_idx should be related to the grouping rule. For example, when the total number of candidate matching block subgroups is 15, intra_tmp_fusion_idx may be 0 to 14, or intra_tmp_fusion_idx may be 0 to N, where N is less than 14. A variable length encoding scheme may be used for intra_tmp_fusion_idx. The smaller the index is, the shorter the corresponding bin. The smaller the index value is, the smaller the template error value of the corresponding candidate matching block, and the higher the probability of being selected. A shorter bin may be set for a smaller index value. For example, encoding is performed by using the following table:

| intra_tmp_fusion_idx | Binary symbol | | | | |
|---|---|---|---|---|---|
| 0 | 1 | 1 | | | |
| 1 | 1 | 0 | 0 | | |
| 2 | 1 | 0 | 1 | | |
| 3~6 | 0 | x | x | x | |
| 7~14 | 0 | x | x | x | x |

Indexes 3~6 use bins with the same length, and indexes 7~14 use bins with the same length. The x in the above table may be obtained using truncated binary. For example, intra_tmp_fusion_idx may take 0 to 4, encoding is performed by using the following table:

| intra_tmp_fusion_i dx | Binary symbol | | | | |
|---|---|---|---|---|---|
| 0 | 0 | | | | |
| 1 | 1 | 0 | | | |
| 2 | 1 | 1 | 0 | | |
| 3 | 1 | 1 | 1 | 0 | |
| 4 | 1 | 1 | 1 | 1 | |

The decoding method for a bin in intra_tmp_fusion_idx includes an operation that a bin is decoded with equal probability, a bin is decoded based on a context model, or a bin is decoded based on multiple context models.

In some embodiments, the related syntax element further includes a third syntax element. The third syntax element is used to indicate an index value of an optimal matching block corresponding to the current block. An operation that the related syntax element of the current block is decoded further includes operations that: when the value of the first syntax element is the second value, it is determined that the prediction mode for the current block is an IntraTMP multi-candidate prediction mode based on a single matching block, and the third syntax element of the current block is decoded; then, the index value of the optimal matching block corresponding to the current block is determined according to the third syntax element. That is, intra_tmp_fusion_idx and intra_tmp_idx may be decoded in different ways according to intra_tmp_fusion_flag.

Exemplarily, a related syntax element includes:

> **intra_tmp_flag**
>
> If (intra_tmp_flag)
>
> {
>
> > **intra_tmp_fusion_flag**
> >
> > If (intra_tmp_fusion_flag) {
> >
> > > **intra_tmp_fusion_idx**
> >
> > } else {
> >
> > > **intra_tmp_idx**
> >
> > }
>
> }

An IntraTMP related syntax element is decoded. If intra_tmp_flag is true, it indicates that the current block is encoded in IntraTMP mode. Further, intra_tmp_fusion_flag is decoded. If intra_tmp_fusion_flag is true, it indicates that the current block is predicted using the IntraTMP fusion prediction mode. Further, intra_tmp_fusion_idx (having the function of the second syntax element) is decoded to determine which group of matching blocks is used for fusion prediction. If intra_tmp_fusion_flag is false, it indicates that the IntraTMP multi-candidate prediction mode for a single matching block is used for the current block. Further, intra_tmp_idx (having the function of the third syntax element) indicating that the index of the selected matching block in the list of candidate matching blocks is decoded. For example, if intra_tmp_idx is equal to i, then the (i+1)-th matching block in the list of candidate matching blocks is the selected matching block, where the value of i starts from 0, and the index value starts from 1. Alternatively, if intra_tmp_idx is equal to i, then the i-th matching block in the list of candidate matching blocks is the selected matching block, where the value of i starts from 0, and the index value also starts from 0.

If intra_tmp_fusion_idx and intra_tmp_idx are decoded in different ways according to intra_tmp_fusion_flag, a list of candidate matching blocks with different lengths may be constructed according to intra_tmp_fusion_flag. For example, if intra_tmp_fusion_flag is true, a list with length N1 is constructed. If intra_tmp_fusion_flag is false, a list with length N2 is constructed, where N1 and N2 may be preset fixed values or may be determined by decoding the bitstream.

In some embodiments, when it is determined that the prediction mode for the current block is the IntraTMP multi-candidate prediction mode based on a single matching block, the method further includes operations that the optimal matching block is determined from a second list of candidate matching blocks according to the index value of the optimal matching block, and, the prediction block for the current block is determined according to the optimal matching block.

In some embodiments, the method further includes an operation that the second list of candidate matching blocks for the current block is constructed based on the template matching. A length of the second list of candidate matching blocks is not equal to the length of the first list of candidate matching blocks. In some embodiments, the length of the second list of candidate matching blocks is equal to the length of the first list of candidate matching blocks. Or it may be understood as that the first list of candidate matching blocks and the second list of candidate matching blocks are the same list of candidate matching blocks.

In some embodiments, the second syntax element is further used to indicate a fusion mode of the IntraTMP fusion prediction mode for the current block. For example, if the first candidate matching block subgroup is provided with a corresponding fusion mode of the IntraTMP fusion prediction mode, then according to an index value of the first candidate matching block subgroup, the first candidate matching block subgroup may be indexed, and a corresponding fusion mode of the IntraTMP fusion prediction mode may also be indexed. Different fusion modes correspond to different selection methods, weighted fusion methods, fusion weight values, etc. for the matching block. Exemplarily, the fusion mode includes a fusion mode of intra template matching based on template derivation and a fusion mode of intra template matching based on a template error value.

For example, the total length of the list of candidate matching blocks is N, and every M matching blocks in the list of candidate matching blocks may be set as one subgroup, and the list of candidate matching blocks may be divided into N/M candidate matching block subgroups in total. More than one fusion mode is set for each candidate matching block subgroup, to extend the candidate matching block subgroup. When the same candidate matching block subgroup is set with two fusion modes, it may be regarded as two candidate matching block subgroups. {BV0, BV1, BV2, BV3, BV4, bFilter = 1}, {BV0, BV1, BV2, BV3, BV4, bFilter = 0}, {BV0, BV1, BV2, bFilter = 1}, {BV0, BV1, bFilter = 0}. bFilter = 1 represents a first fusion mode and bFilter = 0 represents a second fusion mode. When the first candidate matching block subgroup is indexed according to the index value, the corresponding fusion mode may also be indexed.

In some embodiments, the related syntax element further comprises a fourth syntax element. The method further includes operation of decoding the fourth syntax element. The fourth syntax element is used to indicate a fusion mode of the IntraTMP fusion prediction mode for the current block, or to indicate whether to filter a selected matching block.

In some embodiments, the first syntax element and the fourth syntax element are decoded. In some embodiments, the second syntax element and the fourth syntax element are decoded. In some embodiments, the third syntax element and fourth syntax element are decoded. In some embodiments, the first syntax element, the second syntax element, and the fourth syntax element are decoded.

In some embodiments, when it is determined that the prediction mode for the current block is an IntraTMP fusion prediction mode, a fusion mode of the IntraTMP fusion prediction mode for the current block is determined according to the fourth syntax element. When it is determined that the prediction mode for the current block is the IntraTMP multi-candidate prediction mode based on a single matching block, whether to filter the selected matching block is determined according to the fourth syntax element.

Exemplarily, a related syntax element includes:

**intra_tmp_flag**

If (intra_tmp_flag) {

        **intra_tmp_fusion_flag**

        **intra_tmp_filter_flag**

        **intra_tmp_idx**

}

An IntraTMP-related syntax element is decoded. If intra_tmp_flag is true, it indicates that the current block is encoded in an IntraTMP mode. Further, intra_tmp_fusion_flag, intra_tmp_filter_flag, and intra_tmp_idx (having the function of the second syntax element, which may also be referred to as intra_tmp_fusion_idx) are decoded. If intra_tmp_fusion_flag is true, it indicates that the current block is predicted using the IntraTMP fusion prediction mode, which group of matching blocks is used for fusion prediction is determined according to intra_tmp_idx, and intra_tmp_filter_flag indicates the fusion mode. If intra_tmp_fusion_flag is false, intra_tmp_idx indicates that the prediction method of a single matching block is used for the current block, and intra_tmp_filter_flag indicates whether to filter the single matching block. Exemplarily, if intra_tmp_filter_flag is true, it indicates that the IntraTMP fusion mode based on template derivation is used. If intra_tmp_filter_flag is false, it indicates that the IntraTMP fusion mode based on a template error value is used.

In some embodiments, it is determined that the prediction mode for the current block is an IntraTMP fusion prediction mode and the fourth syntax element is decoded. The fourth syntax element is used to indicate a fusion mode of the IntraTMP fusion prediction mode for the current block.

Exemplarily, a related syntax element includes:

**intra_tmp_flag**

If (intra_tmp_flag)

{

    **intra_tmp_fusion_flag**

    If (intra_tmp_fusion_flag) {

        **intra_tmp_filter_flag**

        **intra_tmp_fusion_idx**

    }

}

An IntraTMP related syntax element is decoded. If intra_tmp_flag is true, it indicates that the current block is encoded in the IntraTMP mode. Further, intra_tmp_fusion_flag is decoded. If intra_tmp_fusion_flag is true, it indicates that the current block is predicted using the IntraTMP fusion prediction mode. Further, intra_tmp_filter_flag (having the function of the fourth syntax element) and intra_tmp_fusion_idx are decoded, intra_tmp_filter_flag indicates a fusion mode, and intra_tmp_fusion_idx is used to determine which group of matching blocks is used for fusion prediction. Exemplarily, if intra_tmp_filter_flag is true, it indicates that the IntraTMP fusion mode based on template derivation is used. intra_tmp_fusion_idx is used to determine which group of matching blocks is used for fusion prediction, and the fusion is performed by using the group of matching blocks and the corresponding weight values to obtain a final prediction block. If intra_tmp_filter_flag is false, it indicates that the IntraTMP fusion mode based on a template error value is used, intra_tmp_fusion_idx is used to determine which group of matching blocks is used for fusion prediction, and the fusion is performed by using the group of matching blocks and the corresponding weight values to obtain a final prediction block.

In some embodiments, the method further includes an operation that a fusion mode of the IntraTMP fusion prediction mode for the current block is determined according to the fusion mode of the IntraTMP fusion prediction mode corresponding to the first candidate matching block subgroup. It may be appreciated that when the selected candidate matching block subgroup is set with corresponding fusion mode, the fusion mode corresponding to the first candidate matching block subgroup may be used as the fusion mode of the IntraTMP fusion prediction mode for the current block, and it is not necessary to transmit intra_tmp_filter_flag to indicate the fusion mode.

In some embodiments, it is determined that the prediction mode for the current block is the IntraTMP multi-candidate prediction mode based on a single matching block, and the fourth syntax element is decoded. According to the fourth syntax element, it is determined whether to filter the selected matching block.

Exemplarily, a related syntax element includes:

**intra_tmp_flag**

If (intra_tmp_flag) {

    **intra_tmp_fusion_flag**

    If (! intra_tmp_fusion_flag) {

        **intra_tmp_filter_flag**

    }

    **intra_tmp_idx**

}

An IntraTMP related syntax element is decoded. If intra_tmp_flag is true, it indicates that the current block is encoded in IntraTMP mode. Further, intra_tmp_fusion_flag is decoded. If intra_tmp_fusion_flag is false, it indicates that an IntraTMP multi-candidate prediction mode for a single matching block is used for the current block. Further, intra_tmp_filter_flag is decoded, to determine whether to filter the selected matching block. Further, intra_tmp_idx is decoded, to determine the selected optimal matching block. If intra_tmp_fusion_flag is true, it indicates that the current block is predicted using the IntraTMP fusion prediction mode. Then, intra_tmp_idx is further decoded to determine which group of matching blocks is used for fusion prediction. In some embodiments, decoding intra_tmp_idx may also be performed before determining that intra_tmp_fusion_flag is true or false. For example, if intra_tmp_flag is true, intra_tmp_fusion_flag and intra_tmp_idx are decoded.

In some embodiments, the related syntax element further includes a fourth syntax element and a fifth syntax element. The method further includes operations that: it is determined that the prediction mode for the current block is an IntraTMP fusion prediction mode and the fourth syntax element is decoded, the fourth syntax element is used to indicate a fusion mode of the IntraTMP fusion prediction mode for the current block; it is determined that the prediction mode for the current block is an IntraTMP multi-candidate prediction mode based on the single matching block and the fifth syntax element is decoded, the fifth syntax element is used to indicate whether to filter the selected matching block. That is, different syntax elements may be set, respectively for indicating the fusion mode of the IntraTMP fusion prediction mode for the current block, and for indicating whether to filter the selected matching block.

In some embodiments, an index range of the index value of the first candidate matching block subgroup is smaller than an index range corresponding to at least two candidate matching block subgroups. Exemplarily, the index range corresponding to the two candidate matching block subgroups is 0-5, and the index range of the index value of the first candidate matching block subgroup is 0-2, that is, the transmitted second syntax element is only used to indicate a candidate matching block subgroup having the index value of 0-2. That is, the value of intra_tmp_fusion_idx may be smaller than or equal to the number of candidate matching block subgroups. If all possible matching block subgroups are reordered, the first N combinations thereof are indicated by either intra_tmp_fusion_idx or intra_tmp_idx. That is, the value range of intra_tmp_fusion_idx or intra_tmp_idx is 0-N-1, and the number of the matching block subgroups which are reordered is M, where M > N. For example, by reordering the candidate matching block subgroups, the index value is controlled to a smaller index range, or only the first several subgroups are indexed. By limiting the index value range of candidate matching block subgroups, coding bins of the index value are reduced to improve the coding efficiency.

In some embodiments, when the fusion mode includes a first fusion mode and a second fusion mode, the method further includes operations that: when the fourth syntax element is used to indicate that the fusion mode of the IntraTMP fusion prediction mode for the current block is the first fusion mode, the index value of the first candidate matching block subgroup corresponding to the current block is determined according to the second syntax element; when the fourth syntax element indicates that the fusion mode of the IntraTMP fusion prediction mode for the current block is the second fusion mode, the index value of the first candidate matching block subgroup corresponding to the current block is determined according to the second syntax element and an index offset value.

It should be noted that, when the second syntax element is used to indicate only index values of some candidate matching block subgroups, more candidate matching block subgroups may be indicated according to the fourth syntax element. For example, the index range corresponding to the two candidate matching block subgroups is 0-5, the index range of the index value of the first candidate matching block subgroup is 0-2, the index range of the second syntax element is 0-2 when the fourth syntax element is used to indicate the first fusion mode, and the index range of the value of the second syntax element plus the index offset value is 3-5 when the fourth syntax element is used to indicate the second fusion mode. It is also understood that the candidate matching block subgroup having an index range of 0-2 correspond to the first fusion mode, and the candidate matching block subgroup having an index range of 3-5 corresponds to the second fusion mode.

In some embodiments, candidate matching block subgroups having an index range of 0-2 and an index range of 3-5 may be obtained by performing grouping according to the same grouping rule, or by performing grouping according to different grouping rules.

In some embodiments, it is determining that the current block is predicted using the IntraTMP fusion prediction mode, the method further includes operations that the index value of the first candidate matching block subgroup corresponding to the current block is stored; or, a preset matching block in the first candidate matching block subgroup corresponding to the current block is stored. For example, a certain BV in the matching block subgroup indicated by intra_tmp_fusion_idx may be stored for reference by other decoding blocks. For example, intra_tmp_fusion_idx = i, the (i*3+1)-th BV in the list of candidate blocks is stored. Exemplarily, other decoding blocks use the index value of the first candidate matching block subgroup corresponding to the current block as the index value used by themselves.

In some embodiments, the method further includes an operation that a sixth syntax element is decoded. The sixth syntax element is used to indicate whether some or all of the related syntax elements for the current block are decoded.

In some embodiments, the sixth syntax element includes at least one of a sequence-level syntax element, a picture-level syntax element, a slice-level syntax element, a stripe-level syntax element, or a block-level syntax element.

It should be noted that some or all of the related syntax element may be controlled by one or more of the block-level syntax element, the stripe-level syntax element, the slice-level syntax element, the picture-level syntax element and the sequence-level syntax element. That is, a corresponding sixth syntax element may be set for each of the related syntax elements, or a corresponding sixth syntax element may be set for two or more of the related syntax elements, or a corresponding sixth syntax element may be set for all of the related syntax elements. For example, when the related syntax element is a block-level syntax element, the sixth syntax element may be a picture-level and/or sequence-level syntax element.

Further, the construction of the list of candidate matching blocks is illustrated.

In some embodiments, N candidate matching blocks are searched in the search area by template matching, or a list of candidate blocks with length N is constructed by sorting from small to large according to the template error values of the N candidate matching blocks. A template matching process for constructing the list of candidate blocks is as follows. In a first step, first searching is performed with a certain step size (for example, the horizontal step size and the vertical step size are both 4), to obtain N optimal matching blocks with a certain spacing (the first N with the smallest template error value). In a second step, second searching is performed on adjacent regions of the N matching blocks obtained in the first step, and these adjacent regions may be set as a plurality of non-overlapping regions according to the step size in the first step. M optimal matching blocks (which may contain the matching blocks obtained in the first step) are obtained from these regions.

Further, a method of grouping the first list of candidate matching blocks according to the embodiments of the present application will be described by way of example.

In some embodiments, the operation that the first list of candidate matching blocks is grouped includes operation that the first list of candidate matching blocks is grouped according to at least one grouping rule. Each grouping rule specifies the number of subgroups, the number of matching blocks in each candidate matching block subgroup, the distance between matching blocks in each candidate matching block subgroup, and the like.

In some embodiments, the at least one grouping rule includes a first grouping rule. The first grouping rule includes that: starting from the first matching block in the first list of candidate matching blocks, every first preset number of matching blocks are set as one candidate matching block subgroup. The first preset number is an integer greater than 0. Here, the first preset number is the number of matching blocks in each candidate matching block subgroup.

The maximum length of the list of candidate matching blocks constructed by the template matching process is N. For example, N is equal to 45. The fusion prediction may use at most M matching blocks for fusion. For example, M is equal to 3. The first preset number is set to 3, and every M matching blocks in the list of candidate matching blocks may be set to 1 group according to the first grouping rule, and a total of N/M = 15 groups is divided. If the total length N of the list of candidate matching blocks may not be divisible by the maximum fusion number M, the number of matching blocks in the last group should be less than M, and the other matching blocks in the list of candidate matching blocks may be added to the group. That is, the first grouping rule further includes that: if the number of matching blocks in the last candidate matching block subgroup is less than the first preset number, preset matching blocks are obtained from the first list of candidate matching blocks and are added to the last candidate matching block subgroup, so that the number of matching blocks in the last candidate matching block subgroup is equal to the first preset number.

The at least one grouping rule includes a second grouping rule. The second grouping rule includes that: starting from the first matching block in the first list of candidate matching blocks, every second preset number of matching blocks are set as one candidate matching block subgroup. The second preset number is an integer greater than 0, and the first preset number is different from the second preset number.

The maximum length of the list of candidate matching blocks constructed by the template matching process is N. For example, N is equal to 15. The fusion prediction may use up to M matching blocks for fusion. For example, M is equal to 5, the second preset number is set to 5, and every M matching blocks in the list of candidate matching blocks are set to 1 group according to the first grouping rule, a total of N/M = 3 groups is divided. Accordingly, the second grouping rule further includes that: if the number of matching blocks in the last candidate matching block subgroup is less than the second preset number, preset matching blocks are obtained from the first list of candidate matching blocks and are added to the last candidate matching block subgroup, so that the number of matching blocks in the last candidate matching block subgroup is equal to the second preset number.

In some embodiments, the at least one grouping rule includes the first grouping rule and the second grouping rule. Exemplarily, the maximum length of the list of candidate matching blocks constructed by the template matching process is N. For example, N is equal to 15. The first preset number is set to 3 and the second preset number is set to 5. At most N/M = 5 groups are obtained according to the first grouping rule, and at most N/M = 3 groups are obtained according to the second grouping rule. The list of candidate matching blocks is grouped according to the first grouping rule and the second grouping rule to obtain a total of 8 groups.

In some embodiments, each grouping rule further includes a corresponding number of subgroups. For example, when the number of subgroups corresponding to the first grouping rule is 2 and the number of subgroups corresponding to the second grouping rule is 2, the list of candidate matching blocks is grouped according to the first grouping rule and the second grouping rule to obtain a total of 4 groups. For example, a candidate block in the list of candidate matching blocks is $BV_n$, n is an integer from 1 to N, or n is an integer from 0 to N-1. In some embodiments, i may be an index value of a candidate matching block. Two candidate matching block subgroups obtained according to the first grouping rule are {BV0, BV1, BV2}, {BV3, BV4, BV5}. Two candidate matching block subgroups obtained according to the second grouping rule are {BV0, BV1, BV3, BV2, BV4}, {BV5, BV6, BV7, BV8, BV9}.

In some embodiments, the at least one grouping rule includes a third grouping rule. The third grouping rule includes that the first M1 matching blocks in the first list of candidate matching blocks and every M2 matching blocks starting from the (M1+1)-th matching block are grouped into a candidate matching block subgroup. In some embodiments, the third grouping rule further includes a corresponding number of subgroups.

In some embodiments, the third grouping rule further includes that the values of M2 in different matching block subgroups are equal, or the third grouping rule further includes that not all of the values of M2 in different matching block subgroups are equal.

Exemplarily, BVn (i > N) is combined with the first M1 candidate matching blocks in the list of candidate matching blocks. For example, M1 = 2, M2 = 1, then possible combinations are {BV0, BV1, BV2}, {BV0, BV1, BV3}, {BV0, BV1, BV4}, etc. M1 = 2, then the possible combination is {BV0, BV1, BV2, BV3}, {BV0, BV1, BV4}, {BV0, BV1, BV5}, etc. BVn-BV (n+M2) (n > N) are combined with the first N candidate matching blocks in the list of candidate matching blocks. For example, M1 = 1, M2 = 2, then possible combinations are {BV0, BV1, BV2}, {BV0, BV3, BV4}, {BV0, BV5, BV6}, etc.

In some embodiments, the at least one grouping rule includes a first matching rule and a third grouping rule. The at least one grouping rule includes a first matching rule, a second grouping rule, and a third grouping rule. Exemplarily, each grouping rules further includes a corresponding number of subgroups.

In some embodiments, the at least one grouping rule includes a fourth grouping rule. The fourth grouping rule includes that: the first i matching blocks in the first list of candidate matching blocks are grouped into the i-th candidate matching block subgroup, where i is an integer greater than 0. For example, the first matching block forms the first candidate matching block subgroup, the first two matching blocks form the second candidate matching block subgroup, the first three matching blocks form the third candidate matching block subgroup, the first four matching blocks form the fourth candidate matching block subgroup, and so on. If the maximum length of the list of candidate matching blocks is N, then the maximum value of i is N, and the number of groups may be limited by limiting the maximum value of i.

In some embodiments, a fifth grouping rule includes that: the first $2^1$ matching blocks in the first list of candidate matching blocks form an i-th candidate matching block subgroup. The fifth grouping rule includes that: the first (2i+a) matching blocks in the first list of candidate matching blocks form an i-th candidate matching block subgroup, where a is a positive integer.

In some embodiments, grouping may also be performed based on distances between matching blocks. Exemplarily, the grouping rule further includes that: a distance between any two matching blocks in the candidate matching block subgroup is greater than a first distance threshold. Alternatively, the grouping rule further includes that a distance between any two matching blocks in the candidate matching block subgroup is less than a second distance threshold. By restricting the distance between the matching blocks, the distribution of the matching blocks in the candidate matching block subgroup may be restricted. It should be noted that, when two or more grouping rules are set, each grouping rule is restricted or partially restricted.

In some embodiments, the operation that the first list of candidate matching blocks is grouped includes operations that the first list of candidate matching blocks is grouped according to at least one grouping rule to obtain at least one candidate matching block subgroup; and at least one corresponding fusion mode of the IntraTMP fusion prediction mode is set for each candidate matching block subgroup, to obtain at least two candidate matching block subgroups.

It should be noted that, after grouping the first list of candidate matching blocks according to any of the above-described grouping embodiments, one or more fusion modes may be set for the candidate matching block subgroup. It may be understood that one candidate matching block subgroup and one fusion mode are combined into one new candidate matching block subgroup, and two fusion modes are set for one candidate matching block subgroup to form two new candidate matching block subgroups.

Exemplarily, according to the first grouping rule and the second grouping rule, two candidate matching block subgroups, {BV0, BV1, BV2, BV3, BV4}, {BV0, BV1}, are obtained. Two fusion modes are set for each candidate subgroup to obtain four candidate matching block subgroups {BV0, BV1, BV2, BV3, BV4, bFilter = 1}, {BV0, BV1, BV2, BV3, BV4, bFilter = 0}, {BV0, BV1, bFilter = 1}, {BV0, BV1, bFilter = 0}. bFilter = 1 represents the first fusion mode and bFilter = 0 represents the second fusion mode.

Exemplarily, the fusion mode includes a fusion mode of intra template matching based on template derivation and a fusion mode of intra template matching based on a template error value.

The first fusion mode is the fusion mode of intra-frame template matching based on template derivation, and the second fusion mode is the fusion mode of intra-frame template matching based on the template error value. Exemplarily, a grouping result includes: {BV0, BV1, BV2, BV3, BV4, bFilter = 1}, {BV0, BV1, BV2, BV3, BV4, bFilter = 0}, {BV0, BV1, bFilter = 1}, {BV0, BV1, bFilter = 0}. Exemplarily, another grouping result includes: {BV0, BV1, BV2, BV3, BV4, bFilter = 1}, {BV0, BV1, BV2, BV3, BV4, bFilter = 0}, {BV0, BV1, BV2, bFilter = 1}, {BV0, BV1, bFilter = 0}, and so on.

In some embodiments, the encoding and decoding sides previously agree on one grouping rule or a combination of grouping rules.

In some embodiments, the method further includes an operation of decoding the bitstream to determine at least one subgroup rule. Exemplarily, a syntax element for indicating a grouping rule, or for indicating a combination of grouping rules is decoded, the combination of grouping rules includes at least two preset grouping rules.

In some embodiments, when the encoding and decoding sides previously agree on one or more grouping rules, the method includes an operation of decoding the bitstream to determine variable parameters in the grouping rules. Exemplarily, the encoding and decoding sides previously agree on a first grouping rule, and the method includes an operation of decoding a bitstream to determine a first preset number. The method further includes an operation of decoding the bitstream to determine the number of subgroups.

That is, one or more grouping rules may be set. For example, one grouping rule is to use up to M1 matching blocks for fusion. For example, M1 is equal to 3. Every M1 matching blocks in the list of candidate matching blocks are set as one subgroup. Another grouping rule is to use up to M2 matching blocks for fusion. For example, M2 is equal to 2. Every M2 matching blocks in the list of candidate matching blocks are set as one subgroup. These two grouping rules are used alone or in combination to obtain matching block subgroups. One way to select a matching block subgroup is to indicate which group is to be used via an index value. Another way is to reorder these matching block subgroups and then determine a matching block subgroup according to an index value.

Further, the determination of the index value of each candidate matching block subgroup is illustrated by way of example.

In some embodiments, the operation that an index value of each candidate matching block subgroup is determined includes operations that: a first index value of each candidate matching block subgroup is determined according to a subgroup position of the candidate matching block subgroup; and the first index value of each candidate matching block subgroup is taken as the index value of the candidate matching block subgroup. In some embodiments, the smallest first index value is selected as the index value of the first candidate matching block subgroup.

For example, a candidate block in the list of candidate matching blocks is BVn, where n is an integer from 1 to N, or n is an integer from 0 to N-1. The total length of the list of candidate matching blocks is N. Every M matching blocks in the list of candidate matching blocks may be set as one subgroup, and the list of candidate matching blocks may be divided into N/M candidate matching block subgroups in total. For example, M is equal to 3, the i-th candidate matching block subgroup is expressed as {BV(3i), BV1(3i+1), BV2(3i+2)}, and i is an index value of each candidate matching block subgroup. Here, in the embodiments of the present application, i is an integer greater than or equal to 1, and the index value of subgroups is i less than or equal to the number of subgroups.

In some embodiments, the operation that an index value of each candidate matching block subgroup is determined includes operations that: the at least two candidate matching block subgroups is reordered; a second index value of each candidate matching block subgroup is determined according to the reordering position of the candidate matching block subgroup; the second index value of each candidate matching block subgroup is taken as the index value of the candidate matching block subgroup. In some embodiments, the smallest second index value is selected as the index value of the first candidate matching block subgroup.

For example, reordering is performed according to the template error value corresponding to the candidate matching block subgroup. A candidate matching block subgroup having the smallest template error value is ranked first. The smaller the template error value, the smaller a weight value corresponding to the respective matching block subgroup, the greater the probability that a matching block subgroup having a smaller template error value is selected. The number of index value encoded bits may be reduced by the reordering. For example, a candidate block in the list of candidate matching blocks is BVn, where n is an integer from 1 to N, or n is an integer from 0 to N-1. The total length of the list of candidate matching blocks is N. Every M matching blocks in the list of candidate matching blocks may be set as one subgroup, and the list of candidate matching blocks may be divided into N/M candidate matching block subgroups in total. For example, M is equal to 3, the i-th candidate matching block subgroup is expressed as {BV (3i), BV1 (3i +1), BV2 (3i +2)}, and i is an index value of each candidate matching block subgroup. Here, in the embodiments of the present application, i is an integer greater than or equal to 1, and the index number of subgroups is i less than or equal to the number of subgroups. For example, after reordering, if it is determined that the template error value of the second candidate matching block subgroup is the smallest, it is ranked first, and the index value becomes 0. If the second syntax element is used to indicate the index value of the second candidate matching block subgroup, only 0 may be encoded.

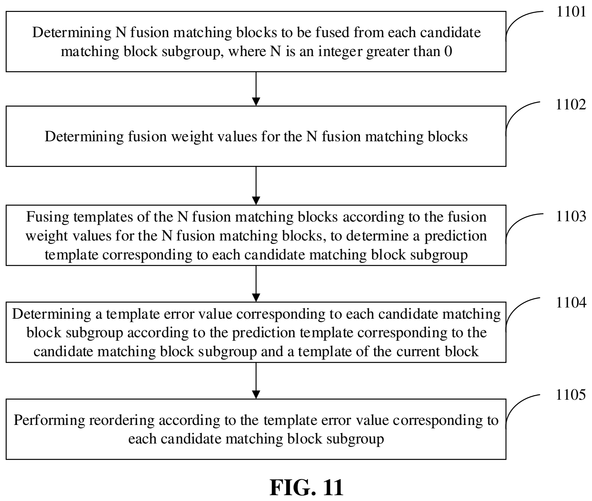

FIG. 11 is a schematic flowchart of a reordering method according to an embodiment of the present application. As shown in FIG. 11, in some embodiments, the operation that the at least two candidate matching block subgroups is reordered includes operations 1101-1105.

At 1101, N fusion matching blocks to be fused is determined from each candidate matching block subgroup, where N is an integer greater than 0.

At 1102, fusion weight values for the N fusion matching blocks are determined.

At 1103, templates of the N fusion matching blocks are fused according to the fusion weight values for the N fusion matching blocks, to determine a prediction template corresponding to each candidate matching block subgroup.

At 1104, a template error value corresponding to each candidate matching block subgroup is determined according to the prediction template corresponding to the candidate matching block subgroup and a template of the current block.

At 1105, reordering is performed according to the template error value corresponding to each candidate matching block subgroup.

Each candidate matching block subgroup is used to perform template prediction in the template region, so that prediction templates corresponding to different candidate matching block subgroups is calculated, and template error values are calculated according to the prediction templates and the template of the current block. The specific method is as follows:

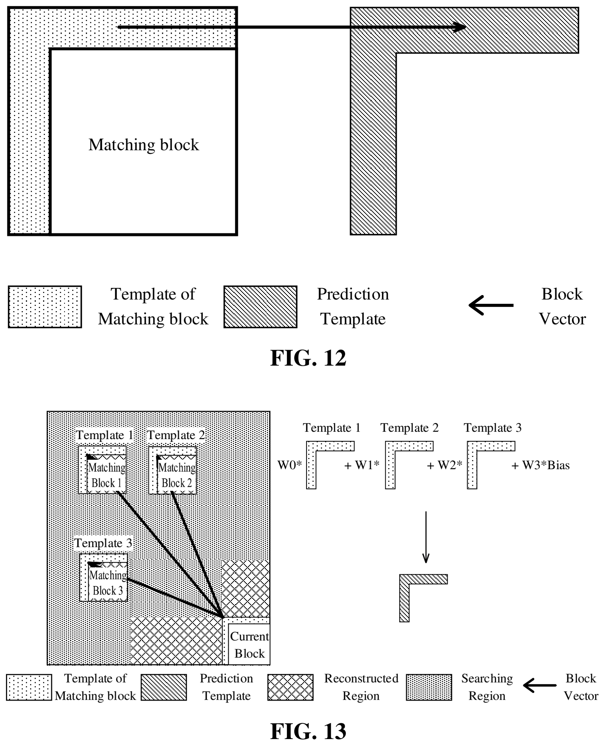

As shown in FIG. 12, prediction for a single matching block is performed in the template region, and the template of the matching block is the prediction template of the template region.

As shown in FIG. 13, fusion prediction for a plurality of matching blocks is performed in the template region. That is, the templates of a plurality of matching blocks are weighted fused to obtain a prediction template. The weighted fusion procedure of the templates should be consistent with the weighted fusion procedure of predicting the current block.

According to the method of predicting in the template region described above, a prediction template of each candidate matching block subgroup in the template region may be obtained. Further, a template error value of each candidate matching block subgroup may be obtained by comparing the prediction template with the template of the current block. According to these template error values, an optimal candidate matching block subgroup may be selected by reordering according to the template error values.

In some embodiments, the operation that the fusion weight values for the N fusion matching blocks are determined includes an operation that the fusion weight values for the N fusion matching blocks are determined according to the fusion mode of the IntraTMP fusion prediction mode for the current block.

In some embodiments, when the fusion mode of the corresponding IntraTMP fusion prediction mode is set for each candidate matching block subgroup, the operation that the fusion weight values for the N fusion matching blocks are determined includes an operation that the fusion weight values for the N fusion matching blocks are determined according to the fusion mode of the IntraTMP fusion prediction mode corresponding to each candidate matching block subgroup.

It should be noted that, since different fusion modes correspond to different derivation methods of weight values, it is necessary to derive the fusion weight value according to the fusion mode of the IntraTMP fusion prediction mode for the current block; the fusion weight values for N fusion matching blocks are determined according to the fusion mode of the IntraTMP fusion prediction mode corresponding to the current candidate matching block subgroup. In the embodiments of the present application, the fusion mode of the current block may be agreed in advance, or may be indicated by transmitting the fourth syntax element.

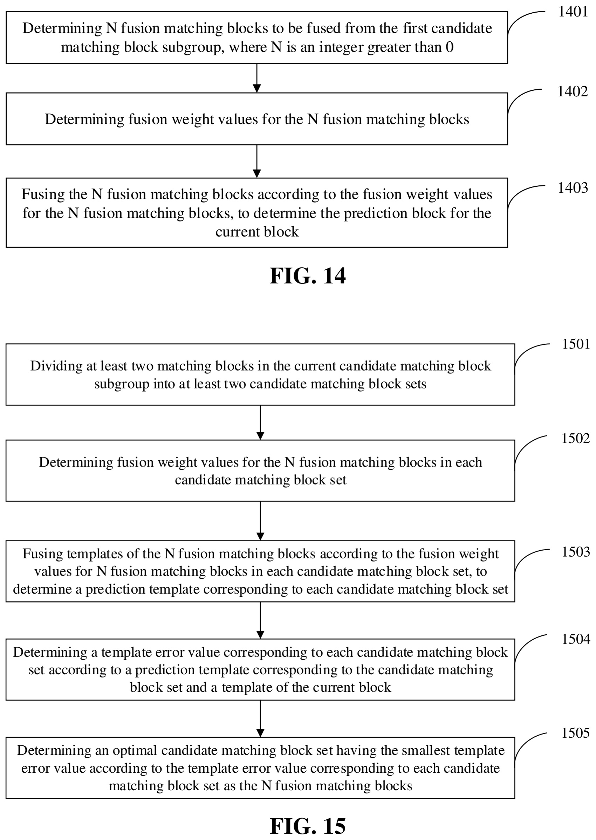

Further, the fusion method of the matching blocks according to the embodiment of the present application will be further described by way of an example. FIG. 14 is a schematic flowchart of a fusion method according to an embodiment of the present application. As shown in FIG. 14, the operation that at least one matching block in a first candidate matching block subgroup is fused to determine the prediction block for the current block includes operations 1401-1403.

At 1401, N fusion matching blocks to be fused are determined from the first candidate matching block subgroup, wherein N is an integer greater than 0.

At 1402, fusion weight values for the N fusion matching blocks are determined.

At 1403, the N fusion matching blocks are fused according to the fusion weight values for the N fusion matching blocks to determine the prediction block for the current block.

It should be noted that N is equal to or less than the number of matching blocks.

In some embodiments, the operation that the N fused matching blocks to be fused are determined in at least one of operations 1101 and 1401 includes operations that: a template error value of each matching block in a current candidate matching block subgroup is determined; a template error threshold is determined according to a threshold coefficient and a template error value of an i-th matching block in the current candidate matching block subgroup, where the i-th matching block is a matching block having the smallest template error value in the current candidate matching block subgroup; and a matching block of which the template error value is less than or equal to the template error threshold is determined as the fusion matching block.

It should be noted that, when the matching block for the current block is predicted, the current candidate matching block subgroup is the first candidate matching block subgroup. when at least two candidate matching block subgroups are reordered and the at least two candidate matching block subgroups are used for template prediction, the current candidate matching block subgroup is a currently selected candidate matching block subgroup.

In some embodiments, the method further includes an operation that the threshold coefficient corresponding to the current candidate matching block subgroup is determined. Not all of the threshold coefficients corresponding to different candidate matching block subgroups are same. Exemplarily, the smaller the index value of the candidate matching block subgroup, the larger the threshold coefficient.

In some embodiments, the operation that the matching block of which the template error value is less than or equal to the template error threshold is determined as the fusion matching block includes operations that when the template error value of the (i+j)-th matching block is greater than the number of matching blocks for the template error threshold, the (i+j)-th fusion matching block is replaced with the i-th matching block in the current candidate matching block subgroup.

For example, according to the template error value of each matching block in the current candidate matching block subgroup, a portion of the matching blocks may be selected for fusion. For example, the candidate matching block subgroup includes three matching blocks, and the threshold value threshold is set according to the template error value $SAD_{3i}$ corresponding to $BV_{3i}$. When

$$threshold = a * SAD_{3i+j}$$

$$SAD_{3i+j} \leq threshold, \ j > 0$$

are satisfied, the corresponding $BV_{3i+j}$ is used for fusion prediction, thereby determining the number of matching blocks to be fused. $SAD_{3i}$ corresponds to the minimum template error value for the matching blocks in the candidate matching block subgroup, a may be any preset value, such as 1.2, 1.5, or 2. If $SAD_{3i+j}$ all are less than or equal to the threshold, the fusion form is as follows:

$$pred = w0 * BV_{3i} + w1 * BV_{3i+1} + w2 * BV_{3i+2} + w3 * Bias$$

If there is a matching block of which template error value is greater than the threshold, for example, $SAD_{3i+2} >$ threshold, at this time, the fusion coefficient derivation and weighting calculation may be performed by replacing $BV_{3i+2}$ with $BV_{3i}$. That is, the coefficients w0 to w3 may be derived by using the templates of $BV_{3i}$, $BV_{3i+1}$ and $BV_{3i}$ as inputs and using the template of the current block as an output. The fusion form is as follows:

$$pred = w0 * BV_{3i} + w1 * BV_{3i+1} + w2 * BV_{3i} + w3 * Bias$$

If the number N of matching blocks to be fused less than the maximum number M of matching blocks to be fused, only the N matching blocks may be used to derive coefficients and calculate weighting, for example, N = 2, and the fusion form is as follows:

$$Pred = w0 * BV0 + w1 * BV1 + w2 * Bias$$

FIG. 15 is a schematic flowchart of a method for determining a fusion matching block according to an embodiment of the present application. As shown in FIG. 15, the operation that N fusion matching blocks to be fused are determined in operations 1101 and 1401 includes operations 1501-1505.

At 1501, the matching blocks in the current candidate matching block subgroup are divided into at least two candidate matching block sets. Each candidate matching block set includes N fusion matching blocks to be fused, and not all of the number of fusion matching blocks of different candidate matching block sets ate the same and not all of the fusion matching blocks of different candidate matching block sets are the same.

At 1502, fusion weight values for the N fusion matching blocks in each candidate matching block set are determined.

At 1503, templates of the N fusion matching blocks are fused according to the fusion weight values for N fusion matching blocks in each candidate matching block set, and a prediction template corresponding to each candidate matching block set is determined.

At 1504, a template error value corresponding to each candidate matching block set is determined according to a prediction template corresponding to the candidate matching block set and a template of the current block.

At 1505, an optimal candidate matching block set having the smallest template error value is determined according to the template error value corresponding to each candidate matching block set; and matching blocks in the optimal candidate matching block set are taken as the N fusion matching blocks.

It should be noted that, when the matching block of the current block is predicted, the current candidate matching block subgroup is the first candidate matching block subgroup. When at least two candidate matching block subgroups are reordered and the at least two candidate matching block subgroups are used for template prediction, the current candidate matching block subgroup is a currently selected candidate matching block subgroup.

Exemplarily, the current candidate matching block subgroup includes three matching blocks {BV(3i), BV1(3i +1), BV2(3i +2)}, and the candidate matching block sets that may be attempted for template prediction are {BV(3i)}, {BV(3i), BV1(3i +1)}, {BV(3i), BV1(3i+1), BV2(3i+2)}, and weight values for each set are derived for a specific fusion mode. The optimal candidate matching block set is determined, and the matching blocks in the optimal candidate matching block set are used for fusion to determine the prediction block for the current block.

In some embodiments, the operation that the N fusion matching blocks to be fused are determined in operations 1101 and 1401 includes an operation that: the N fusion matching blocks to be fused are determined, which includes an operation that first N matching blocks in the current candidate matching block subgroup are used as the N fusion matching blocks, where N is less than or equal to the number of matching blocks in the current candidate matching block subgroup. That is, if the number N of the fusion matching blocks is less than the number M of matching blocks, only N matching blocks may be used to derive the fusion weight value and perform the weighting calculation. If the number N of the fusion matching blocks is equal to the number M of matching blocks, all matching blocks may be used to derive the fusion weight value and perform the weighting calculation. For example, the number of the fusion matching blocks N = 3, BV0, BV1, and BV2 are always fused.

In some embodiments, the method further includes an operation of decoding a bitstream to determine a value N of the number of fusion matching blocks. Exemplarily, the related syntax element further includes a syntax element intra_tmp_fusion_num, which is used to indicate the value N of the number of fusion matching blocks.

In some embodiments, the fusion weight values for the N fusion matching blocks in at least one of operations 1102, 1402, and 1502 are predefined fixed values.

In some embodiments, an operation that the fusion weight values for the N fusion matching blocks are determined in at least one of operations 1102, 1402, and 1502 may include an operation that the fusion weight values for the N fusion matching blocks are determined according to the fusion mode of the IntraTMP fusion prediction mode corresponding to the current candidate matching block subgroup. The fusion mode is a fusion mode of intra template matching based on template derivation or a fusion mode of intra template matching based on a template error value.

It should be noted that different fusion modes correspond to different weighted fusion methods and fusion weight value derivation methods. Therefore, in determining the fusion weight value for each fusion matching block, it is necessary to determine the derivation method of the weight value according to the fusion mode of the IntraTMP fusion prediction mode corresponding to the current candidate matching block subgroup.

In some embodiments, the fusion mode is the fusion mode of intra template matching based on template derivation, and the operation that the fusion weight values for N fusion matching blocks are determined includes an operation that: the fusion weight values for N fusion matching blocks and fusion weight values for bias parameters are determined according to templates of N fusion matching blocks, a template of the current block, and bias parameters.

The operation that the N fusion matching blocks are fused according to the fusion weight values for the N fusion matching blocks to determine the prediction block for the current block includes an operation that the N fusion matching blocks and the bias parameters are fused according to the fusion weight values for the N fusion matching blocks and the fusion weight values for the bias parameters to determine the prediction block for the current block.

Exemplarily, in the IntraTMP fusion method based on template derivation, a method similar to filter coefficient training is used to perform training based on a template of each matching block and the template of the current block, obtain the weight values for fusion prediction. For example, a candidate matching block subgroup or a candidate matching block set includes three matching blocks, denoted as {BV(3i), BV1(3i+1), BV2(3i+2)}, and the fusion form is as follows:

$$\text{pred} = \text{w0}* BV_{3*i} + \text{w1}* BV_{3*i} + \text{w2}* BV_{3*i+2} + \text{w3}*\text{Bias}$$

A set of weight values w0 to w3 is derived by taking templates of matching blocks BV(3i), BV1(3i+1) and BV2(3i+2) as input, taking the template of the current block template as the output pred, and taking Bias as a fixed value, such as the median value of the pixel range. When the matching blocks are fused, the prediction block for the current block is obtained by using the same fusion method based on the reconstruction values of the matching blocks BV(3i), BV1(3i+1) and BV2(3i+2) and the weight values w0 to w3. Alternatively, when the templates of the matching blocks are fused, a prediction template is obtained by using the same fusion method based on the reconstruction values of the templates of the matching blocks BV(3i), BV1(3i+1) and BV2(3i+2) and the weight values w0 to w3.

In some embodiments, the fusion mode is a fusion mode of intra-frame template matching based on the template error value, and the operation that the fusion weight values for N fusion matching blocks are determined includes operations that: template error values of N fusion matching blocks are determined according to templates of N fusion matching blocks and a template of the current block; an accumulated sum of the template error values of the N fusion matching blocks is determined according to the template error values of the N fusion matching blocks; and the fusion weight values for the N fusion matching blocks are determined according to the template error values and the accumulated sum of the template error values of the N fusion matching blocks.

For example, the template error values between the templates of N matching blocks and the template of the current block are SADs, which are SAD1 to SADn, respectively, and a weight calculation method is as follows:

$$SADi = (SADi == 0) ? 1 : SADi$$

$$SUM = \sum_{i=1}^{n} SAD_i$$

$$Wi = ( SUM - SADi ) / (( n - 1 ) * SUM )$$

Where n is the total number of matching blocks (i.e. N), and Wi is a weight value corresponding to a matching block of which a template error value is SADi. The fusion form is as follows:

$$Pr\,ed = \sum_{i=1}^{n} W_i \times Pr\,edi$$

Where pred is a prediction block or a prediction template, and Predi is a matching block or a template of the matching block. According to the above fusion method, the fused template error value corresponding to each matching block subgroup is obtained. All matching block subgroups are reordered from small to large according to the template error values, that is, the smaller the template error value of a matching block subgroup, the smaller the index value corresponding to the matching block subgroup. The selected candidate matching block subgroup is obtained according to the determined index value, and the selected candidate matching block subgroup and the corresponding weight values are used to complete weighted fusion prediction of the current block to obtain a final prediction block.

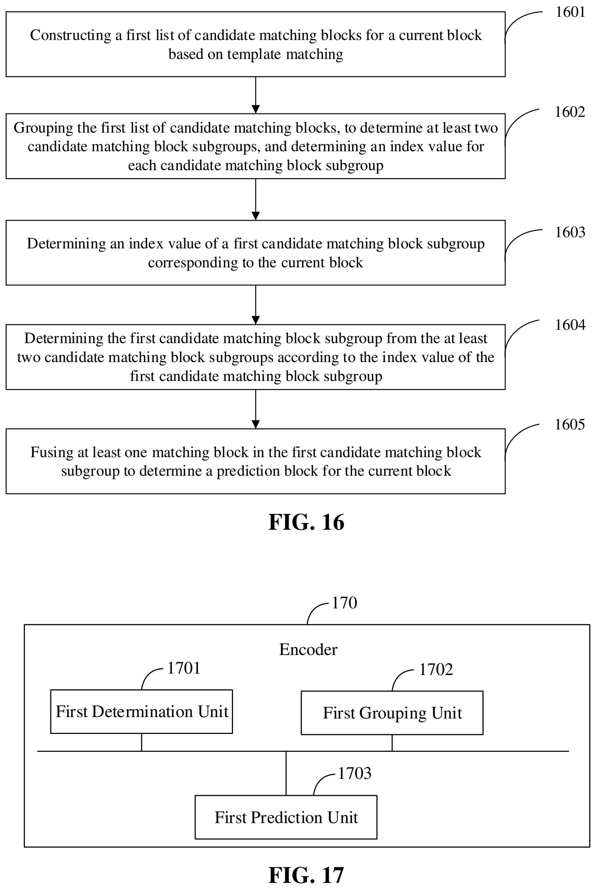

In still another embodiment of the present application, an encoding method is provided. Reference is made to FIG. 16 which shows a schematic flowchart of an encoding method according to an embodiment of the present application. As shown in FIG. 16, the method further includes operations 1601-1605.

At 1601, a first list of candidate matching blocks for the current block is constructed based on template matching.

Possible matching blocks in a preset search range are searched for according to a preset search method. Template error values corresponding to the matching blocks are calculated according to templates of the matching blocks and a template of the current block. Then a list of candidate matching blocks is constructed according to the template error values corresponding to all matching blocks. Exemplarily, in the list of candidate matching blocks, candidate matching blocks may be ordered from smallest to largest according to the template error values.

At 1602, the first list of candidate matching blocks is grouped, to determine at least two candidate matching block subgroups, and an index value of each candidate matching block subgroup is determined.

Exemplarily, the first list of candidate matching blocks is grouped according to at least one grouping rule. Each grouping rule specifies the number of subgroups, the number of matching blocks in each candidate matching block subgroup, distances between matching blocks in each candidate matching block subgroup, and the like. In the embodiment of the present application, the first list of candidate matching blocks may be grouped by using one or more grouping rules to determine at least two candidate matching block subgroups. The candidate matching block subgroups include at least one matching block.

At 1603, an index value of the first candidate matching block subgroup corresponding to the current block is determined.

Exemplarily, the first candidate matching block subgroup may be a particular candidate matching block subgroup or any one candidate matching block subgroup in the at least two candidate matching block subgroups.

Exemplarily, the index value of the first candidate matching block subgroup may be a preset index value, an index value of an optimal candidate matching block subgroup encoded by the encoder, or an index value corresponding to a reference block. The optimal candidate matching block subgroup is obtained by using the at least two candidate matching block subgroups respectively to perform fusion prediction and selecting it through an encoding decision process such as SATD, RDO. The first candidate matching block subgroup is determined according to the index value. IntraTMP fusion prediction is implemented by using a matching block in the first candidate matching block subgroup, to determine a prediction block for the current block.

At 1604, the first candidate matching block subgroup is determined from the at least two candidate matching block subgroups according to the index value of the first candidate matching block subgroup.

At 1605, at least one matching block in the first candidate matching block subgroup is fused to determine a prediction block for the current block.

In some embodiments, the method further includes determining a related syntax element of the current block according to the index value of the first candidate matching block subgroup corresponding to the current block. Further, the method includes encoding the related syntax element of the current block. Exemplarily, the related syntax element is used to indicate a prediction mode for the current block. In some embodiments, the related syntax element includes: a first syntax element and/or a second syntax element. The first syntax element is used to indicate whether the prediction mode for the current block is an intra template matching prediction (IntraTMP) fusion prediction mode. The second syntax element is used to indicate the index value of the first candidate matching block subgroup.

In some examples, the first syntax element includes a block-level syntax element. In some embodiments, the first syntax element further includes at least one of a stripe-level syntax element, a slice-level syntax element, an image-level syntax element, and a sequence-level syntax element.

In some examples, the second syntax element includes a block-level syntax element. In some embodiments, the second syntax element further includes at least one of a stripe-level syntax element, a slice-level syntax element, an image-level syntax element, and a sequence-level syntax element.

In some embodiments, the related syntax element further includes a syntax element for indicating whether an IntraTMP prediction mode is allowed to be used for the prediction of the current block, a syntax element for indicating whether the current block is predicted using an IntraTMP fusion prediction mode, and a syntax element for indicating whether the current block is predicted using an IntraTMP multi-candidate prediction mode. In practical applications, the related syntax element may be one or more of a block-level syntax element, a stripe-level syntax element, a slice-level syntax element, an image-level syntax element, and a sequence-level syntax element.

In some embodiments, it is determined that the prediction mode for the current block is an IntraTMP fusion prediction mode and the encoding method of operations 1601 to 1605 of the embodiments of the present application is executed.

In some embodiments, the first syntax element is encoded. In some embodiments, the second syntax element is encoded. In some embodiments, the first syntax element and the second syntax element are encoded. Exemplarily, when it is determined that the current block is predicted using the IntraTMP prediction mode, the first syntax element and the second syntax element are encoded. Exemplarily, when it is determined that the IntraTMP fusion prediction mode is allowed to be used for the prediction of the current block, the first syntax element and the second syntax element are encoded. It should be noted that, if it is necessary to encode the first syntax element and the second syntax element, the encoding order for the two syntax elements is not strictly limited.

In some embodiments, when a value of the first syntax element is a first value, it is determined that the prediction mode for the current block is an IntraTMP fusion prediction mode, and the index value of the first candidate matching block subgroup corresponding to the current block is determined according to the second syntax element.

It should be noted that the IntraTMP fusion prediction mode may be a fusion mode based on at least one matching block, which may also be referred to as an IntraTMP multi-matching block fusion prediction mode. In practical application, the number of fusion matching blocks to be fused may be determined according to the selected fusion mode, grouping rules for matching blocks, etc.

In some embodiments, when the value of the first syntax element is a second value, it is determined that the prediction mode for the current block is another IntraTMP prediction mode other than the IntraTMP fusion prediction mode. Exemplarily, the another IntraTMP prediction mode may be an IntraTMP multi-candidate prediction mode based on a single matching block, in which one matching block is selected from a plurality of candidate matching blocks, and the selected matching block is used to obtain a prediction block.

In some embodiments, when the value of the first syntax element is a second value, it is determined that the prediction mode for the current block is an IntraTMP multi-candidate prediction mode based on a single matching block, and an index value of an optimal matching block corresponding to the current block is determined according to the second syntax element. That is, the second syntax element may be used to indicate the index value of the first candidate matching block subgroup, or may also be used to indicate the index value of the optimal matching block corresponding to the current block. The content indicated by the second syntax element depends on the prediction mode for the current block. According to different usage, different index value ranges or a same index value range may be set for the second syntax element.

Exemplarily, the first value may be 1 and the second value may be 0. Exemplarily, the first value may be 0 and the second value may be 1.

Exemplarily, a related syntax element includes:

**intra_tmp_flag**

If( intra_tmp_flag)

{

**intra_tmp_fusion_flag**

**intra_tmp_fusion_idx**

}

When an IntraTMP related syntax element is encoded, first, intra_tmp_flag is decoded. If intra_tmp_flag is true, it indicates that the current block is encoded in the IntraTMP mode. Further, intra_tmp_fusion_flag (having the function of the first syntax element) and intra_tmp_fusion_idx (having the function of the first syntax element) are encoded. If intra_tmp_fusion_flag is true, it indicates that the current block is predicted using the IntraTMP fusion prediction mode, and which group of matching blocks is used for fusion prediction is determined according to intra_tmp_fusion_idx. If intra_tmp_fusion_flag is false, it indicates that the current block is predicted using the IntraTMP multi-candidate prediction mode based on a single matching block, and intra_tmp_fusion_idx is used to determine the selected optimal matching block.

In some embodiments, the operation that the related syntax element of the current block is encoded includes the following operations. The first syntax element is encoded. When a value of the first syntax element is a first value, it is determined that the prediction mode for the current block is an IntraTMP fusion prediction mode. Then, the second syntax element is encoded. An index value of the first candidate matching block subgroup corresponding to the current block is determined according to the second syntax element.

Exemplarily, a related syntax element includes:

**intra_tmp_flag**

If (intra_tmp_flag)

{

**intra_tmp_fusion_flag**

If (intra_tmp_fusion_flag) {

**intra_tmp_fusion_idx**

}

}

An IntraTMP related syntax element is encoded. If intra_tmp_flag is true, it indicates that the current block is encoded in the IntraTMP mode. Further, intra_tmp_fusion_flag is encoded. If intra_tmp_fusion_flag is true, it indicates that the current block is predicted using the IntraTMP fusion prediction mode. Further, intra_tmp_fusion_idx is encoded to determine which group of matching blocks is used for fusion prediction. The value of intra_tmp_fusion_idx should be related to the grouping rule. For example, when the total number of candidate matching block subgroups is 15, intra_tmp_fusion_idx may be 0 to 14, or intra_tmp_fusion_idx may be 0 to N, where N is less than 14. A variable length encoding scheme may be used for intra_tmp_fusion_idx. The smaller the index is, the shorter the corresponding bin. The smaller the index value is, the smaller the template error value of the corresponding candidate matching block, and the higher the probability of being selected. A shorter bin may be set for a smaller index value. For example, encoding is performed by using the following table:

| intra_tmp_fusion_idx | Binary symbol | | | | |
|---|---|---|---|---|---|
| 0 | 1 | 1 | | | |
| 1 | 1 | 0 | 0 | | |
| 2 | 1 | 0 | 1 | | |
| 3~6 | 0 | x | x | x | |
| 7~14 | 0 | x | x | x | x |

Indexes 3~6 use bins with the same length, and indexes 7~14 use bins with the same length. The x in the above table may be obtained using truncated binary. For example, intra_tmp_fusion_idx may take 0 to 4, encoding is performed by using the following table:

| intra_tmp_fusion_idx | Binary symbol | | | | |
|---|---|---|---|---|---|
| 0 | 0 | | | | |
| 1 | 1 | 0 | | | |
| 2 | 1 | 1 | 0 | | |
| 3 | 1 | 1 | 1 | 0 | |
| 4 | 1 | 1 | 1 | 1 | |

The encoding method for a bin in intra_tmp_fusion_idx includes an operation that a bin is encoded with equal probability, a bin is encoded based on a context model, or a bin is encoded based on multiple context models.

In some embodiments, the method further includes operations that: a encoding decision is performed based on a prediction block corresponding to each candidate matching block subgroup for the current block and an original block, to determine an optimal candidate matching block subgroup; when the index value of the first candidate matching block subgroup is not an index value of the optimal candidate matching block subgroup, the index value of the optimal candidate matching block subgroup is used as the index value of the first candidate matching block subgroup; and the second syntax element is determined according to the index value of the first candidate matching block subgroup.

It should be noted that the encoding side and the decoding side use the same matching block subgroup method and use the same process to perform fusion prediction on each group of matching blocks, respectively, and the encoding side may select an optimal prediction mode through an encoding decision process such as SATD and RDO, determine the values of the first syntax element and the second syntax element, encode the first syntax element and the second syntax element, and signal the encoded bits into the bitstream, to complete the encoding process of the current block.

In some embodiments, the related syntax element further includes a third syntax element. The third syntax element is used to indicate an index value of an optimal matching block corresponding to the current block. An operation that the related syntax element of the current block is encoded further includes operations that: when the value of the first syntax element is the second value, it is determined that the prediction mode for the current block is an IntraTMP multi-candidate prediction mode based on a single matching block, and the third syntax element of the current block is encoded; then, the index value of the optimal matching block corresponding to the current block is determined according to the third syntax element. That is, intra_tmp_fusion_idx and intra_tmp_idx may be encoded in different ways according to intra_tmp_fusion_flag.

Exemplarily, a related syntax element includes:

**intra_tmp_flag**

If (intra_tmp_flag)

{

   **intra_tmp_fusion_flag**

   If (intra_tmp_fusion_flag) {

      **intra_tmp_fusion_idx**

   } else {

      **intra_tmp_idx**

   }

}

An IntraTMP related syntax element is encoded. If intra_tmp_flag is true, it indicates that the current block is encoded in IntraTMP mode. Further, intra_tmp_fusion_flag is encoded. If intra_tmp_fusion_flag is true, it indicates that the current block is predicted using the IntraTMP fusion prediction mode. Further, intra_tmp_fusion_idx (having the function of the second syntax element) is encoded to determine which group of matching blocks is used for fusion prediction. If intra_tmp_fusion_flag is false, it indicates that the IntraTMP multi-candidate prediction mode for a single matching block is used for the current block. Further, intra_tmp_idx (having the function of the third syntax element) indicating that the index of the selected matching block in the list of candidate matching blocks is encoded. For example, if intra_tmp_idx is equal to i, then the (i+1)-th matching block in the list of candidate matching blocks is the selected matching block, where the value of i starts from 0, and the index value starts from 1. Alternatively, if intra_tmp_idx is equal to i, then the i-th matching block in the list of candidate matching blocks is the selected matching block, where the value of i starts from 0, and the index value also starts from 0.

If intra_tmp_fusion_idx and intra_tmp_idx are encoded in different ways according to intra_tmp_fusion_flag, a list of candidate matching blocks with different lengths may be constructed according to intra_tmp_fusion_flag. For example, if intra_tmp_fusion_flag is true, a list with length N1 is constructed. If intra_tmp_fusion_flag is false, a list with length N2 is constructed, where N1 and N2 may be preset fixed values or values of N1 and N2 may be signalled in the bitstream.

In some embodiments, when it is determined that the prediction mode for the current block is the IntraTMP multi-candidate prediction mode based on a single matching block, the method further includes operations that the optimal matching block is determined from a second list of candidate matching blocks according to the index value of the optimal matching block, and, the prediction block for the current block is determined according to the optimal matching block.

In some embodiments, the method further includes an operation that the second list of candidate matching blocks for the current block is constructed based on the template matching. A length of the second list of candidate matching blocks is not equal to the length of the first list of candidate matching blocks. In some embodiments, the length of the second list of candidate matching blocks is equal to the length of the first list of candidate matching blocks. Or it may be understood as that the first list of candidate matching blocks and the second list of candidate matching blocks are the same list of candidate matching blocks.

In some embodiments, the second syntax element is further used to indicate a fusion mode of the IntraTMP fusion prediction mode for the current block. For example, if the first candidate matching block subgroup is provided with a corresponding fusion mode of the IntraTMP fusion prediction mode, then according to an index value of the first candidate matching block subgroup, the first candidate matching block subgroup may be indexed, and a corresponding fusion mode of the IntraTMP fusion prediction mode may also be indexed. Different fusion modes correspond to different selection methods, weighted fusion methods, fusion weight values, etc. for the matching block. Exemplarily, the fusion mode includes a fusion mode of intra template matching based on template derivation and a fusion mode of intra template matching based on a template error value.

For example, the total length of the list of candidate matching blocks is N, and every M matching blocks in the list of candidate matching blocks may be set as one subgroup, and the list of candidate matching blocks may be divided into N/M candidate matching block subgroups in total. More than one fusion mode is set for each candidate matching block subgroup, to extend the candidate matching block subgroup. When the same candidate matching block subgroup is set with two fusion modes, it may be regarded as two candidate matching block subgroups. {BV0, BV1, BV2, BV3, BV4, bFilter = 1}, {BV0, BV1, BV2, BV3, BV4, bFilter = 0}, {BV0, BV1, BV2, bFilter = 1}, {BV0, BV1, bFilter = 0}. bFilter = 1 represents a first fusion mode and bFilter = 0 represents a second fusion mode. When the first candidate matching block subgroup is indexed according to the index value, the corresponding fusion mode may also be indexed.

In some embodiments, the related syntax element further comprises a fourth syntax element. The method further includes operation of encoding the fourth syntax element. The fourth syntax element is used to indicate a fusion mode of the IntraTMP fusion prediction mode for the current block, or to indicate whether to filter a selected matching block.

In some embodiments, the first syntax element and the fourth syntax element are encoded. In some embodiments, the second syntax element and the fourth syntax element are encoded. In some embodiments, the third syntax element and fourth syntax element are encoded. In some embodiments, the first syntax element, the second syntax element, and the fourth syntax element are encoded.

In some embodiments, when it is determined that the prediction mode for the current block is an IntraTMP fusion prediction mode, a fusion mode of the IntraTMP fusion prediction mode for the current block is determined according to the fourth syntax element. When it is determined that the prediction mode for the current block is the IntraTMP multi-candidate prediction mode based on a single matching block, whether to filter the selected matching block is determined according to the fourth syntax element.

Exemplarily, a related syntax element includes:

**intra_tmp_flag**

If (intra_tmp_flag) {

    **intra_tmp_fusion_flag**

    **intra_tmp_filter_flag**

    **intra_tmp_idx**

    }

An IntraTMP-related syntax element is encoded. If intra_tmp_flag is true, it indicates that the current block is encoded in an IntraTMP mode. Further, intra_tmp_fusion_flag, intra_tmp_filter_flag, and intra_tmp_idx (having the function of the second syntax element, which may also be referred to as intra_tmp_fusion_idx) are encoded. If intra_tmp_fusion_flag is true, it indicates that the current block is predicted using the IntraTMP fusion prediction mode, which group of matching blocks is used for fusion prediction is determined according to intra_tmp_idx, and intra_tmp_filter_flag indicates the fusion mode. If intra_tmp_fusion_flag is false, intra_tmp_idx indicates that the prediction method of a single matching block is used for the current block, and intra_tmp_filter_flag indicates whether to filter the single matching block. Exemplarily, if intra_tmp_filter_flag is true, it indicates that the IntraTMP fusion mode based on template derivation is used. If intra_tmp_filter_flag is false, it indicates that the IntraTMP fusion mode based on a template error value is used.

In some embodiments, it is determined that the prediction mode for the current block is an IntraTMP fusion prediction mode and the fourth syntax element is decoded. The fourth syntax element is used to indicate a fusion mode of the IntraTMP fusion prediction mode for the current block.

Exemplarily, a related syntax element includes:

**intra_tmp_flag**

If (intra_tmp_flag)

  {

    **intra_tmp_fusion_flag**

    If (intra_tmp_fusion_flag) {

      **intra_tmp_filter_flag**

      **intra_tmp_fusion_idx**

    }

  }

An IntraTMP related syntax element is encoded. If intra_tmp_flag is true, it indicates that the current block is encoded in the IntraTMP mode. Further, intra_tmp_fusion_flag is encoded. If intra_tmp_fusion_flag is true, it indicates that the current block is predicted using the IntraTMP fusion prediction mode. Further, intra_tmp_filter_flag (having the function of the fourth syntax element) and intra_tmp_fusion_idx are encoded, intra_tmp_filter_flag indicates a fusion mode, and intra_tmp_fusion_idx is used to determine which group of matching blocks is used for fusion prediction. Exemplarily, if intra_tmp_filter_flag is true, it indicates that the IntraTMP fusion mode based on template derivation is used. intra_tmp_fusion_idx is used to determine which group of matching blocks is used for fusion prediction, and the fusion is performed by using the group of matching blocks and the corresponding weight values to obtain a final prediction block. If intra_tmp_filter_flag is false, it indicates that the IntraTMP fusion mode based on a template error value is used, intra_tmp_fusion_idx is used to determine which group of matching blocks is used for fusion prediction, and the fusion is performed by using the group of matching blocks and the corresponding weight values to obtain a final prediction block.

In some embodiments, it is determined that the prediction mode for the current block is the IntraTMP multi-candidate prediction mode based on a single matching block, and the fourth syntax element is encoded. According to the fourth syntax element, it is determined whether to filter the selected matching block.

Exemplarily, a process of encoding the syntax element includes:

**intra_tmp_flag**

If (intra_tmp_flag) {

**intra_tmp_fusion_flag**

If (! intra_tmp_fusion_flag) {

**intra_tmp_filter_flag**

}

**intra_tmp_idx**

}

An IntraTMP related syntax element is encoded. If intra_tmp_flag is true, it indicates that the current block is encoded in IntraTMP mode. Further, intra_tmp_fusion_flag is encoded. If intra_tmp_fusion_flag is false, it indicates that an IntraTMP multi-candidate prediction mode for a single matching block is used for the current block. Further, intra_tmp_filter_flag is encoded, to determine whether to filter the selected matching block. Further, intra_tmp_idx is encoded, to determine the selected optimal matching block. If intra_tmp_fusion_flag is true, it indicates that the current block is predicted using the IntraTMP fusion prediction mode. Then, intra_tmp_idx is further encoded to determine which group of matching blocks is used for fusion prediction. In some embodiments, encoding intra_tmp_idx may also be performed before determining that intra_tmp_fusion_flag is true or false.

In some embodiments, the related syntax element further includes a fourth syntax element and a fifth syntax element. The method further includes operations that: it is determined that the prediction mode for the current block is an IntraTMP fusion prediction mode and the fourth syntax element is encoded, the fourth syntax element is used to indicate a fusion mode of the IntraTMP fusion prediction mode for the current block; it is determined that the prediction mode for the current block is an IntraTMP multi-candidate prediction mode based on the single matching block and the fifth syntax element is encoded, the fifth syntax element is used to indicate whether to filter the selected matching block. That is, different syntax elements may be set, respectively for indicating the fusion mode of the IntraTMP fusion prediction mode for the current block, and for indicating whether to filter the selected matching block.

In some embodiments, an index range of the index value of the first candidate matching block subgroup is smaller than an index range corresponding to at least two candidate matching block subgroups. Exemplarily, the index range corresponding to the two candidate matching block subgroups is 0-5, and the index range of the index value of the first candidate matching block subgroup is 0-2, that is, the transmitted second syntax element is only used to indicate a candidate matching block subgroup having the index value of 0-2. That is, the value of intra_tmp_fusion_idx may be smaller than or equal to the number of candidate matching block subgroups. If all possible matching block subgroups are reordered, the first N combinations thereof are indicated by either intra_tmp_fusion_idx or intra_tmp_idx. That is, the value range of intra_tmp_fusion_idx or intra_tmp_idx is 0-N-1, and the number of the matching block subgroups which are reordered is M, where M > N.

In some embodiments, when the fusion mode includes a first fusion mode and a second fusion mode, the method further includes operations that: when the fourth syntax element is used to indicate that the fusion mode of the IntraTMP fusion prediction mode for the current block is the first fusion mode, the second syntax element is determined according to the index value of the first candidate matching block subgroup; when the fourth syntax element indicates that the fusion mode of the IntraTMP fusion prediction mode for the current block is the second fusion mode, the second syntax element is determined according to the index value of the first candidate matching block subgroup and an index offset value.

It should be noted that, when the second syntax element is used to indicate only index values of some candidate matching block subgroups, more candidate matching block subgroups may be indicated according to the fourth syntax element. For example, the index range corresponding to the two candidate matching block subgroups is 0-5, the index range of the index value of the first candidate matching block subgroup is 0-2, the index range of the second syntax element is 0-2 when the fourth syntax element is used to indicate the first fusion mode, and the index range of the value of the second syntax element plus the index offset value is 3-5 when the fourth syntax element is used to indicate the second fusion mode. It is also understood that the candidate matching block subgroup having an index range of 0-2 correspond to the first fusion mode, and the candidate matching block subgroup having an index range of 3-5 corresponds to the second fusion mode.

In some embodiments, candidate matching block subgroups having an index range of 0-2 and an index range of 3-5 may be obtained by performing grouping according to the same grouping rule, or by performing grouping according to different grouping rules.

In some embodiments, it is determining that the current block is predicted using the IntraTMP fusion prediction mode, the method further includes operations that the index value of the first candidate matching block subgroup corresponding to the current block is stored; or, a preset matching block in the first candidate matching block subgroup corresponding to the current block is stored. For example, a certain BV in the matching block subgroup indicated by intra_tmp_fusion_idx may be stored for reference by other decoding blocks. For example, intra_tmp_fusion_idx = i, the (i*3+1)-th BV in the list of candidate blocks is stored. Exemplarily, other decoding blocks use the index value of the first candidate matching block subgroup corresponding to the current block as the index value used by themselves.

In some embodiments, the method further includes an operation that a sixth syntax element is encoded. The sixth syntax element is used to indicate whether some or all of the related syntax elements for the current block are encoded.

In some embodiments, the sixth syntax element includes at least one of a sequence-level syntax element, a picture-level syntax element, a slice-level syntax element, a stripe-level syntax element, or a block-level syntax element.

It should be noted that some or all of the related syntax elements may be controlled by one or more of the block-level syntax element, the stripe-level syntax element, the slice-level syntax element, the picture-level syntax element and the sequence-level syntax element. That is, a corresponding sixth syntax element may be set for each of the related syntax elements, or a corresponding sixth syntax element may be set for two or more of the related syntax elements, or a corresponding sixth syntax element may be set for all of the related syntax elements. For example, when the related syntax element is a block-level syntax element, the sixth syntax element may be a picture-level and/or sequence-level syntax element.

Further, the construction of the list of candidate matching blocks is illustrated.

In some embodiments, N candidate matching blocks are searched in the search area by template matching, or a list of candidate blocks with length N is constructed by sorting from small to large according to the template error values of the N candidate matching blocks. A template matching process for constructing the list of candidate blocks is as follows. In a first step, first searching is performed with a certain step size (for example, the horizontal step size and the vertical step size are both 4), to obtain N optimal matching blocks with a certain spacing (the first N with the smallest template error value). In a second step, second searching is performed on adjacent regions of the N matching blocks obtained in the first step, and these adjacent regions may be set as a plurality of non-overlapping regions according to the step size in the first step. M optimal matching blocks (which may contain the matching blocks obtained in the first step) are obtained from these regions.

Further, a method of grouping the first list of candidate matching blocks according to the embodiments of the present application will be described by way of example.

In some embodiments, the operation that the first list of candidate matching blocks is grouped includes operation that the first list of candidate matching blocks is grouped according to at least one grouping rule. Each grouping rule specifies the number of subgroups, the number of matching blocks in each candidate matching block subgroup, the distance between matching blocks in each candidate matching block subgroup, and the like.

In some embodiments, the at least one grouping rule includes a first grouping rule. The first grouping rule includes that: starting from the first matching block in the first list of candidate matching blocks, every first preset number of matching blocks are set as one candidate matching block subgroup. The first preset number is an integer greater than 0. Here, the first preset number is the number of matching blocks in each candidate matching block subgroup.

The maximum length of the list of candidate matching blocks constructed by the template matching process is N. For example, N is equal to 45. The fusion prediction may use at most M matching blocks for fusion. For example, M is equal to 3. The first preset number is set to 3, and every M matching blocks in the list of candidate matching blocks may be set to 1 group according to the first grouping rule, and a total of N/M = 15 groups is divided. If the total length N of the list of candidate matching blocks may not be divisible by the maximum fusion number M, the number of matching blocks in the last group should be less than M, and the other matching blocks in the list of candidate matching blocks may be added to the group. That is, the first grouping rule further includes that: if the number of matching blocks in the last candidate matching block subgroup is less than the first preset number, preset matching blocks are obtained from the first list of candidate matching blocks and are added to the last candidate matching block subgroup, so that the number of matching blocks in the last candidate matching block subgroup is equal to the first preset number.

The at least one grouping rule includes a second grouping rule. The second grouping rule includes that: starting from the first matching block in the first list of candidate matching blocks, every second preset number of matching blocks are set as one candidate matching block subgroup. The second preset number is an integer greater than 0, and the first preset number is different from the second preset number.

The maximum length of the list of candidate matching blocks constructed by the template matching process is N. For example, N is equal to 15. The fusion prediction may use up to M matching blocks for fusion. For example, M is equal to 5. the second preset number is set to 5, and every M matching blocks in the list of candidate matching blocks are set to one group according to the first grouping rule, a total of N/M = 3 groups is divided. Accordingly, the second grouping rule further includes that: if the number of matching blocks in the last candidate matching block subgroup is less than the second preset number, preset matching blocks are obtained from the first list of candidate matching blocks and are added to the last candidate matching block subgroup, so that the number of matching blocks in the last candidate matching block subgroup is equal to the second preset number.

In some embodiments, the at least one grouping rule includes the first grouping rule and the second grouping rule. Exemplarily, the maximum length of the list of candidate matching blocks constructed by the template matching process is N. For example, N is equal to 15. The first preset number is set to 3 and the second preset number is set to 5. At most N/M = 5 groups are obtained according to the first grouping rule, and at most N/M = 3 groups are obtained according to the second grouping rule. The list of candidate matching blocks is grouped according to the first grouping rule and the second grouping rule respectively, to obtain a total of 8 groups.

In some embodiments, each grouping rule further includes a corresponding number of subgroups. For example, when the number of subgroups corresponding to the first grouping rule is 2 and the number of subgroups corresponding to the second grouping rule is 2, the list of candidate matching blocks is grouped according to the first grouping rule and the second grouping rule respectively, to obtain a total of 4 groups. For example, a candidate block in the list of candidate matching blocks is BVn, n is an integer from 1 to N, or n is an integer from 0 to N-1. In some embodiments, i may be an index value of a candidate matching block. Two candidate matching block subgroups obtained according to the first grouping rule are {BV0, BV1, BV2}, {BV3, BV4, BV5}. Two candidate matching block subgroups obtained according to the second grouping rule are {BV0, BV1, BV3, BV2, BV4}, {BV5, BV6, BV7, BV8, BV9}.

In some embodiments, the at least one grouping rule includes a third grouping rule. The third grouping rule includes that the first M1 matching blocks in the first list of candidate matching blocks and every M2 matching blocks starting from the (M1+1)-th matching block are grouped into a candidate matching block subgroup. In some embodiments, the third grouping rule further includes a corresponding number of subgroups.

In some embodiments, the third grouping rule further includes that the values of M2 in different matching block subgroups are equal, or the third grouping rule further includes that not all of the values of M2 in different matching block subgroups are equal.

Exemplarily, BVn (i > N) is combined with the first M1 candidate matching blocks in the list of candidate matching blocks. For example, M1 = 2, M2 = 1, then possible combinations are {BV0, BV1, BV2}, {BV0, BV1, BV3}, {BV0, BV1, BV4}, etc. M1 = 2, then the possible combination is {BV0, BV1, BV2, BV3}, {BV0, BV1, BV4}, {BV0, BV1, BV5}, etc. BVn-BV (n+M2) (n > N) are combined with the first N candidate matching blocks in the list of candidate matching blocks. For example, M1 = 1, M2 = 2, then possible combinations are {BV0, BV1, BV2}, {BV0, BV3, BV4}, {BV0, BV5, BV6}, etc.

In some embodiments, the at least one grouping rule includes a first matching rule and a third grouping rule. The at least one grouping rule includes a first matching rule, a second grouping rule, and a third grouping rule. Exemplarily, each grouping rules further includes a corresponding number of subgroups.

In some embodiments, the at least one grouping rule includes a fourth grouping rule. The fourth grouping rule includes that: the first i matching blocks in the first list of candidate matching blocks are grouped into the i-th candidate matching block subgroup, where i is an integer greater than 0. For example, the first matching block forms the first candidate matching block subgroup, the first two matching blocks form the second candidate matching block subgroup, the first three matching blocks form the third candidate matching block subgroup, the first four matching blocks form the fourth candidate matching block subgroup, and so on. If the maximum length of the list of candidate matching blocks is N, then the maximum value of i is N, and the number of groups may be limited by limiting the maximum value of i.

In some embodiments, a fifth grouping rule includes that: the first $2^1$ matching blocks in the first list of candidate matching blocks form the i-th candidate matching block subgroup. The fifth grouping rule includes that: the first (2i+a) matching blocks in the first list of candidate matching blocks form the i-th candidate matching block subgroup, where a is a positive integer.

In some embodiments, grouping may also be performed based on distances between matching blocks. Exemplarily, the grouping rule further includes that: a distance between any two matching blocks in the candidate matching block subgroup is greater than a first distance threshold. Alternatively, the grouping rule further includes that a distance between any two matching blocks in the candidate matching block subgroup is less than a second distance threshold. By restricting the distance between the matching blocks, the distribution of the matching blocks in the candidate matching block subgroup may be restricted. It should be noted that, when two or more grouping rules are set, each grouping rule is restricted or partially restricted.

In some embodiments, the operation that the first list of candidate matching blocks is grouped includes operations that the first list of candidate matching blocks is grouped according to at least one grouping rule to obtain at least one candidate matching block subgroup; and at least one corresponding fusion mode of the IntraTMP fusion prediction mode is set for each candidate matching block subgroup, to obtain at least two candidate matching block subgroups.

It should be noted that, after the first list of candidate matching blocks is grouped according to any of the above-described grouping embodiments, one or more fusion modes may be set for the candidate matching block subgroup. It may be understood that one candidate matching block subgroup and one fusion mode are combined into one new candidate matching block subgroup, and two fusion modes are set for one candidate matching block subgroup to form two new candidate matching block subgroups.

Exemplarily, according to the first grouping rule and the second grouping rule, two candidate matching block subgroups, {BV0, BV1, BV2, BV3, BV4}, {BV0, BV1}, are obtained. Two fusion modes are set for each candidate subgroup to obtain four candidate matching block subgroups {BV0, BV1, BV2, BV3, BV4, bFilter = 1}, {BV0, BV1, BV2, BV3, BV4, bFilter = 0}, {BV0, BV1, bFilter = 1}, {BV0, BV1, bFilter = 0}. bFilter = 1 represents the first fusion mode and bFilter = 0 represents the second fusion mode.

Exemplarily, the fusion mode includes a fusion mode of intra template matching based on template derivation and a fusion mode of intra template matching based on a template error value.

The first fusion mode is the fusion mode of intra-frame template matching based on template derivation, and the second fusion mode is the fusion mode of intra-frame template matching based on the template error value. Exemplarily, a grouping result includes: {BV0, BV1, BV2, BV3, BV4, bFilter = 1}, {BV0, BV1, BV2, BV3, BV4, bFilter = 0}, {BV0, BV1, bFilter = 1}, {BV0, BV1, bFilter = 0}. Exemplarily, another grouping result includes: {BV0, BV1, BV2, BV3, BV4, bFilter = 1}, {BV0, BV1, BV2, BV3, BV4, bFilter = 0}, {BV0, BV1, BV2, bFilter = 1}, {BV0, BV1, bFilter = 0}, and so on.

In some embodiments, the encoding and decoding sides previously agree on one grouping rule or a combination of grouping rules.

In some embodiments, the method further includes an operation that at least one subgroup rule is determined and a syntax element for the at least one subgroup rule is encoded. Exemplarily, a syntax element for indicating a grouping rule, or for indicating a combination of grouping rules is encoded, the combination of grouping rules includes at least two preset grouping rules.

In some embodiments, when the encoding and decoding sides previously agree on one or more grouping rules, the method includes an operation of encoding variable parameters in the grouping rules. Exemplarily, the encoding and decoding sides previously agree on a first grouping rule, and the method includes an operation of encoding a first preset number. The method further includes an operation of encoding the number of subgroups.

That is, one or more grouping rules may be set. For example, one grouping rule is to use up to M1 matching blocks for fusion. For example, M1 is equal to 3. Every M1 matching blocks in the list of candidate matching blocks are set as one subgroup. Another grouping rule is to use up to M2 matching blocks for fusion. For example, M2 is equal to 2. Every M2 matching blocks in the list of candidate matching blocks are set as one subgroup. These two grouping rules are used alone or in combination to obtain matching block subgroups. One way to select a matching block subgroup is to indicate which group is to be used via an index value. Another way is to reorder these matching block subgroups and then determine a matching block subgroup according to an index value.

Further, the determination of the index value of each candidate matching block subgroup is illustrated by way of example.

In some embodiments, the operation that an index value of each candidate matching block subgroup is determined includes operations that: a first index value of each candidate matching block subgroup is determined according to a subgroup position of the candidate matching block subgroup; and the first index value of each candidate matching block subgroup is taken as the index value of the candidate matching block subgroup. In some embodiments, the smallest first index value is selected as the index value of the first candidate matching block subgroup.

For example, a candidate block in the list of candidate matching blocks is BVn, where n is an integer from 1 to N, or n is an integer from 0 to N-1. The total length of the list of candidate matching blocks is N. Every M matching blocks in the list of candidate matching blocks may be set as one subgroup, and the list of candidate matching blocks may be divided into N/M candidate matching block subgroups in total. For example, M is equal to 3, the i-th candidate matching block subgroup is expressed as {BV(3i), BV1(3i+1), BV2(3i+2)}, and i is an index value of each candidate matching block subgroup. Here, in the embodiments of the present application, i is an integer greater than or equal to 1, and the index value of subgroups is i less than or equal to the number of subgroups.

In some embodiments, the operation that an index value of each candidate matching block subgroup is determined includes operations that: the at least two candidate matching block subgroups is reordered; a second index value of each candidate matching block subgroup is determined according to the reordering position of the candidate matching block subgroup; the second index value of each candidate matching block subgroup is taken as the index value of the candidate matching block subgroup. In some embodiments, the smallest second index value is selected as the index value of the first candidate matching block subgroup.

For example, reordering is performed according to the template error value corresponding to the candidate matching block subgroup. A candidate matching block subgroup having the smallest template error value is ranked first. The smaller the template error value, the smaller a weight value corresponding to the respective matching block subgroup, the greater the probability that a matching block subgroup having a smaller template error value is selected. The number of index value encoded bits may be reduced by the reordering. For example, a candidate block in the list of candidate matching blocks is BVn, where n is an integer from 1 to N, or n is an integer from 0 to N-1. The total length of the list of candidate matching blocks is N. Every M matching blocks in the list of candidate matching blocks may be set as one subgroup, and the list of candidate matching blocks may be divided into N/M candidate matching block subgroups in total. For example, M is equal to 3, the i-th candidate matching block subgroup is expressed as {BV (3i), BV1 (3i +1), BV2 (3i +2)}, and i is an index value of each candidate matching block subgroup. Here, in the embodiments of the present application, i is an integer greater than or equal to 1, and the index value of subgroups is i less than or equal to the number of subgroups. For example, after reordering, if it is determined that the template error value of the second candidate matching block subgroup is the smallest, it is ranked first, and the index value becomes 0. If the second syntax element is used to indicate the index value of the second candidate matching block subgroup, only 0 may be encoded.

FIG. 11 is a schematic flowchart of a reordering method according to an embodiment of the present application. As shown in FIG. 11, in some embodiments, the operation that the at least two candidate matching block subgroups is reordered includes operations 1101-1105.

At 1101, N fusion matching blocks to be fused is determined from each candidate matching block subgroup, where N is an integer greater than 0.

At 1102, fusion weight values for the N fusion matching blocks are determined.

At 1103, templates of the N fusion matching blocks are fused according to the fusion weight values for the N fusion matching blocks, to determine a prediction template corresponding to each candidate matching block subgroup.

At 1104, a template error value corresponding to each candidate matching block subgroup is determined according to the prediction template corresponding to the candidate matching block subgroup and a template of the current block.

At 1105, reordering is performed according to the template error value corresponding to each candidate matching block subgroup.

Each candidate matching block subgroup is used to perform template prediction in the template region, so that prediction templates corresponding to different candidate matching block subgroups is calculated, and template error values are calculated according to the prediction templates and the template of the current block. The specific method is as follows:

As shown in FIG. 12, prediction for a single matching block is performed in the template region, and the template of the matching block is the prediction template of the template region.

As shown in FIG. 13, fusion prediction for a plurality of matching blocks is performed in the template region. That is, the templates of a plurality of matching blocks are weighted fused to obtain a prediction template. The weighted fusion procedure of the templates should be consistent with the weighted fusion procedure of predicting the current block.

According to the method of predicting in the template region described above, a prediction template of each candidate matching block subgroup in the template region may be obtained. Further, a template error value of each candidate matching block subgroup may be obtained by comparing the prediction template with the template of the current block. According to these template error values, an optimal candidate matching block subgroup may be selected by reordering according to the template error values.

In some embodiments, the operation that the fusion weight values for the N fusion matching blocks are determined includes an operation that the fusion weight values for the N fusion matching blocks are determined according to the fusion mode of the IntraTMP fusion prediction mode for the current block.

In some embodiments, when the fusion mode of the corresponding IntraTMP fusion prediction mode is set for each candidate matching block subgroup, the operation that the fusion weight values for the N fusion matching blocks are determined includes an operation that the fusion weight values for the N fusion matching blocks are determined according to the fusion mode of the IntraTMP fusion prediction mode corresponding to each candidate matching block subgroup.

It should be noted that, since different fusion modes correspond to different derivation methods of weight values, it is necessary to derive the fusion weight value according to the fusion mode of the IntraTMP fusion prediction mode for the current block; the fusion weight values for N fusion matching blocks are determined according to the fusion mode of the IntraTMP fusion prediction mode corresponding to the current candidate matching block subgroup. In the embodiments of the present application, the fusion mode of the current block may be agreed in advance, or may be indicated by transmitting the fourth syntax element.

Further, the fusion method of the matching blocks according to the embodiment of the present application will be further described by way of an example. FIG. 14 is a schematic flowchart of a fusion method according to an embodiment of the present application. As shown in FIG. 14, the operation that at least one matching block in a first candidate matching block subgroup is fused to determine the prediction block for the current block includes operations 1401-1403.

At 1401, N fusion matching blocks to be fused are determined from the first candidate matching block subgroup, where N is an integer greater than 0.

At 1402, fusion weight values for the N fusion matching blocks are determined.

At 1403, the N fusion matching blocks are fused according to the fusion weight values for the N fusion matching blocks to determine the prediction block for the current block.

It should be noted that N is equal to or less than the number of matching blocks.

In some embodiments, the operation that the N fused matching blocks to be fused are determined in at least one of operations 1101 and 1401 includes operations that: a template error value of each matching block in a current candidate matching block subgroup is determined; a template error threshold is determined according to a threshold coefficient and a template error value of an i-th matching block in the current candidate matching block subgroup, where the i-th matching block is a matching block having the smallest template error value in the current candidate matching block subgroup; and a matching block of which the template error value is less than or equal to the template error threshold is determined as the fusion matching block.

It should be noted that, when the matching block for the current block is predicted, the current candidate matching block subgroup is the first candidate matching block subgroup. when at least two candidate matching block subgroups are reordered and the at least two candidate matching block subgroups are used for template prediction, the current candidate matching block subgroup is a currently selected candidate matching block subgroup.

In some embodiments, the method further includes an operation that the threshold coefficient corresponding to the current candidate matching block subgroup is determined. Not all of the threshold coefficients corresponding to different candidate matching block subgroups are same. Exemplarily, the smaller the index value of the candidate matching block subgroup, the larger the threshold coefficient.

In some embodiments, the operation that the matching block of which the template error value is less than or equal to the template error threshold is determined as the fusion matching block includes operations that when the template error value of the (i+j)-th matching block is greater than the number of matching blocks for the template error threshold, the i-th matching block in the current candidate matching block subgroup is determined as the (i+j)-th fusion matching block.

FIG. 15 is a schematic flowchart of a method for determining a fusion matching block according to an embodiment of the present application. As shown in FIG. 15, the operation that N fusion matching blocks to be fused are determined in operations 1101 and 1401 includes operations 1501-1505.

At 1501, the matching blocks in the current candidate matching block subgroup are divided into at least two candidate matching block sets. Each candidate matching block set includes N fusion matching blocks to be fused, and not all of the number of fusion matching blocks in different candidate matching block set are same and not all of the fusion matching blocks in different candidate matching block sets are same.

At 1502, fusion weight values for the N fusion matching blocks in each candidate matching block set are determined.

At 1503, templates of the N fusion matching blocks are fused according to the fusion weight values for N fusion matching blocks in each candidate matching block set, to determine a prediction template corresponding to each candidate matching block set.

At 1504, a template error value corresponding to each candidate matching block set is determined according to a prediction template corresponding to the candidate matching block set and a template of the current block.

At 1505, an optimal candidate matching block set having the smallest template error value is determined according to the template error value corresponding to each candidate matching block set; and matching blocks in the optimal candidate matching block set are taken as the N fusion matching blocks.

It should be noted that, when the matching block of the current block is predicted, the current candidate matching block subgroup is the first candidate matching block subgroup. When at least two candidate matching block subgroups are reordered and the at least two candidate matching block subgroups are used for template prediction, the current candidate matching block subgroup is a currently selected candidate matching block subgroup.

Exemplarily, the current candidate matching block subgroup includes three matching blocks {BV(3i), BV1(3i +1), BV2(3i +2)}, and the candidate matching block sets that may be attempted for template prediction are {BV(3i)}, {BV(3i), BV1(3i +1)}, {BV(3i), BV1(3i+1), BV2(3i+2)}, and weight values for each set are derived for a specific fusion mode. The optimal candidate matching block set is determined, and the matching blocks in the optimal candidate matching block set are used for fusion to determine the prediction block for the current block.

In some embodiments, the operation that the N fusion matching blocks to be fused are determined in operations 1101 and 1401 includes an operation that: the N fusion matching blocks to be fused are determined which includes an operation that first N matching blocks in the current candidate matching block subgroup are used as the N fusion matching blocks, where N is less than or equal to the number of matching blocks in the current candidate matching block subgroup. That is, if the number N of the fusion matching blocks is less than the number M of matching blocks, only N matching blocks may be used to derive the fusion weight value and perform the weighting calculation. If the number N of the fusion matching blocks is equal to the number M of matching blocks, all matching blocks may be used to derive the fusion weight value and perform the weighting calculation. For example, the number of the fusion matching blocks N = 3, BV0, BV1, and BV2 are always fused.

In some embodiments, the method further includes an operation of encoding a value N of the number of fusion matching blocks. Exemplarily, the related syntax element further includes a syntax element intra_tmp_fusion_num, which is used to indicate the value N of the number of fusion matching blocks.

In some embodiments, the fusion weight values for the N fusion matching blocks in at least one of operations 1102, 1402, and 1502 are predefined fixed values.

In some embodiments, an operation that the fusion weight values for the N fusion matching blocks are determined in at least one of operations 1102, 1402, and 1502 may include an operation that the fusion weight values for the N fusion matching blocks are determined according to the fusion mode of the IntraTMP fusion prediction mode corresponding to the current candidate matching block subgroup. The fusion mode is a fusion mode of intra template matching based on template derivation or a fusion mode of intra template matching based on a template error value.

It should be noted that different fusion modes correspond to different weighted fusion methods and fusion weight value derivation methods. Therefore, in determining the fusion weight value for each fusion matching block, it is necessary to determine the derivation method of the weight value according to the fusion mode of the IntraTMP fusion prediction mode corresponding to the current candidate matching block subgroup.

In some embodiments, the fusion mode is the fusion mode of intra template matching based on template derivation, and the operation that the fusion weight values for N fusion matching blocks are determined includes an operation that: the fusion weight values for N fusion matching blocks and fusion weight values for bias parameters are determined according to templates of N fusion matching blocks, a template of the current block, and bias parameters.

The operation that the N fusion matching blocks are fused according to the fusion weight values for the N fusion matching blocks to determine the prediction block for the current block includes an operation that the N fusion matching blocks and the bias parameters are fused according to the fusion weight values for the N fusion matching blocks and the fusion weight values for the bias parameters to determine the prediction block for the current block.

Exemplarily, in the IntraTMP fusion method based on template derivation, a method similar to filter coefficient training is used to perform training based on a template of each matching block and the template of the current block, obtain the weight values for fusion prediction. For example, a candidate matching block subgroup or a candidate matching block set includes three matching blocks, denoted as {BV(3i), BV1(3i+1), BV2(3i+2)}, and the fusion form is as follows:

$$\text{pred} = w0 * BV_{3*i} + w1 * BV_{3*i} + w2 * BV_{3*i+2} + w3 * \text{Bias}$$

A set of weight values w0 to w3 is derived by taking templates of matching blocks BV(3i), BV1(3i+1) and BV2(3i+2) as input, taking the template of the current block template as the output pred, and taking Bias as a fixed value, such as the median value of the pixel range. When the matching blocks are fused, the prediction block for the current block is obtained by using the same fusion method based on the reconstruction values of the matching blocks BV(3i), BV1(3i+1) and BV2(3i+2) and the weight values w0 to w3. Alternatively, when the templates of the matching blocks are fused, a prediction template is obtained by using the same fusion method based on the reconstruction values of the templates of the matching blocks BV(3i), BV1(3i+1) and BV2(3i+2) and the weight values w0 to w3.

In some embodiments, the fusion mode is a fusion mode of intra-frame template matching based on the template error value, and the operation that the fusion weight values for N fusion matching blocks are determined includes operations that: template error values of N fusion matching blocks are determined according to templates of N fusion matching blocks and a template of the current block; an accumulated sum of the template error values of the N fusion matching blocks is determined according to the template error values of the N fusion matching blocks; and the fusion weight values for the N fusion matching blocks are determined according to the template error values and the accumulated sum of the template error values of the N fusion matching blocks.

For example, where n is the total number of matching blocks (i.e. N), and Wi is a weight value corresponding to a matching block of which a template error value is SADi. The fusion form is as follows:

$$Pr\text{ed} = \sum_{i=1}^{n} W_i \times Pr\text{edi}$$

Where pred is a prediction block or a prediction template, and Predi is a matching block or a template of the matching block. According to the above fusion method, the fused template error value corresponding to each matching block subgroup is obtained. All matching block subgroups are reordered from small to large according to the template error values, that is, the smaller the template error value of a matching block subgroup, the smaller the index value corresponding to the matching block subgroup. The selected candidate matching block subgroup is obtained according to the determined index value, and the selected candidate matching block subgroup and the corresponding weight values are used to complete weighted fusion prediction of the current block to obtain a final prediction block.

In the above solution, by constructing a list of candidate matching blocks and grouping the list of candidate matching blocks, indicating a first candidate matching block subgroup according to an index value, and using the first candidate matching block subgroup for fusion prediction, the prediction accuracy may be improved and the code rate may be saved, the encoding/decoding efficiency may be improved, and the encoding/decoding performance may be improved.

Furthermore, by combining the IntraTMP fusion prediction mode and the IntraTMP multi-candidate prediction mode, encoding efficiency is improved. Further, by limiting the range of the index value of candidate matching block subgroups, the index value encoded bins are reduced, and encoding efficiency is improved. For example, by reordering the candidate matching block subgroups, the index value is controlled to a smaller index range.

In still another embodiment of the present application, based on the same inventive concept as the above embodiments, FIG. 17 shows a schematic structural diagram of an encoder provided by the embodiment of the present application. As shown in FIG. 17, the encoder 170 may include a first determination unit 1701, a first grouping unit 1702, and a first prediction unit 1703.

The first determination unit 1701 is configured to construct a first list of candidate matching blocks for the current block based on template matching.

The first grouping unit 1702 is configured to group the first list of candidate matching blocks, to determine at least two candidate matching block subgroups, and determine an index value of each candidate matching block subgroup.

The first determination unit 1701 is further configured to determine an index value of a first candidate matching block subgroup corresponding to the current block.

The first determination unit 1701 is further configured to determine the first candidate matching block subgroup from the at least two candidate matching block subgroups according to the index value of the first candidate matching block subgroup.

The first prediction unit 1703 is configured to fuse at least one matching block in the first candidate matching block subgroup to determine a prediction block for the current block.

In some embodiments, the encoder 170 may further include: an encoding unit configured to encode a related syntax element of the current block. The related syntax element includes: a first syntax element and/or a second syntax element. The first syntax element is used to indicate whether the prediction mode for the current block is an intra template matching prediction (IntraTMP) fusion prediction mode, and the second syntax element is used to indicate the index value of the first candidate matching block subgroup.

In some embodiments, the second syntax element is further used to indicate a fusion mode of the IntraTMP fusion prediction mode for the current block. The encoding method of the second syntax element includes a fixed-length encoding method or a variable-length encoding method. In some embodiments, an encoding method for the bin in the second syntax element includes encoding the bin with equal probability, encoding the bin based on a context model, or encoding the bin based on multiple context models.

It may be understood that each functional unit of the encoder also performs the encoding method of any one of the foregoing embodiments.

It may be understood that in the embodiments of the present application, the "unit" may be a part of a circuit, a part of a processor, a part of a program or software, etc. Or, the "unit" may also be a module, or may be non-modular. Moreover, in this embodiment, each component may be integrated in one processing unit, each unit may physically exist separately, or two or more units may be integrated in one unit. The above-described integrated unit may be implemented in the form of hardware or software functional modules.

Based on the understanding that the integrated unit may be stored in a computer-readable storage medium if it is implemented in the form of software functional modules and is not sold or used as an independent product, the technical solution of the present embodiment essentially or contributes to the prior art or all or part of the technical solution may be embodied in the form of a software product which is stored in a storage medium and includes several instructions to cause a computer device (which may be a personal computer, a server, a network device, etc.) or a processor to perform all or part of the operations of the method of the present embodiment. The storage medium includes a USB disk, a removable hard disk, a Read Only Memory (ROM), a Random Access Memory (RAM), a magnetic disk, an optical disk, and various media capable of storing program codes.

Accordingly, an embodiment of the present application provides a computer-readable storage medium applied to the encoder 170. The computer-readable storage medium stores thereon a computer program, which when executed by the first processor, performs the encoding method of any one of the foregoing embodiments.

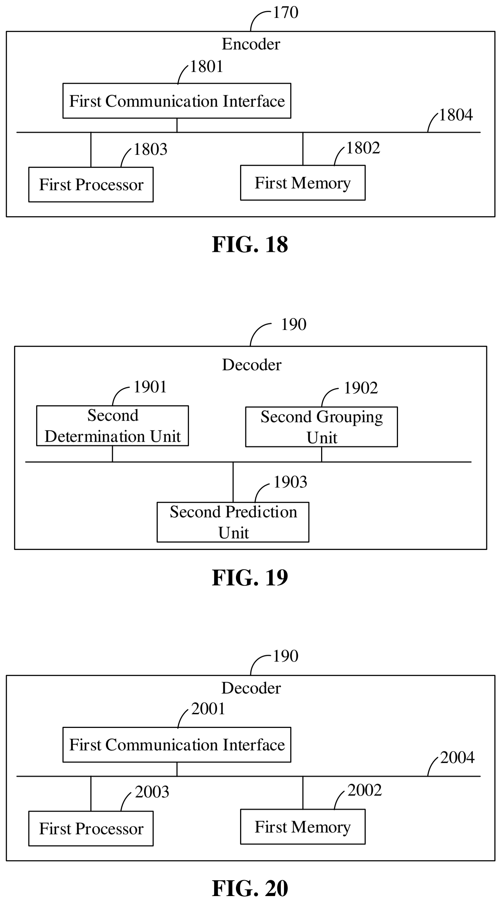

Based on the components of the encoder 170 and the computer-readable storage medium, reference is made to FIG. 18, which shows a schematic diagram of a specific hardware structure of the encoder 170 provided by an embodiment of the present application. As shown in FIG. 18, the encoder 170 may include: a first communication interface 1801, a first memory 1802, and a first processor 1803. The various components are coupled together by a first bus system 1804. It will be appreciated that the first bus system 1804 is used to enable connected communication between these components. The first bus system 1804 includes a power bus, a control bus, and a status signal bus in addition to a data bus. However, for the sake of clarity of illustration, various buses are designated as first bus system 1804 in FIG. 18.

The first communication interface 1801 is used for receiving or transmitting signals in the process of transmitting or receiving information with other external network elements.

The first memory 1802 is used for storing a computer program executable on the first processor 1703.

The first processor 1803 is configured to execute the computer program to perform the following operations:

A first list of candidate matching blocks for the current block is constructed based on template matching;

The first list of candidate matching blocks is grouped, to determine at least two candidate matching block subgroups, and an index value of each candidate matching block subgroup is determined;

An index value of the first candidate matching block subgroup corresponding to the current block is determined;

The first candidate matching block subgroup is determined from the at least two candidate matching block subgroups according to the index value of the first candidate matching block subgroup; and

At least one matching block in the first candidate matching block subgroup is fused to determine a prediction block for the current block.

It is understood that the first memory 1802 in the embodiment of the present application may be a volatile memory or a non-volatile memory, or may include both volatile and non-volatile memory. The non-volatile memory may be a Read-Only Memory (ROM), a Programmable ROM (PROM), an Erasable PROM (EPROM), an Electrically EPROM (EEPROM), or a flash memory. The volatile memory may be a Random Access Memory (RAM), which serves as an external cache. By way of example, but not limitation, many forms of RAM are available, such as a Static RAM (SRAM), a Dynamic RAM (DRAM), a Synchronous DRAM (SDRAM), a Double Data Rate SDRAM (DDRSDRAM), an Enhanced SDRAM (ESDRAM), a Synchlink DRAM (SLDRAM), and a Direct Rambus RAM (DRRAM). The first memory 1802 of the systems and methods described herein is intended to include, but is not limited to, these and any other suitable type of memory.

The first processor 1803 may be an integrated circuit chip having signal processing capabilities. In implementation, the operations of the above-described method may be accomplished by integrated logic circuitry of hardware or instructions in the form of software in the first processor 1803. The above-described first processor 1803 may be a general-purpose processor, a Digital Signal Processor (DSP), an Application Specific Integrated Circuit (ASIC), a Field Programmable Gate Array (FPGA) or other programmable logic device, a discrete gate or transistor logic device, or a discrete hardware component. The methods, steps, and logical block diagrams disclosed in the embodiments of the present application may be implemented or executed. The general purpose processor may be a microprocessor or the processor may be any conventional processor or the like. The steps of the method disclosed in connection with the embodiments of the present application may be directly embodied as execution by the hardware decoding processor, or may be executed by combining hardware and software modules in the decoding processor. The software module may be located in a storage medium mature in the art, such as a RAM, a flash memory, a ROM, a PROM, or a EPROM, a register, etc. The storage medium is located in the first memory 1802, and the first processor 1803 reads the information in the first memory 1802, to complete the steps of the above methods in combination with its hardware.

It will be understood that the embodiments described herein may be implemented in hardware, software, firmware, middleware, microcode, or combinations thereof. For hardware implementation, the processing unit may be implemented in one or more Application Specific Integrated Circuits (ASICs), Digital Signal Processors (DSPs), Digital Signal Processing Devices (DSPDs), Programmable Logic Devices (PLDs), Field-Programmable Gate Arrays (FPGAs), general purpose processors, controllers, microcontrollers, microprocessors, other electronic units for performing the functions of the present application, or combinations thereof. For software implementations, the techniques of the present application may be implemented by modules (e.g., procedures, functions, etc.) that perform the functions of the present application. The software code may be stored in a memory and executed by a processor. The memory may be implemented in the processor or external to the processor.

Optionally, as another embodiment, the first processor 1803 is further configured to execute the computer program to perform the encoding method of any one of the preceding embodiments.

The present embodiment provides an encoder. For the encoder, by constructing a list of candidate matching blocks and grouping the list of candidate matching blocks, transmitting an index value to indicate the first candidate matching block subgroup, and performing fusion prediction by using the first candidate matching block subgroup, prediction accuracy may be improved, code rate may be saved, and encoding/decoding efficiency may be improved, and encoding/decoding performance may be improved. Further, by limiting the index value range of the candidate matching block subgroup, the index value coded bin is reduced, and the coding efficiency is improved. For example, by reordering the candidate matching block subgroups, the index value is controlled to a smaller index range.

In still another embodiment of the present application, based on the same inventive concept as the above-described embodiments, reference is made to FIG. 19, which shows a schematic structural diagram of a decoder 190 provided by the embodiment of the present application. As shown in FIG. 19, the decoder 190 may include a second determination unit 1901, a second grouping unit 1902, and a second prediction unit 1903.

The second determination unit 1901 is configured to construct a first list of candidate matching blocks for a current block based on template matching.

The second grouping unit 1902 is configured to group the first list of candidate matching blocks, to determine at least two candidate matching block subgroups, and determine an index value of each candidate matching block subgroup.

The second determination unit 1901 is further configured to determine an index value of a first candidate matching block subgroup corresponding to the current block.

The second determination unit is further configured to determine the first candidate matching block subgroup from the at least two candidate matching block subgroups according to the index value of the first candidate matching block subgroup.

The second prediction unit 1903 is configured to fuse at least one matching block in the first candidate matching block subgroup to determine a prediction block for the current block.

In some embodiments, the decoder 190 may further include: a decoding unit configured to decode a related syntax element of the current block. The related syntax element include: a first syntax element and/or a second syntax element. The first syntax element is used to indicate whether the prediction mode for the current block is an intra template matching prediction (IntraTMP) fusion prediction mode, and the second syntax element is used to indicate an index value of the first candidate matching block subgroup.

In some embodiments, the second syntax element is further used to indicate a fusion mode of the IntraTMP fusion prediction mode for the current block. An encoding method of the second syntax element includes a fixed-length encoding method or a variable-length encoding method. In some embodiments, an encoding method for a bin in the second syntax element includes encoding the bin with equal probability, encoding the bin based on a context model, or encoding the bin based on multiple context models.

It may be appreciated that various functional unit of the decoder also perform the decoding method of any one of the foregoing embodiments.

It may be appreciated that in the present embodiment, the "unit" may be a partial circuit, a partial processor, a partial program or software, or the like, or may be a module, or may be non-modular. Moreover, in this embodiment, each component may be integrated in one processing unit, each unit may physically exist separately, or two or more units may be integrated in one unit. The above-described integrated unit may be implemented in the form of hardware or software functional modules.

The integrated unit may be stored in a computer-readable storage medium if implemented in the form of software functional modules and not marketed or used as a stand-alone product. Based on such an understanding, the present embodiment provides a computer-readable storage medium applied to the decoder 190, the computer-readable storage medium stores thereon a computer program that, when executed by the second processor, implements the decoding method of any of the foregoing embodiments.

Based on the components of the decoder 190 and the computer-readable storage medium, reference is made to FIG. 20, which shows a schematic diagram of a specific hardware structure of the decoder 190 provided by an embodiment of the present application. As shown in FIG. 20, the decoder 190 may include: a second communication interface 2001, a second memory 2002, and a second processor 2003. The various components are coupled together by a second bus system 2004. It will be appreciated that the second bus system 2004 is used to enable connected communication between these components. The second bus system 2004 includes a power bus, a control bus, and a status signal bus in addition to a data bus. However, for the sake of clarity of illustration, various buses are designated as the second bus system 2004 in FIG. 20.

The second communication interface 2001 is used for receiving or transmitting signals in the process of transmitting or receiving information with other external network elements.

The second memory 2002 is used for storing a computer program executable on the second processor 2003.

The second processor 2003 is configured to, when executing the computer program, perform the following operations:

A first list of candidate matching blocks for the current block is constructed based on template matching;
The first list of candidate matching blocks is grouped, to determine at least two candidate matching block subgroups, and an index value of each candidate matching block subgroup is determined;
An index value of the first candidate matching block subgroup corresponding to the current block is determined;
The first candidate matching block subgroup is determined from the at least two candidate matching block subgroups according to the index value of the first candidate matching block subgroup; and
At least one matching block in the first candidate matching block subgroup is fused to determine a prediction block for the current block.

Optionally, as another embodiment, the second processor 2003 is further configured to the computer program to perform the decoding method of any one of the foregoing embodiments.

It will be appreciated that the second memory 2002 is similar in hardware functionality to the first memory 1802, and the second processor 2003 is similar in hardware functionality to the first processor 1803. It will not be detailed here.

The present embodiment provides a decoder, for the decoder, by constructing a list of candidate matching blocks and grouping the list of candidate matching blocks, determining a first candidate matching block subgroup via a transmitted index value, and using the first candidate matching block subgroup for fusion prediction, the prediction accuracy may be improved and the code rate may be saved, the encoding/decoding efficiency may be improved, and the encoding/decoding performance may be improved. Further, by limiting the range of the index value of candidate matching block subgroups, the index value encoded bins are reduced, and encoding efficiency is improved. For example, by reordering the candidate matching block subgroups, the index value is controlled to a smaller index range.

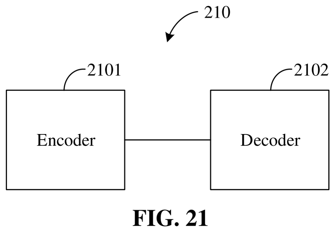

In still another embodiment of the present application, reference is made to FIG. 21, which shows a schematic structure diagram of a codec system provided by the embodiment of the present application. As shown in FIG. 21, the codec system 210 may include an encoder 2101 and a decoder 2102.

In the embodiment of the present application, the encoder 2101 may be the encoder described in any one of the preceding embodiments, and the decoder 2102 may be the decoder described in any one of the preceding embodiments.

It should be noted that in the present application, the terms "comprising", "including" or any other variation thereof are intended to encompass a non-exclusive inclusion such that a process, method, article, or apparatus including a series of elements includes not only those elements, but also other elements not explicitly listed, or elements inherent to such a process, method, article, or apparatus. Without further limitation, an element defined by the statement "comprising a" does not preclude the presence of additional identical elements in a process, method, article, or apparatus that includes the element.

The above-described serial numbers of the embodiments of the present application are for description only, and do not represent the advantages and disadvantages of the embodiments.

The methods disclosed in several method embodiments provided in the present application may be arbitrarily combined without conflict to obtain new method embodiments.

The features disclosed in several product embodiments provided in the present application may be arbitrarily combined without conflicting to obtain new product embodiments.

The features disclosed in several method or device embodiments provided in the present application may be arbitrarily combined without conflict to obtain new method or device embodiments.

The above is merely a specific embodiment of the present application, but the scope of protection of the present application is not limited thereto, and changes or substitutions which may be easily conceived by any person skilled in the art within the technical scope disclosed in the present application should be covered within the protection scope of the present application. Therefore, the protection scope of the present application should be based on the protection scope of the claims.

Industrial practicality

Embodiments of the present application provide an encoding and decoding method, a bitstream, an encoder, a decoder, and a storage medium. A first list of candidate matching blocks for a current block is constructed based on template matching. The first list of candidate matching blocks is grouped, to determine at least two candidate matching block subgroups, and an index value of each candidate matching block subgroup is determined. At an encoding side, an index value of the first candidate matching block subgroup corresponding to the current block is determined; and the index value of the first candidate matching block subgroup is signaled into a bitstream. At a decoding side, the first candidate matching block subgroup is determined according to the index value and fusion is performed according to the first candidate matching block subgroup to determine a prediction block for the current block. By constructing a list of candidate matching blocks and grouping the list of candidate matching blocks, transmitting the index value to indicate the first candidate matching block subgroup, and performing fusion prediction by using the first candidate matching block subgroup, the prediction accuracy may be improved, the code rate may be saved, and the encoding/decoding efficiency may be improved, thereby improving the encoding/decoding performance.

**Claims**

1. A method of decoding, applied to a decoder, comprising:

   constructing a first list of candidate matching blocks for a current block based on template matching;
   grouping the first list of candidate matching blocks, to determine at least two candidate matching block subgroups, and determining an index value of each candidate matching block subgroup;
   determining an index value of a first candidate matching block subgroup corresponding to the current block;
   determining the first candidate matching block subgroup from the at least two candidate matching block subgroups according to the index value of the first candidate matching block subgroup; and
   fusing at least one matching block in the first candidate matching block subgroup to determine a prediction block for the current block.

2. The method of claim 1, further comprising:

decoding a related syntax element of the current block,

wherein the related syntax element comprises: at least one of a first syntax element or a second syntax element, and

the first syntax element is used to indicate whether a prediction mode for the current block is an intra template matching prediction (IntraTMP) fusion prediction mode, and the second syntax element is used to indicate the index value of the first candidate matching block subgroup.

3. The method of claim 2, wherein decoding the related syntax element of the current block comprises:

decoding the first syntax element;
decoding the second syntax element; and
when a value of the first syntax element is a first value, determining that the prediction mode for the current block is the IntraTMP fusion prediction mode, and determining the index value of the first candidate matching block subgroup corresponding to the current block according to the second syntax element.

4. The method of claim 3, wherein the second syntax element is further used to indicate an index value of an optimal matching block corresponding to the current block, and the method further comprising:
when the value of the first syntax element is a second value, determining that the prediction mode for the current block is an IntraTMP multi-candidate prediction mode based on a single matching block, and determining the index value of the optimal matching block corresponding to the current block according to the second syntax element.

5. The method of claim 2, wherein decoding the related syntax element of the current block comprises:

decoding the first syntax element;
when a value of the first syntax element is a first value, determining that the prediction mode for the current block is an IntraTMP fusion prediction mode, and decoding the second syntax element; and
determining the index value of the first candidate matching block subgroup corresponding to the current block according to the second syntax element.

6. The method of claim 5, wherein the related syntax element further comprises a third syntax element used to indicate an index value of an optimal matching block corresponding to the current block, and decoding the related syntax element of the current block further comprises:

when the value of the first syntax element is a second value, determining that the prediction mode for the current block is an IntraTMP multi-candidate prediction mode based on a single matching block, and decoding the third syntax element of the current block; and
dtermining the index value of the optimal matching block corresponding to the current block according to the third syntax element.

7. The method of claim 4 or 6, further comprising: when determining that the prediction mode for the current block is the IntraTMP multi-candidate prediction mode based on a single matching block,

determining the optimal matching block from a second list of candidate matching blocks according to the index value of the optimal matching block; and
determining the prediction block for the current block according to the optimal matching block.

8. The method of claim 7, further comprising:
constructing the second list of candidate matching blocks for the current block based on the template matching, wherein a length of the second list of candidate matching blocks is not equal to a length of the first list of candidate matching blocks.

9. The method of any one of claims 2-8, wherein the second syntax element is further used to indicate a fusion mode of an IntraTMP fusion prediction mode for the current block.

10. The method of claim 2, wherein a decoding method for the second syntax element comprises a fixed-length decoding method corresponding to a fixed-length encoding or a variable-length decoding method corresponding to a variable-length encoding.

11. The method of claim 10, wherein a decoding method for a bin in the second syntax element comprises decoding the bin with equal probability, decoding the bin based on a context model, or decoding the bin based on multiple context models.

12. The method of any one of claims 2-11, wherein the related syntax element further comprises a fourth syntax element, the method further comprising:
decoding the fourth syntax element, wherein the fourth syntax element is used to indicate a fusion mode of an IntraTMP fusion prediction mode for the current block, or to indicate whether to filter a selected matching block.

13. The method of claim 12, further comprising:

determining that the prediction mode for the current block is an IntraTMP fusion prediction mode, and determining the fusion mode of the IntraTMP fusion prediction mode for the current block according to the fourth syntax element;
determining that the prediction mode for the current block is an IntraTMP multi-candidate prediction mode based on a single matching block, and determining whether to filter the selected matching block according to the fourth syntax element.

14. The method of claim 12, further comprising:

determining that the prediction mode for the current block is an IntraTMP fusion prediction mode, and decoding the fourth syntax element, wherein the fourth syntax element is used to indicate the fusion mode of the IntraTMP fusion prediction mode for the current block; and
determining the fusion mode of the IntraTMP fusion prediction mode for the current block according to the fourth syntax element;
or,
determining that the prediction mode for the current block is the IntraTMP multi-candidate prediction mode based on a single matching block, and decoding the fourth syntax element; and
determining whether to filter the selected matching block according to the fourth syntax element.

15. The method of any one of claims 12-14, wherein when the fusion mode comprises a first fusion mode and a second fusion mode, the method further comprises:

when the fourth syntax element is used to indicate that the fusion mode of the IntraTMP fusion prediction mode for the current block is the first fusion mode, determining the index value of the first candidate matching block subgroup corresponding to the current block according to the second syntax element;
when the fourth syntax element is used to indicate that the fusion mode of the IntraTMP fusion prediction mode for the current block is the second fusion mode, determining the index value of the first candidate matching block subgroup corresponding to the current block according to the second syntax element and an index offset value.

16. The method of any one of claims 2-14, wherein an index range of an index value of the first candidate matching block subgroup is less than or equal to an index range corresponding to the at least two candidate matching block subgroups.

17. The method of any one of claims 2-14, further comprising:
decoding a sixth syntax element, wherein the sixth syntax element is used to indicate whether to decode some or all of the related syntax element of the current block.

18. The method of claim 17, wherein the sixth syntax element comprises at least one of a sequence-level syntax element, a picture-level syntax element, a slice-level syntax element, a stripe-level syntax element, or a block-level syntax element.

19. The method of claim 1, wherein grouping the first list of candidate matching blocks comprises:
grouping the first list of candidate matching blocks according to at least one grouping rule.

20. The method of claim 19, wherein the at least one grouping rule comprises a first grouping rule,
the first grouping rule comprises: starting from a first matching block in the first list of candidate matching blocks, setting every first preset number of matching blocks as one candidate matching block subgroup, wherein the first preset number is an integer greater than 0.

21. The method of claim 20, wherein the at least one grouping rule comprises a second grouping rule, the second grouping rule comprises: starting from a first matching block in the first list of candidate matching blocks, setting every second preset number of matching blocks as one candidate matching block subgroup, wherein the second preset number is an integer greater than 0, and the first preset number is different from the second preset number.

22. The method of claim 21, wherein the first grouping rule further comprises: if a number of matching blocks in a last candidate matching block subgroup is less than the first preset number, obtaining preset matching blocks from the first list of candidate matching blocks and adding them to the last candidate matching block subgroup, so that the number of matching blocks in the last candidate matching block subgroup is equal to the first preset number, the second grouping rule further comprises: if a number of matching blocks in a last candidate matching block subgroup is less than the second preset number, obtaining preset matching blocks from the first list of candidate matching blocks and adding the preset matching blocks to the last candidate matching block subgroup, so that the number of matching blocks in the last candidate matching block subgroup is equal to the second preset number.

23. The method of any one of claims 19-22, wherein the at least one grouping rule comprises a third grouping rule, the third grouping rule comprises: grouping a first M1 matching blocks in the first list of candidate matching blocks and every M2 matching blocks starting from a (M1+1)-th matching block into a candidate matching block subgroup.

24. The method of claim 23, wherein the third grouping rule further comprises that values of M2 in different matching block subgroups are equal, or the third grouping rule further comprises that not all of values of M2 in different matching block subgroups are equal.

25. The method of any one of claims 19-24, wherein the at least one grouping rule comprises a fourth grouping rule, the fourth grouping rule comprises: grouping a first i matching blocks in the first list of candidate matching blocks into an i-th candidate matching block subgroup, wherein i is an integer greater than 0.

26. The method of any one of claims 19-25, wherein the grouping rule further comprises that a distance between any two matching blocks within a candidate matching block subgroup is greater than a first distance threshold, or, the grouping rule further comprises that a distance between any two matching blocks in the candidate matching block subgroup is less than a second distance threshold.

27. The method of claim 19, wherein each grouping rule further comprises a corresponding number of subgroups.

28. The method of any one of claims 19-27, wherein grouping the first list of candidate matching blocks comprises:

    grouping the first list of candidate matching blocks according to the at least one grouping rule to obtain at least one candidate matching block subgroup; and
    setting at least one respective fusion mode of an intra template matching prediction (IntraTMP) fusion prediction mode for each candidate matching block subgroup, to obtain at least two candidate matching block subgroups.

29. The method of claim 28, wherein the fusion mode comprises a fusion mode of intra template matching based on template derivation and a fusion mode of intra template matching based on a template error value.

30. The method of any one of claims 19-29, further comprising:
    decoding a syntax element used to indicate the at least one grouping rule, to determine the at least one grouping rule.

31. The method of claim 1, wherein determining an index value of each candidate matching block subgroup comprises:

    determining a first index value of each candidate matching block subgroup according to a subgroup position of the candidate matching block subgroup; and
    taking the first index value of each candidate matching block subgroup as the index value of the candidate matching block subgroup.

32. The method of claim 1, wherein determining an index value of each candidate matching block subgroup comprises:

reordering the at least two candidate matching block subgroups;

determining a second index value of each candidate matching block subgroup according to the reordering position of the candidate matching block subgroup; and

taking the second index value of each candidate matching block subgroup as the index value of the candidate matching block subgroup.

33. The method of claim 32, wherein reordering the at least two candidate matching block subgroups comprises:

determining, from each candidate matching block subgroup, N fusion matching blocks to be fused, where N is an integer greater than 0;

determining fusion weight values for the N fusion matching blocks;

fusing templates of the N fusion matching blocks according to the fusion weight values for the N fusion matching blocks, to determine a prediction template corresponding to each candidate matching block subgroup;

determining a template error value corresponding to each candidate matching block subgroup according to the prediction template corresponding to the candidate matching block subgroup and a template of the current block; and

performing reordering according to the template error value corresponding to each candidate matching block subgroup.

34. The method of claim 31 or 32, further comprising: when each candidate matching block subgroup is set with a respective fusion mode of an intra template matching prediction (IntraTMP) fusion prediction mode,

determining a fusion mode of the IntraTMP fusion prediction mode for the current block according to the fusion mode of the IntraTMP fusion prediction mode corresponding to the first candidate matching block subgroup.

35. The method of claim 1, wherein fusing the at least one matching block in the first candidate matching block subgroup to determine the prediction block for the current block comprises:

determining N fusion matching blocks to be fused from the first candidate matching block subgroup, where N is an integer greater than 0;

determining fusion weight values for the N fusion matching blocks; and

fusing the N fusion matching blocks according to the fusion weight values for the N fusion matching blocks, to determine the prediction block for the current block.

36. The method of claim 33 or 35, wherein determining the N fusion matching blocks to be fused comprises:

determining a template error value for each matching block in a current candidate matching block subgroup;

determining a template error threshold according to a threshold coefficient and a template error value of an i-th matching block in the current candidate matching block subgroup, wherein the i-th matching block is a matching block having a smallest template error value in the current candidate matching block subgroup; and

determining a matching block of which the template error value is less than or equal to the template error threshold as the fusion matching block.

37. The method of claim 36, further comprising:

determining the threshold coefficient corresponding to the current candidate matching block subgroup, wherein not all of threshold coefficients corresponding to different candidate matching block subgroups are same.

38. The method of claim 36, wherein determining the matching block of which the template error value is less than or equal to the template error threshold as the fusion matching block comprises:

when a template error value of a (i+j)-th matching block is larger than a number of matching blocks for the template error threshold, taking the i-th matching block in the current candidate matching block subgroup as the (i+j)-th fusion matching block.

39. The method of claim 33 or 35, wherein determining the N fusion matching blocks to be fused comprises:

dividing matching blocks in a current candidate matching block subgroup into at least two candidate matching block sets, wherein each candidate matching block set comprises N fusion matching blocks to be fused, and not all of a number of fusion matching blocks in different candidate matching block sets are same and not all of the fusion matching blocks in different candidate matching block sets are same;

determining fusion weight values for N fusion matching blocks in each candidate matching block set;

fusing templates of the N fusion matching blocks according to the fusion weight values for the N fusion matching blocks in each candidate matching block set, to determine a prediction template corresponding to the candidate matching block set;

determining a template error value corresponding to each candidate matching block set according to the prediction template corresponding to the candidate matching block set and a template of the current block;

determining an optimal candidate matching block set with a smallest template error value according to the template error value corresponding to each candidate matching block set; and

taking matching blocks in the optimal candidate matching block set as the N fusion matching blocks.

40. The method of claim 33 or 35, wherein determining the N fusion matching blocks to be fused comprises:

taking first N matching blocks in a current candidate matching block subgroup as the N fusion matching blocks, where N is less than or equal to a number of matching blocks in the current candidate matching block subgroup.

41. The method of claim 40, further comprising:

decoding a bitstream, to determine a value N of a number of fusion matching blocks.

42. The method of any one of claims 33, 35 or 39, wherein determining the fusion weight values for the N fusion matching blocks comprises:

determining the fusion weight values for the N fusion matching blocks according to a fusion mode of an IntraTMP fusion prediction mode corresponding to a current candidate matching block subgroup,

wherein the fusion mode is a fusion mode of intra template matching based on template derivation or a fusion mode of intra template matching based on a template error value.

43. The method of claim 42, wherein the fusion mode is the fusion mode of intra template matching based on template derivation, and determining the fusion weight values for the N fusion matching blocks comprises:

determining the fusion weight values for the N fusion matching blocks and fusion weight values for bias parameters according to templates of the N fusion matching blocks, a template of the current block, and the bias parameters;

fusing the N fusion matching blocks according to the fusion weight values for the N fusion matching blocks to determine the prediction block for the current block comprises:

fusing the N fusion matching blocks and the bias parameters according to the fusion weight values for the N fusion matching blocks and the fusion weight values for the bias parameters, to determine the prediction block for the current block.

44. The method of claim 42, wherein the fusion mode is the fusion mode of intra template matching based on a template error value, and determining the fusion weight values for the N fusion matching blocks comprises:

determining template error values of the N fusion matching blocks according to templates of the N fusion matching blocks and a template of the current block;

determining an accumulated sum of the template error values of the N fusion matching blocks according to the template error values of the N fusion matching blocks; and

determining the fusion weight values for the N fusion matching blocks according to the template error values of the N fusion matching blocks and the accumulated sum of the template error values.

45. The method of claim 1, further comprising:

storing the index value of the first candidate matching block subgroup corresponding to the current block; or, storing preset matching blocks in the first candidate matching block subgroup corresponding to the current block.

46. A method of encoding, applied to an encoder, comprising:

constructing a first list of candidate matching blocks for a current block based on template matching;

grouping the first list of candidate matching blocks, to determine at least two candidate matching block subgroups, and determining an index value of each candidate matching block subgroup;

determining an index value of a first candidate matching block subgroup corresponding to the current block;

determining the first candidate matching block subgroup from the at least two candidate matching block subgroups according to the index value of the first candidate matching block subgroup; and
fusing at least one matching block in the first candidate matching block subgroup to determine a prediction block for the current block.

47. The method of claim 46, wherein the method further comprises:

encoding an related syntax element of the current block,
wherein the related syntax element comprise: at least one of a first syntax element or a second syntax element, and
the first syntax element is used to indicate whether a prediction mode for the current block is an intra template matching prediction (IntraTMP) fusion prediction mode, and the second syntax element is used to indicate the index value of the first candidate matching block subgroup.

48. The method of claim 46, wherein encoding the related syntax element of the current block comprises:

encoding the first syntax element;
encoding the second syntax element; and
when a value of the first syntax element is a first value, determining that the prediction mode for the current block is the IntraTMP fusion prediction mode, and determining the index value of the first candidate matching block subgroup corresponding to the current block according to the second syntax element.

49. The method of claim 48, wherein the second syntax element is further used to indicate an index value of an optimal matching block corresponding to the current block, and the method further comprising:
when the value of the first syntax element is a second value, determining that the prediction mode for the current block is an IntraTMP multi-candidate prediction mode based on a single matching block, and determining the index value of the optimal matching block corresponding to the current block according to the second syntax element.

50. The method of claim 46, wherein encoding the related syntax element of the current block comprises:

encoding a first syntax element; and
when a value of the first syntax element is a first value, determining that the prediction mode for the current block is an IntraTMP fusion prediction mode, and encoding the second syntax element.

51. The method of claim 50, wherein the related syntax element further comprises a third syntax element used to indicate an index value of an optimal matching block corresponding to the current block, and encoding the related syntax element of the current block further comprises:
when the value of the first syntax element is a second value, determining that the prediction mode for the current block is an IntraTMP multi-candidate prediction mode based on a single matching block, and encoding the third syntax element of the current block.

52. The method of claim 49 or 51, further comprising: when determining that the prediction mode for the current block is the IntraTMP multi-candidate prediction mode based on a single matching block,

determining the optimal matching block from a second list of candidate matching blocks according to the index value of the optimal matching block; and
determining the prediction block for the current block according to the optimal matching block.

53. The method of claim 52, further comprising:
constructing the second list of candidate matching blocks for the current block based on the template matching, wherein a length of the second list of candidate matching blocks is not equal to a length of the first list of candidate matching blocks.

54. The method of any one of claims 47-53, wherein the second syntax element is further used to indicate a fusion mode of an IntraTMP fusion prediction mode for the current block.

55. The method of claim 47, wherein an encoding method for the second syntax element comprises a fixed-length encoding method or a variable-length encoding method.

56. The method of claim 55, wherein an encoding method for a bin in the second syntax element comprises encoding the bin with equal probability, encoding the bin based on a context model, or encoding the bin based on multiple context models.

57. The method of any one of claims 47-56, further comprising:

determining prediction blocks corresponding to the at least two candidate matching block subgroups for the current block;
performing an encoding decision according to an original block and a prediction block corresponding to each candidate matching block subgroup for the current block, to determine an optimal candidate matching block subgroup;
when the index value of the first candidate matching block subgroup is not an index value of the optimal candidate matching block subgroup, taking the index value of the optimal candidate matching block subgroup as the index value of the first candidate matching block subgroup; and
determining the second syntax element according to the index value of the first candidate matching block subgroup.

58. The method of any one of claims 47-57, wherein the related syntax element further comprises a fourth syntax element, the method further comprising:
encoding the fourth syntax element, wherein the fourth syntax element is used to indicate a fusion mode of an IntraTMP fusion prediction mode for the current block, or to indicate whether to filter a selected matching block.

59. The method of claim 58, further comprising:

determining that the prediction mode for the current block is the IntraTMP fusion prediction mode, and determining the fusion mode of the IntraTMP fusion prediction mode for the current block according to the fourth syntax element;
determining that the prediction mode for the current block is an IntraTMP multi-candidate prediction mode based on a single matching block, and determining whether to filter the selected matching block according to the fourth syntax element.

60. The method of claim 58, further comprising:

determining that the prediction mode for the current block is the IntraTMP fusion prediction mode, and encoding the fourth syntax element, wherein the fourth syntax element is used to indicate the fusion mode of the IntraTMP fusion prediction mode for a current block;
or,
determining that the prediction mode for the current block is an IntraTMP multi-candidate prediction mode based on a single matching block, and encoding the fourth syntax element.

61. The method of any one of claims 58-60, wherein when the fusion mode comprises a first fusion mode and a second fusion mode, the method further comprises:

when the fourth syntax element is used to indicate that the fusion mode of the IntraTMP fusion prediction mode for the current block is the first fusion mode, determining the second syntax element according to the index value of the first candidate matching block subgroup;
when the fourth syntax element is used to indicate that the fusion mode of the IntraTMP fusion prediction mode for the current block is the second fusion mode, determining the second syntax element according to the index value of the first candidate matching block subgroup and an index offset value.

62. The method of any one of claims 47-60, wherein an index range of an index value of the first candidate matching block subgroup is less than or equal to an index range corresponding to the at least two candidate matching block subgroups.

63. The method of any one of claims 47-60, further comprising:
encoding a sixth syntax element, wherein the sixth syntax element is used to indicate whether to encode some or all of the related syntax element of the current block.

64. The method of claim 63, wherein the sixth syntax element comprises at least one of a sequence-level syntax element, a picture-level syntax element, a slice-level syntax element, a stripe-level syntax element, or a block-level syntax element.

65. The method of claim 46, wherein grouping the first list of candidate matching blocks comprises:
grouping the first list of candidate matching blocks according to at least one grouping rule.

66. The method of claim 65, wherein the at least one grouping rule comprises a first grouping rule,
the first grouping rule comprises: starting from a first matching block in the first list of candidate matching blocks, setting every first preset number of matching blocks as one candidate matching block subgroup, wherein the first preset number is an integer greater than 0.

67. The method of claim 66, wherein the at least one grouping rule comprises a second grouping rule,
the second grouping rule comprises: starting from a first matching block in the first list of candidate matching blocks, setting every second preset number of matching blocks as one candidate matching block subgroup, wherein the second preset number is an integer greater than 0, and the first preset number is different from the second preset number.

68. The method of claim 67, wherein the first grouping rule further comprises: if a number of matching blocks in a last candidate matching block subgroup is less than the first preset number, obtaining preset matching blocks from the first list of candidate matching blocks and adding them to the last candidate matching block subgroup, so that the number of matching blocks in the last candidate matching block subgroup is equal to the first preset number;
the second grouping rule further comprises: if a number of matching blocks in a last candidate matching block subgroup is less than the second preset number, obtaining preset matching blocks from the first list of candidate matching blocks and adding the preset matching blocks to the last candidate matching block subgroup, so that the number of matching blocks in the last candidate matching block subgroup is equal to the second preset number.

69. The method of any one of claims 65-68, wherein the at least one grouping rule comprises a third grouping rule,
the third grouping rule comprises: grouping a first M1 matching blocks in the first list of candidate matching blocks and every M2 matching blocks starting from a (M1+1)-th matching block into a candidate matching block subgroup.

70. The method of claim 69, wherein the third grouping rule further comprises that values of M2 in different matching block subgroups are equal, or the third grouping rule further comprises that not all of the values of M2 in different matching block subgroups are equal.

71. The method of any one of claims 65-70, wherein the at least one grouping rule comprises a fourth grouping rule,
the fourth grouping rule comprises: grouping a first i matching blocks in the first list of candidate matching blocks into an i-th candidate matching block subgroup, wherein i is an integer greater than 0.

72. The method of any one of claims 65-71, wherein the grouping rule further comprises that a distance between any two matching blocks within a candidate matching block subgroup is greater than a first distance threshold,
or, the grouping rule further comprises that a distance between any two matching blocks in the candidate matching block subgroup is less than a second distance threshold.

73. The method of claim 65, wherein each grouping rule further comprises a corresponding number of subgroups.

74. The method of any one of claims 65-73, wherein the grouping the first list of candidate matching blocks comprises:

grouping the first list of candidate matching blocks according to at least one grouping rule to obtain at least one candidate matching block subgroup; and
setting at least one respective fusion mode of an intra template matching prediction (IntraTMP) fusion prediction mode for each candidate matching block subgroup, to obtain at least two candidate matching block subgroups.

75. The method of claim 74, wherein the fusion mode comprises a fusion mode of intra template matching based on template derivation and a fusion mode of intra template matching based on a template error value.

76. The method of any one of claims 65-75, further comprising:
encoding a syntax element used to indicate the at least one grouping rule.

77. The method of claim 46, wherein determining an index value of each candidate matching block subgroup comprises:

determining a first index value of each candidate matching block subgroup according to a subgroup position of the candidate matching block subgroup; and

taking the first index value of each candidate matching block subgroup as the index value of the candidate matching block subgroup.

78. The method of claim 46, wherein determining an index value of each candidate matching block subgroup comprises:

reordering the at least two candidate matching block subgroups;

determining a second index value of each candidate matching block subgroup according to the reordering position of the candidate matching block subgroup; and

taking the second index value of each candidate matching block subgroup as the index value of the candidate matching block subgroup.

79. The method of claim 78, wherein reordering the at least two candidate matching block subgroups comprises:

determining, from each candidate matching block subgroup, N fusion matching blocks to be fused, where N is an integer greater than 0;

determining fusion weight values for the N fusion matching blocks;

fusing templates of the N fusion matching blocks according to the fusion weight values for the N fusion matching blocks, to determine a prediction template corresponding to each candidate matching block subgroup;

determining a template error value corresponding to each candidate matching block subgroup according to the prediction template corresponding to the candidate matching block subgroup and a template of a current block; and

performing reordering according to the template error value corresponding to each candidate matching block subgroup.

80. The method of claim 77 or 78, further comprising: when each candidate matching block subgroup is set with a respective fusion mode of an intra template matching prediction (IntraTMP) fusion prediction mode,

determining a fusion mode of the IntraTMP fusion prediction mode for the current block according to the fusion mode of the IntraTMP fusion prediction mode corresponding to the first candidate matching block subgroup.

81. The method of claim 46, wherein fusing the at least one matching block in the first candidate matching block subgroup to determine the prediction block for the current block comprises:

determining N fusion matching blocks to be fused from the first candidate matching block subgroup, where N is an integer greater than 0;

determining fusion weight values for the N fusion matching blocks; and

fusing the N fusion matching blocks according to the fusion weight values for the N fusion matching blocks, to determine the prediction block for the current block.

82. The method of claim 79 or 81, wherein the determining the N fusion matching blocks to be fused comprises:

determining a template error value for each matching block in a current candidate matching block subgroup;

determining a template error threshold according to a threshold coefficient and a template error value of an i-th matching block in the current candidate matching block subgroup, wherein the i-th matching block is a matching block having a smallest template error value in the current candidate matching block subgroup; and

determining a matching block of which a template error value is less than or equal to the template error threshold as the fusion matching block.

83. The method of claim 82, further comprising:

determining the threshold coefficient corresponding to the current candidate matching block subgroup, wherein not all of threshold coefficients corresponding to different candidate matching block subgroups are same.

84. The method of claim 82, wherein determining the matching block of which the template error value is less than or equal to the template error threshold as the fusion matching block comprises:

when a template error value of a (i+j)-th matching block is larger than a number of matching blocks for the template error threshold, taking the i-th matching block in the current candidate matching block subgroup as the (i+j)-th fusion matching block.

85. The method of claim 79 or 81, wherein determining the N fusion matching blocks to be fused comprises:

dividing matching blocks in a current candidate matching block subgroup into at least two candidate matching block sets, wherein each candidate matching block set comprises N fusion matching blocks to be fused, and not all of a number of fusion matching blocks in different candidate matching block sets are same and not all of the fusion matching blocks in different candidate matching block sets are same;
determining fusion weight values for N fusion matching blocks in each candidate matching block set;
fusing templates of the N fusion matching blocks according to the fusion weight values for the N fusion matching blocks in each candidate matching block set, to determine a prediction template corresponding to the candidate matching block set;
determining a template error value corresponding to each candidate matching block set according to a prediction template corresponding to the candidate matching block set and a template of a current block;
determining an optimal candidate matching block set with a smallest template error value according to the template error value corresponding to each candidate matching block set; and
taking matching blocks in the optimal candidate matching block set as the N fusion matching blocks.

86. The method of claim 79 or 81, wherein determining the N fusion matching blocks to be fused comprises:
taking first N matching blocks in a current candidate matching block subgroup as the N fusion matching blocks, where N is less than or equal to a number of matching blocks in the current candidate matching block subgroup.

87. The method of claim 86, further comprising:
encoding a value N of a number of fusion matching blocks.

88. The method of any one of claims 79, 81 or 85, wherein determining the fusion weight values for the N fusion matching blocks comprises:

determining the fusion weight values for the N fusion matching blocks according to a fusion mode of an IntraTMP fusion prediction mode corresponding to a current candidate matching block subgroup,
wherein the fusion mode is a fusion mode of intra template matching based on template derivation or a fusion mode of intra template matching based on a template error value.

89. The method of claim 88, wherein the fusion mode is the fusion mode of intra template matching based on template derivation, and determining the fusion weight values for the N fusion matching blocks comprises:

determining the fusion weight values for the N fusion matching blocks and the fusion weight values for bias parameters according to templates of the N fusion matching blocks, templates of the current blocks, and the bias parameters;
fusing the N fusion matching blocks according to the fusion weight values for the N fusion matching blocks to determine the prediction block for the current block comprises:
fusing the N fusion matching blocks and the bias parameters according to the fusion weight values for the N fusion matching blocks and the fusion weight values for the bias parameters, to determine the prediction block for the current block.

90. The method of claim 88, wherein the fusion mode is the fusion mode of intra template matching based on a template error value, and determining the fusion weight values for the N fusion matching blocks comprises:

determining template error values of the N fusion matching blocks according to templates of the N fusion matching blocks and template of the current block;
determining an accumulated sum of the template error values of the N fusion matching blocks according to the template error values of the N fusion matching blocks; and
determining the fusion weight values for the N fusion matching blocks according to the template error values of the N fusion matching blocks and the accumulated sum of the template error values.

91. The method of claim 46, further comprising:
storing the index value of the first candidate matching block subgroup corresponding to the current block; or, storing preset matching blocks in the first candidate matching block subgroup corresponding to the current block.

92. A bitstream, wherein the bitstream is generated by bit encoding based on information to be encoded, wherein the information to be encoded includes at least one of: a syntax element for indicating a prediction mode for a current block, a syntax element for indicating an index value of an optimal matching block corresponding to a current block, a syntax element for indicating an index value of an optimal matching block corresponding to a current block, a syntax element for indicating a fusion mode for the current block, a syntax element for indicating whether to determine an index value of a first candidate matching block subgroup of a current block, a syntax element for indicating at least one grouping rule, a value N of a number of fusion matching blocks, a length of a first list of candidate matching blocks, and a length of a second list of candidate matching blocks.

93. An encoder, comprising a first determination unit, a first grouping unit and a first prediction unit, wherein

the first determination unit is configured to construct a first list of candidate matching blocks for a current block based on template matching;
the first grouping unit is configured to group the first list of candidate matching blocks, to determine at least two candidate matching block subgroups, and determine an index value of each candidate matching block subgroup;
the first determination unit is further configured to determine an index value of a first candidate matching block subgroup corresponding to the current block;
the first determination unit is further configured to determine the first candidate matching block subgroup from the at least two candidate matching block subgroups according to the index value of the first candidate matching block subgroup; and
the first prediction unit is configured to fuse at least one matching block in the first candidate matching block subgroup to determine a prediction block for the current block.

94. An encoder, comprising:

a first memory; and
a first processor,
the first memory is used for storing a computer program executable on the first processor, wherein
the first processor is configured to, when executing the computer program, perform the method of any one of claims 46 to 91.

95. A decoder comprising a second determination unit, a second grouping unit, and a second prediction unit, wherein

the second determination unit is configured to construct a first list of candidate matching blocks for a current block based on template matching;
the second grouping unit is configured to group the first list of candidate matching blocks, to determine at least two candidate matching block subgroups, and determine an index value of each candidate matching block subgroup;
the second determination unit is further configured to determine an index value of a first candidate matching block subgroup corresponding to the current block;
the second determination unit is further configured to determine the first candidate matching block subgroup from the at least two candidate matching block subgroups according to the index value of the first candidate matching block subgroup; and
the second prediction unit is configured to fuse at least one matching block in the first candidate matching block subgroup to determine a prediction block for the current block.

96. A decoder, comprising:

a second memory; and
a second processor, wherein
the second memory is used for storing a computer program executable on the second processor;
the second processor is configured to execute the computer program to perform the method of any one of claims 1 to 45.

97. A computer-readable storage medium storing thereon a computer program that, when executed, implements the method of any one of claims 1 to 45 or implements the method of any one of claims 46 to 91.

**FIG. 1**

**FIG. 2**

(a)
refTemplateType=1

(b)
refTemplateType=2

(c)
refTemplateType=3

(d)
refTemplateType=4

(e)
refTemplateType=5

(f)
refTemplateType=6

**FIG. 3**

template matching with step size S (S＞1)

**FIG. 4A**

template matching with step size S' (1≤S'<1)

**FIG. 4B**

$W1*$ Matching Block 1 $+ W2*$ Matching Block 2 $+ W3*$ Matching Block 3

Prediction Block

| Template Region | Reconstructed Region | Searching Region | Block Vector |

**FIG. 5**

**FIG. 6A**

**FIG. 6B**

**FIG. 7**

**FIG. 8A**

FIG. 8B

1N

15

Interaction    01

Interaction

Network

Interaction

Interaction

14

Interaction

Interaction

16

13

**FIG. 9**

Constructing a first list of candidate matching blocks for a current block based on template matching — 1001

Grouping the first list of candidate matching blocks, to determine at least two candidate matching block subgroups, and determining an index value for each candidate matching block subgroup — 1002

Determining an index value of a first candidate matching block subgroup corresponding to the current block — 1003

Determining the first candidate matching block subgroup from the at least two candidate matching block subgroups according to the index value of the first candidate matching block subgroup — 1004

Fusing at least one matching block in the first candidate matching block subgroup to determine a prediction block for the current block — 1005

**FIG. 10**

Determining N fusion matching blocks to be fused from each candidate matching block subgroup, where N is an integer greater than 0 — 1101

Determining fusion weight values for the N fusion matching blocks — 1102

Fusing templates of the N fusion matching blocks according to the fusion weight values for the N fusion matching blocks, to determine a prediction template corresponding to each candidate matching block subgroup — 1103

Determining a template error value corresponding to each candidate matching block subgroup according to the prediction template corresponding to the candidate matching block subgroup and a template of the current block — 1104

Performing reordering according to the template error value corresponding to each candidate matching block subgroup — 1105

## FIG. 11

Matching block

| | Template of Matching block | | Prediction Template | ← | Block Vector |

**FIG. 12**

Template 1    Template 2    Template 3

W0* + W1* + W2* + W3*Bias

| | Template of Matching block | | Prediction Template | | Reconstructed Region | | Searching Region | ← | Block Vector |

**FIG. 13**

Determining N fusion matching blocks to be fused from the first candidate matching block subgroup, where N is an integer greater than 0 — 1401

Determining fusion weight values for the N fusion matching blocks — 1402

Fusing the N fusion matching blocks according to the fusion weight values for the N fusion matching blocks, to determine the prediction block for the current block — 1403

**FIG. 14**

Dividing at least two matching blocks in the current candidate matching block subgroup into at least two candidate matching block sets — 1501

Determining fusion weight values for the N fusion matching blocks in each candidate matching block set — 1502

Fusing templates of the N fusion matching blocks according to the fusion weight values for N fusion matching blocks in each candidate matching block set, to determine a prediction template corresponding to each candidate matching block set — 1503

Determining a template error value corresponding to each candidate matching block set according to a prediction template corresponding to the candidate matching block set and a template of the current block — 1504

Determining an optimal candidate matching block set having the smallest template error value according to the template error value corresponding to each candidate matching block set as the N fusion matching blocks — 1505

**FIG. 15**

```
┌─────────────────────────────────────────────────────────┐
│  Constructing a first list of candidate matching blocks  │─── 1601
│  for a current block based on template matching          │
└─────────────────────────────────────────────────────────┘
                          │
                          ▼
┌─────────────────────────────────────────────────────────┐
│  Grouping the first list of candidate matching blocks,   │─── 1602
│  to determine at least two candidate matching block      │
│  subgroups, and determining an index value for each      │
│  candidate matching block subgroup                       │
└─────────────────────────────────────────────────────────┘
                          │
                          ▼
┌─────────────────────────────────────────────────────────┐
│  Determining an index value of a first candidate         │─── 1603
│  matching block subgroup corresponding to the current    │
│  block                                                   │
└─────────────────────────────────────────────────────────┘
                          │
                          ▼
┌─────────────────────────────────────────────────────────┐
│  Determining the first candidate matching block subgroup │─── 1604
│  from the at least two candidate matching block          │
│  subgroups according to the index value of the first     │
│  candidate matching block subgroup                       │
└─────────────────────────────────────────────────────────┘
                          │
                          ▼
┌─────────────────────────────────────────────────────────┐
│  Fusing at least one matching block in the first         │─── 1605
│  candidate matching block subgroup to determine a        │
│  prediction block for the current block                  │
└─────────────────────────────────────────────────────────┘
```

**FIG. 16**

170

```
┌────────────────────────────────────────────────────────┐
│                       Encoder                          │
│                                                        │
│  ┌─────────────────────┐    ┌─────────────────────┐    │
│  │First Determination  │    │ First Grouping Unit │    │
│  │       Unit          │    │                     │    │
│  │        1701         │    │        1702         │    │
│  └─────────────────────┘    └─────────────────────┘    │
│            │                          │                │
│  ──────────┴──────────────────────────┴────────────    │
│                        │                               │
│                   ┌─────────────────────┐              │
│                   │First Prediction Unit│              │
│                   │        1703         │              │
│                   └─────────────────────┘              │
└────────────────────────────────────────────────────────┘
```

**FIG. 17**

170

Encoder

1801

First Communication Interface

1804

1803

First Processor

1802

First Memory

**FIG. 18**

190

Decoder

1901

Second Determination Unit

1902

Second Grouping Unit

1903

Second Prediction Unit

**FIG. 19**

190

Decoder

2001

First Communication Interface

2004

2003

First Processor

2002

First Memory

**FIG. 20**

210

2101

2102

Encoder

Decoder

**FIG. 21**

## INTERNATIONAL SEARCH REPORT

| International application No. |
| --- |
| **PCT/CN2023/085253** |

| A. | CLASSIFICATION OF SUBJECT MATTER |
| --- | --- |

H04N 19/593(2014.01)i

According to International Patent Classification (IPC) or to both national classification and IPC

| B. | FIELDS SEARCHED |
| --- | --- |

Minimum documentation searched (classification system followed by classification symbols)

IPC：H04N

Documentation searched other than minimum documentation to the extent that such documents are included in the fields searched

Electronic data base consulted during the international search (name of data base and, where practicable, search terms used)

CNABS, CNTXT, CNKI, VEN, EPTXT, USTXT, WOTXT, IEEE: 模板, 匹配, 候选, 分组, 索引, 融合, 预测, 最优, 模式, 滤波, 数量, 阈值, 距离, 排序, 权重, 误差, 偏置, template, match, candidate, group, index, fusion, predict, optimal, mode, filter, TMP, quantity, threshold, distance, order, weighted, error, offset

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | CN 112866720 A (HUAWEI TECHNOLOGIES CO., LTD.) 28 May 2021 (2021-05-28) entire document | 1-97 |
| A | CN 113261285 A (GUANGDONG OPPO MOBILE COMMUNICATIONS CO., LTD.) 13 August 2021 (2021-08-13) entire document | 1-97 |
| A | CN 113596475 A (ZHEJIANG DAHUA TECHNOLOGY CO., LTD.) 02 November 2021 (2021-11-02) entire document | 1-97 |
| A | CN 114830651 A (GUANGDONG OPPO MOBILE COMMUNICATIONS CO., LTD.) 29 July 2022 (2022-07-29) entire document | 1-97 |
| A | WO 2021056214 A1 (GUANGDONG OPPO MOBILE TELECOMMUNICATIONS CORP., LTD.) 01 April 2021 (2021-04-01) entire document | 1-97 |

| ☑ Further documents are listed in the continuation of Box C. | ☑ See patent family annex. |
| --- | --- |

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **15 December 2023** | **26 December 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2023/085253**

**C.     DOCUMENTS CONSIDERED TO BE RELEVANT**

| Category* | Citation of document, with indication, where appropriate, of the relevant passages | Relevant to claim No. |
|---|---|---|
| A | WO 2022104498 A1 (GUANGDONG OPPO MOBILE TELECOMMUNICATIONS CORP., LTD.) 27 May 2022 (2022-05-27) entire document | 1-97 |

Form PCT/ISA/210 (second sheet) (July 2022)

## INTERNATIONAL SEARCH REPORT
### Information on patent family members

International application No.

**PCT/CN2023/085253**

| Patent document cited in search report | | | Publication date (day/month/year) | Patent family member(s) | | | Publication date (day/month/year) |
|---|---|---|---|---|---|---|---|
| CN | 112866720 | A | 28 May 2021 | SG | 11202012701 | XA | 28 January 2021 |
| | | | | EP | 3809705 | A4 | 21 April 2021 |
| | | | | JP | 2023065393 | A | 12 May 2023 |
| | | | | US | 2021168355 | A1 | 03 June 2021 |
| | | | | WO | 2020007304 | A1 | 09 January 2020 |
| | | | | BR | 112020026941 | A2 | 30 March 2021 |
| | | | | JP | 2021530165 | A | 04 November 2021 |
| | | | | JP | 7223111 | B2 | 15 February 2023 |
| | | | | MX | 2020013878 | A | 12 April 2021 |
| | | | | KR | 20230155621 | A | 10 November 2023 |
| | | | | KR | 20210019556 | A | 22 February 2021 |
| | | | | KR | 102600670 | B1 | 08 November 2023 |
| CN | 113261285 | A | 13 August 2021 | None | | | |
| CN | 113596475 | A | 02 November 2021 | None | | | |
| CN | 114830651 | A | 29 July 2022 | None | | | |
| WO | 2021056214 | A1 | 01 April 2021 | None | | | |
| WO | 2022104498 | A1 | 27 May 2022 | None | | | |

Form PCT/ISA/210 (patent family annex) (July 2022)